# EUROPÄISCHE PATENTSCHRIFT

(11) **EP 1 519 868 B1**
(45) Veröffentlichungstag und Bekanntmachung des Hinweises auf die Patenterteilung: **19.12.2007**
(21) Anmeldenummer: 03762630.6
(22) Anmeldetag: 04.07.2003
(51) Int. Cl.: B61D 47/00, B61D 3/04, B65G 63/02, B65G 63/06

(54) **VERFAHREN ZUM BE- UND ENTLADEN VON SCHIENENWAGGONS SOWIE VORRICHTUNG, WAGGONGESTELL UND WAGGONAUFSATZ ZUM DURCHFÜHREN DES VERFAHRENS**
METHOD FOR THE LOADING AND UNLOADING OF RAILWAY WAGONS AND DEVICE, WAGON CHASSIS AND WAGON ATTACHMENT FOR CARRYING OUT SAID METHOD
PROCEDE DE CHARGEMENT ET DE DECHARGEMENT DE WAGONS DE CHEMIN DE FER ET DISPOSITIF, CHASSIS DE WAGON ET SUPERSTRUCTURE DE WAGON POUR METTRE LEDIT PROCEDE EN OEUVRE

(30) Priorität: 04.07.2002 DE 10230110
(43) Veröffentlichungstag der Anmeldung: 06.04.2005
(73) Patentinhaber: Weidemann, Hans-Jürgen, 67346 Speyer (DE); Baier, Michael, 68309 Mannheim (DE); Faller, Alexander, 84061 Ergoldsbach (DE); Merk, Fritz, 84061 Ergoldsbach (DE)
(72) Erfinder: Weidemann, Hans-Jürgen, 67346 Speyer (DE); Baier, Michael, 68309 Mannheim (DE); Faller, Alexander, 84061 Ergoldsbach (DE); Merk, Fritz, 84061 Ergoldsbach (DE)
(74) Vertreter: Patentanwälte Dr. Solf & Zapf
(86) Internationale Anmeldenummer: PCT/EP2003/007196
(87) Internationale Veröffentlichungsnummer: WO 2004/005103

(56) Entgegenhaltungen:
- EP-A- 0 795 452
- EP-A- 1 103 442
- DE-A- 3 313 211
- DE-A- 4 301 019
- DE-A- 4 429 710
- FR-A- 2 810 611

## Beschreibung

Die Erfindung betrifft ein Verfahren zum Be- und Entladen von Schienenwaggons nach dem Oberbegriff des Anspruchs 1, ein Verfahren zum Umladen von Ladung von einem ersten Zug auf einen zweiten Zug und eine zum Durchführen der Verfahren geeignete Be- und/oder Entladevorrichtung..

Derartige Verfahren sowie solche Be- und/oder Entladevorrichtungen und Waggongestelle und Waggonaufsätze für derartige Verfahren bzw. Vorrichtungen sind aus der DE 100 03 315 A1 bekannt.

Bei einem Verfahren zum Be- und Entladen von Schienenwaggons gemäß der DE 100 03 315 A1 wird vorgeschlagen, die Verladung und Arretierung der Güter auf Schlitten unabhängig von der Anwesenheit eines Zuges am Verladegleis oder an beliebigen anderen Orten vorzunehmen, wobei die Schlitten in Verladeposition am Bahnsteig gebracht werden. Weiterhin wird dann die Be- und Entladung der Schlitten gleichzeitig oder nacheinander oder zykliert für alle Schienenwaggons eines Bahnsteigs vorgenommen und die Schlitten auf den Schienenwaggons durch Absenken selbstzentrierend positioniert und arretiert. Beim Entladen erfolgt dieser Vorgang umgekehrt, wobei das Anheben bzw. Absenken der Schlitten durch waggonfeste Hubeinheiten geschieht. Das Verfahren erfordert eine relativ hohe Anzahl von Hubeinheiten, welche am Waggon angeordnet sind. Das Leergewicht eines derartigen Waggons ist somit hoch, was die zulässige maximale Zuladung verringert. Außerdem muss der Waggon zusätzlich zu pneumatischen Bremseinrichtungen aktive Hydraulik- oder Pneumatiksysteme aufweisen, damit die Hubeinheiten betätigbar sind.

DE 100 03 315 A1 offenbart ein Waggongestell, welches Waggonrahmen nach Bauart eines Leiterrahmens mit zwei parallel verlaufenden Längsträgern und Querträgern aufweist, welche zwei passive Drehgestelle für die Befestigung der Hubeinheiten an dem Waggongestell miteinander verbinden. Diese Rahmenbauweise ist aufwändig.

Weiterhin ist aus der DE 100 03 315 A1 ein Waggonaufsatz bekannt, welcher im Querschnitt eine wannenförmige Raumform mit einem durchgehenden Wannenboden und wangenartig nach oben abstehenden Wannenseitenwänden aufweist. Die zum Wanneninneren weisende Flachseite des Wannenbodens dient als Rollbahn für zu verladende Sattelschlepperauflieger. Die nach außen weisende Flachseite des Wannenbodens trägt in deren Längsrandbereich Tragrollen, mit denen der Schlitten in einer Richtung quer zur Längsachse rollbar verschiebbar ist.

Aufgabe der Erfindung ist es, ein gattungsgemäßes Verfahren derart weiterzubilden, dass der erforderliche apparative Aufwand minimiert ist und somit Erstellungs-, Betriebs- und Wartungskosten verringert werden. Weiterhin soll ein erfindungsgemäßes Verfahren ermöglichen, unterschiedlichste Arten von Ladungen be- und entladen zu können.

Aufgabe der Erfindung ist ferner, ein Verfahren zum Umladen von Ladung von einem ersten Zugabschnitt auf einen zweiten Zugabschnitt, insbesondere verschiedener Züge, anzugeben.

Weiterhin ist es Aufgabe der Erfindung, eine Be- und/oder Entladevorrichtung anzugeben, welche für das erfindungsgemäße Verfahren geeignet ist und ein erhöhtes Maß an Flexibilität betreffend die zu verladenden Ladungsbehälter bzw. Ladungsgüter ermöglicht.

Diese Aufgabe wird mit einem Verfahren mit den Merkmalen des Anspruchs 1, einem Verfahren mit den Merkmalen des Anspruchs 13 und einer Be- und/oder Entladevorrichtung mit den Merkmalen des Anspruchs 70 gelöst. Vorteilhafte Ausführungsformen sind in den von den unabhängigen Ansprüchen abhängigen Ansprüchen angegeben.

Im Folgenden wird die Erfindung anhand der Zeichnungen beispielhaft näher erläutert. Es zeigen:
- Fig. 1: eine perspektivische Ansicht auf ein Ausführungsbeispiel eines erfindungsgemäß verwendeten Waggonaufsatzes in entladenem Zustand;
- Fig. 2: den Waggonaufsatz gemäß Fig. 1 beladen mit einem LKW-Sattelauflieger;
- Fig. 3: den Waggonaufsatz gemäß Fig. 2 vorbereitet für die Verladung auf ein erfindungsgemäß verwendetes Waggongestell;
- Fig. 4: eine perspektivische Ansicht auf ein Ausführungsbeispiel eines erfindungsgemäß verwendeten Waggongestells;
- Fig. 5: eine perspektivische Ansicht eines Ausführungsbeispiels des erfindungsgemäß verwendeten Waggongestells versehen mit einem weiteren Ausführungsbeispiel des erfindungsgemäß verwendeten Waggonaufsatzes;
- Fig. 6: den Waggon gemäß Fig. 5 beladen mit einem 40 Fuß-Container;
- Fig. 7: den Waggon gemäß Fig. 5 beladen mit zwei 20 Fuß-Containern;
- Fig. 8: den Waggon gemäß Fig. 5 beladen mit einem LKW-Sattelauflieger;
- Fig. 9: den Waggon gemäß Fig. 5 versehen mit Dielenbodenelementen, so dass ein zum üblichen Flachwagen kompatibler Flachwaggon gebildet ist;
- Fig. 10: den Waggon gemäß Fig. 9 mit randlich angeordneten Rungen;
- Fig. 11: den Waggon gemäß Fig. 10 mit einem abgesenkten Dielenboden;
- Fig. 12: den Waggon gemäß Fig. 11 in einem Beladezustand mit länglichen Rundelementen, z. B. Baumstämmen oder Rohren;
- Fig. 13: den Waggon gemäß Fig. 12 als Kraftfahrzeugtransportwaggon;
- Fig. 14: den Waggon gemäß Fig. 5 im Bereich einer ersten Ausführungsform einer erfindungsgemäßen Be- und/oder Entladevorrichtung mit teilweise angehobenem Waggonaufsatz;
- Fig. 15: den Waggon gemäß Fig. 14 mit angehobenem Waggonaufsatz und teilweise seitlich versetztem Waggonaufsatz;
- Fig. 16: den Waggon gemäß Fig. 15 mit weiter seitlich versetztem Waggonaufsatz;
- Fig. 17: schematisch eine teilgeschnittene seitliche Gesamtansicht auf eine weitere Ausführungsform der erfindungsgemäßen Be- und/oder Entladevorrichtung;
- Fig. 18: einen Längsschnitt durch einen Teilbereich der erfindungsgemäßen Be- und/oder Entladevorrichtung gemäß Fig. 17;
- Fig. 19: einen Querschnitt durch eine erfindungsgemäße Be- und/oder Entladevorrichtung gemäß Fig. 18 in einem Bereich zwischen den Drehgestellen;
- Fig. 20 bis 25: schematisch den zeitlichen Ablauf eines Entladevorgangs gemäß dem erfindungsgemäßen Verfahren mit einer erfindungsgemäßen Be- und/oder Entladevorrichtung sowie einem erfindungsgemäß verwendeten Waggongestell und einem erfindungsgemäß verwendeten Waggonaufsatz;
- Fig. 26: eine perspektivische Ansicht auf ein weiteres Ausführungsbeispiel eines erfindungsgemäß verwendeten waggongestells mit einem erfindungsgemäß verwendeten Waggonaufsatz, der nach Art einer Explosionsansicht frei oberhalb des Waggongestells schwebend dargestellt ist;
- Fig. 27: einen Verladebahnhof mit einer erfindungsgemäßen Be- und/oder Entladevorrichtung zum Durchführen eines erfindungsgemässen Umladeverfahrens unter Verwendung von Waggongestellen und Waggonaufsätzen gemäß Fig. 26;
- Fig. 28 bis 30: schematisch den zeitlichen Ablauf des Ent- und Beladevorgangs gemäß dem erfindungsgemäßen Verfahren mit der erfindungsgemäßen Be- und/oder Entladevorrichtung gemäß Fig. 27 sowie dem erfindungsgemäß verwendeten Waggongestell und dem erfindungsgemäß verwendeten Waggonaufsatz gemäß Fig. 26.

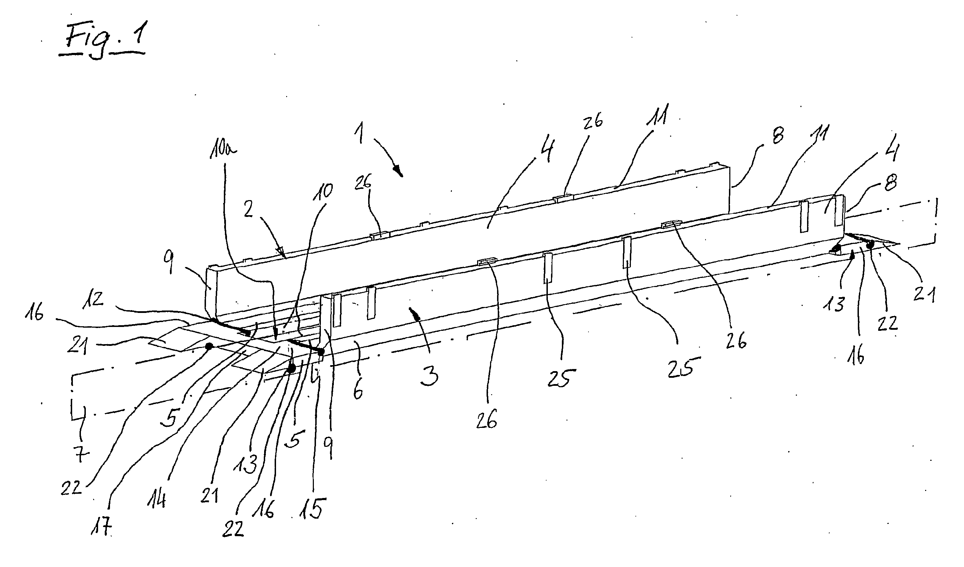

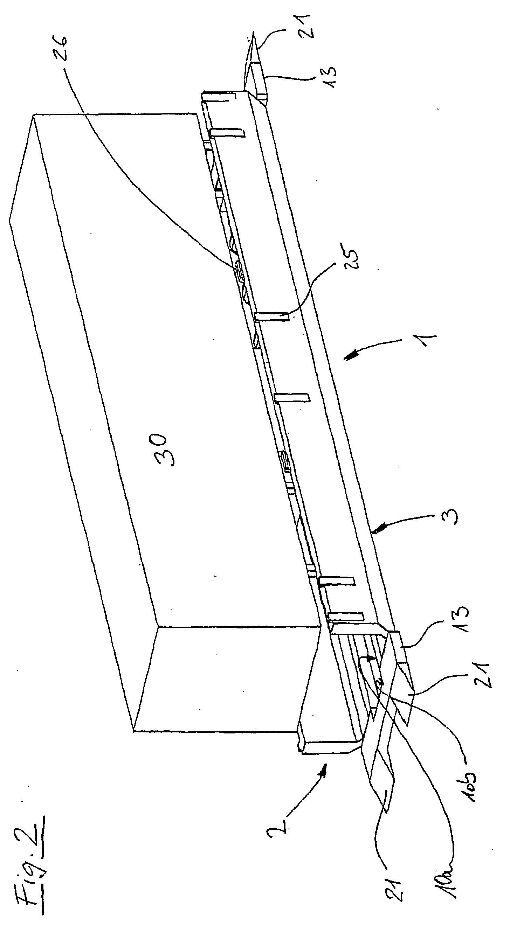

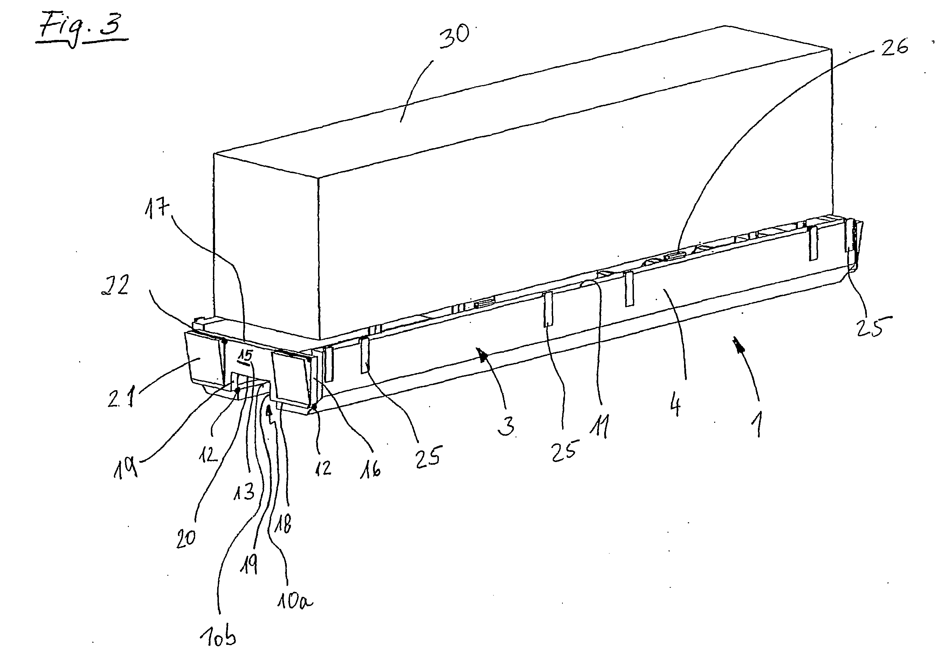

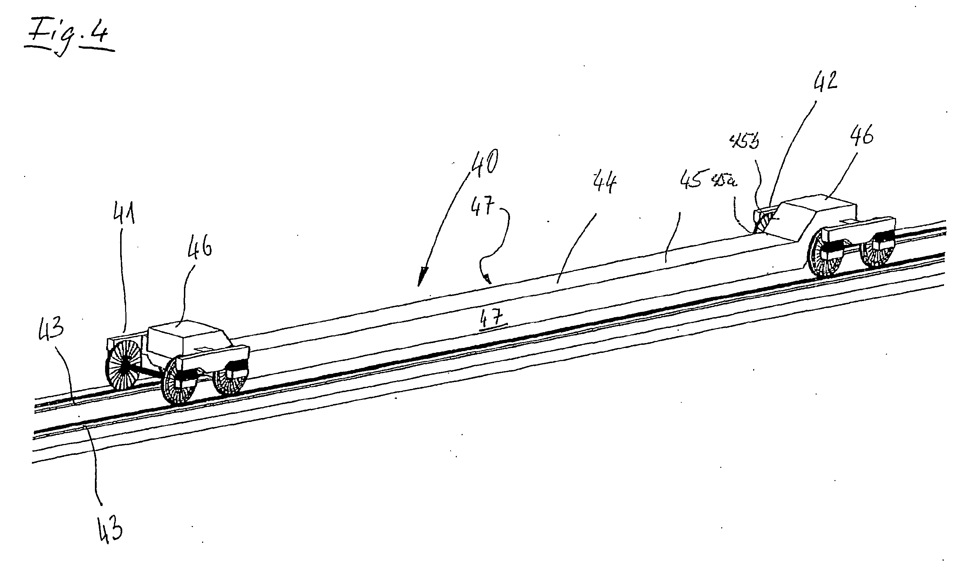

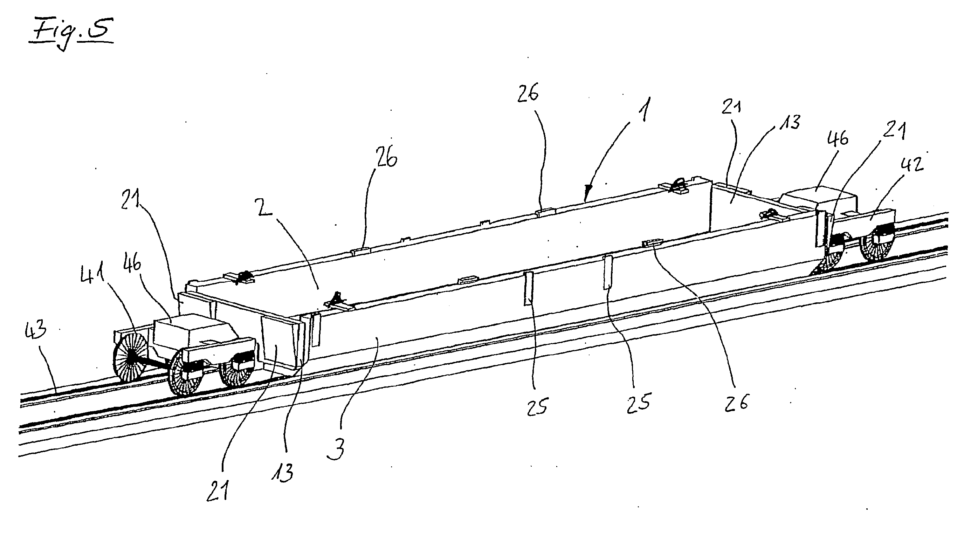

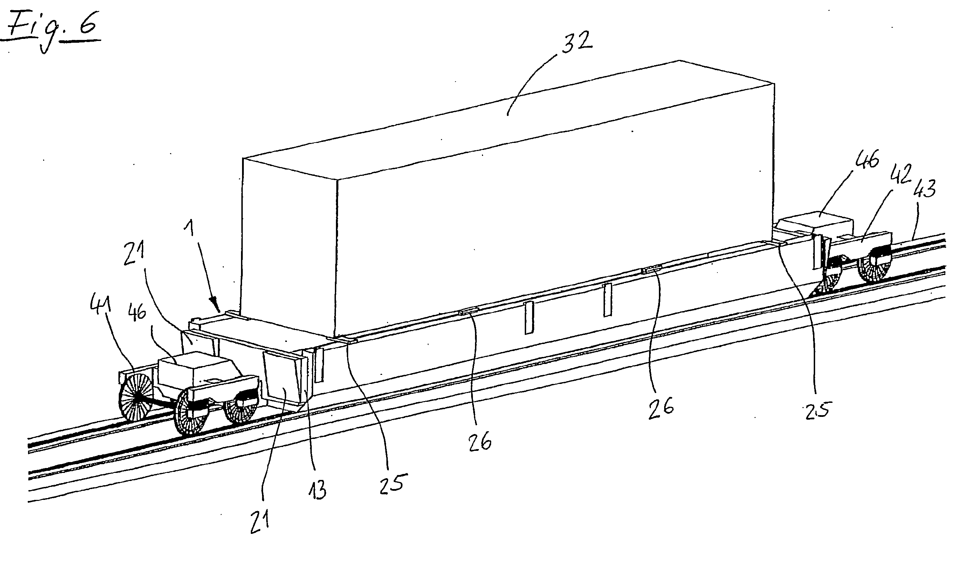

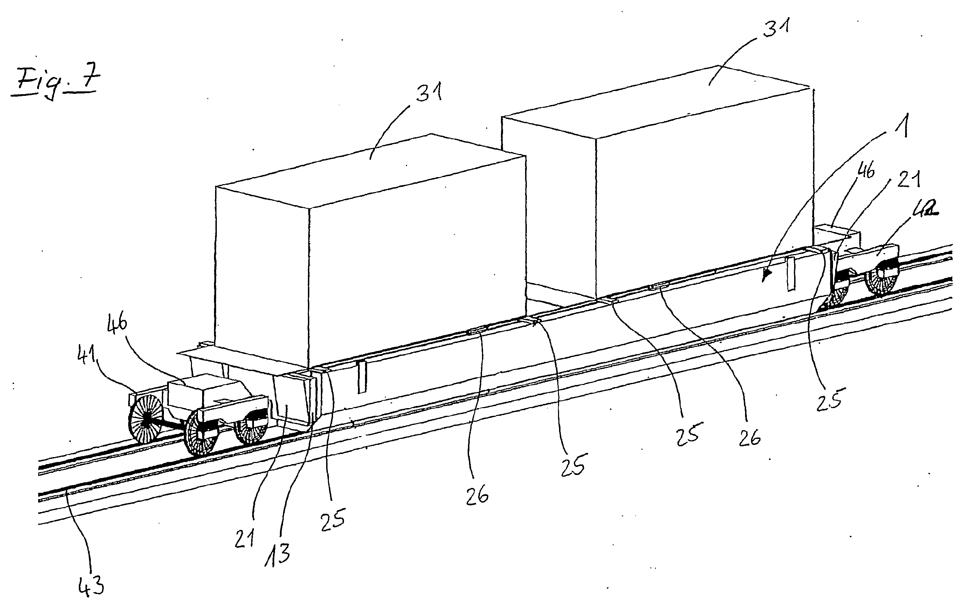

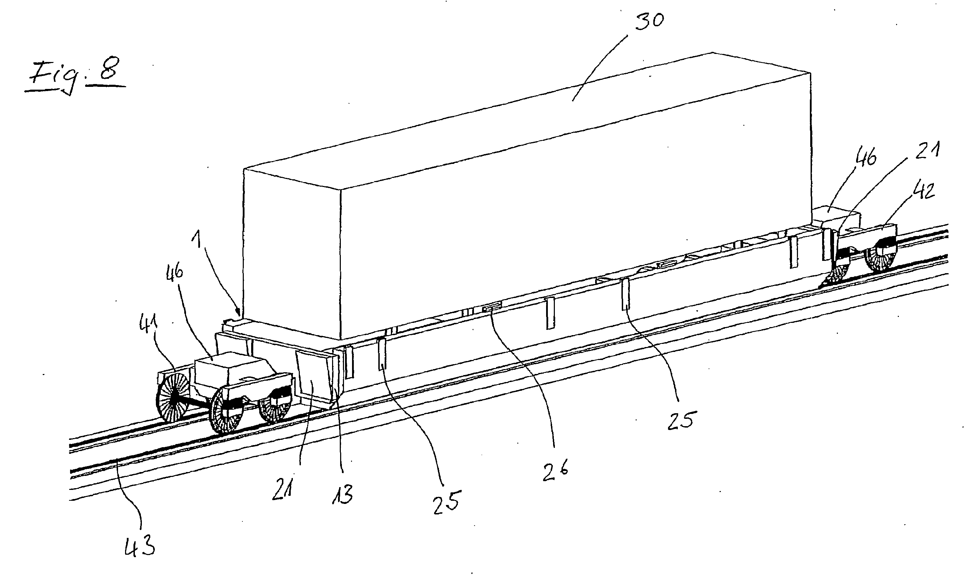

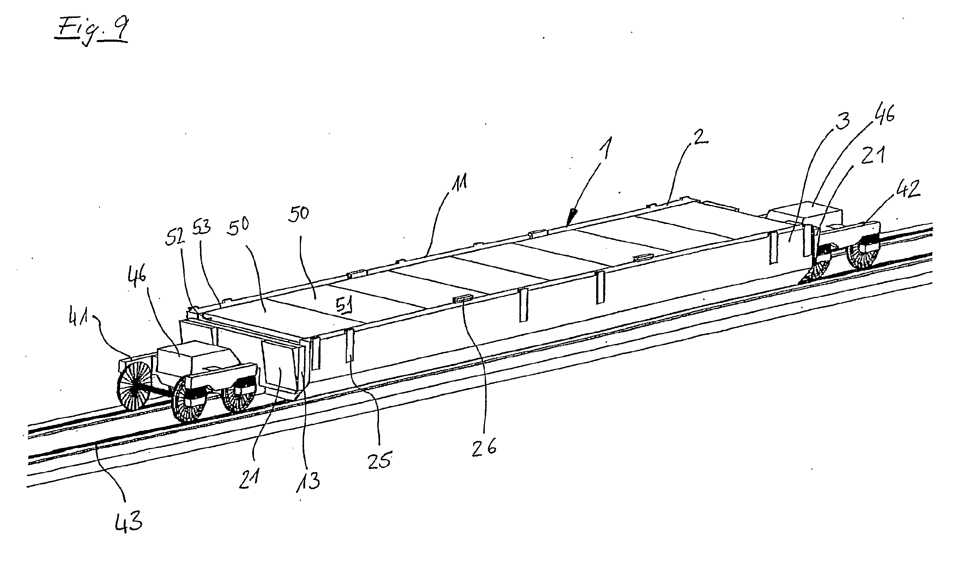

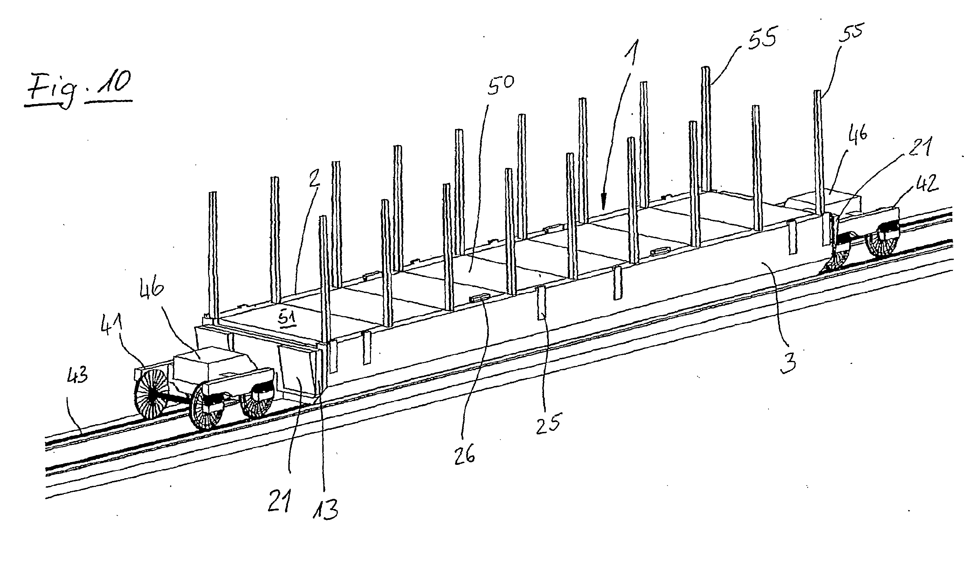

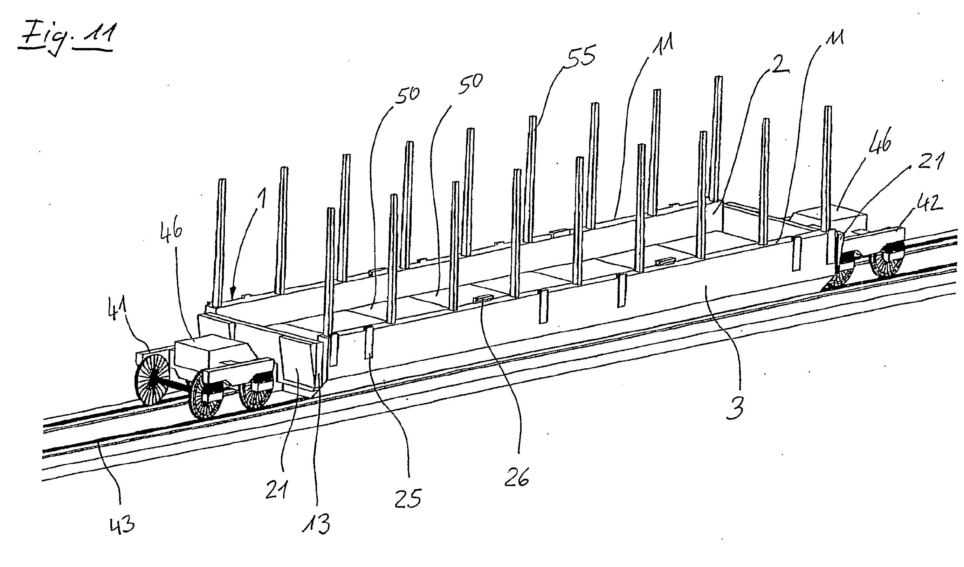

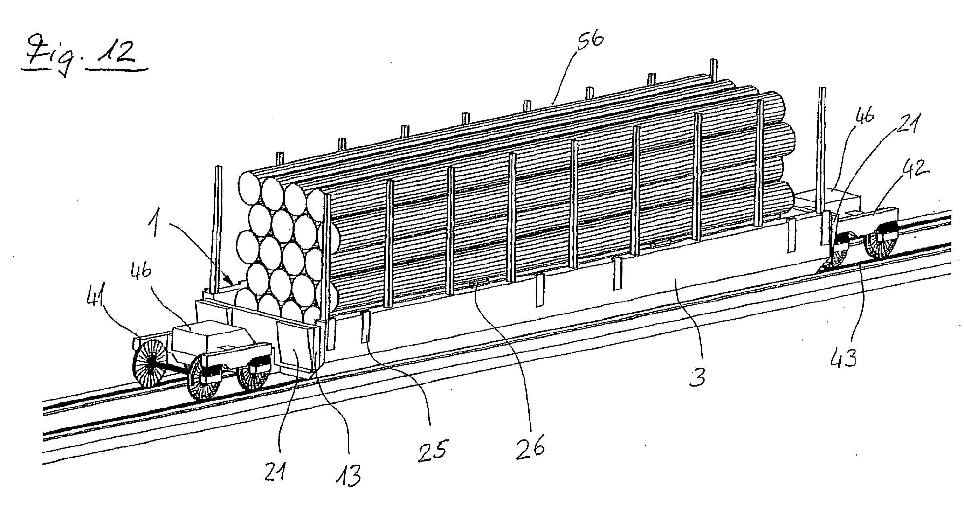

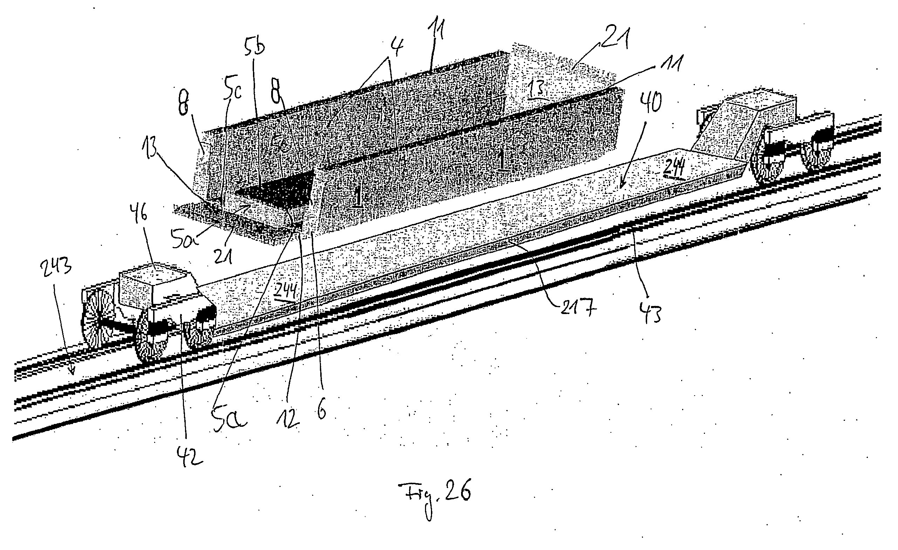

Ein erfindungsgemäß verwendeter Waggonaufsatz 1 (Fig. 1, 2, 3) weist eine im Wesentlichen wannenförmige Raumform auf, wobei die wannenförmige Raumform z.B. aus einem ersten seitlichen Wannenelement 2 und einem seitlichen zweiten Wannenelement 3 gebildet ist. Bei einer anderen Ausführungsform weist der Waggonaufsatz 1 eine im Querschnitt geschlossene Wannenform auf (Fig. 26). Der Waggonaufsatz 1 ist dabei nicht in zwei Längshälften geteilt.

Die Wannenelemente 2, 3 erstrecken sich in Längsrichtung des Waggonaufsatzes 1 parallel auf Abstand nebeneinander und sind im Querschnitt etwa L-förmig mit einem ersten vertikalen Wannenwandelementschenkel 4 und einem zweiten horizontalen Wannenbodenelementschenkel 5. Die Wannenelementschenkel 4, 5 stehen im Eckbereich über eine schmale Schrägwandung 6 in Verbindung. Die Schrägwandung 6 ermöglicht vorteilhaft eine Zentrierung eines LKW-Anhängers, eines Sattelaufliegers, einer LKW-Wechselbrücke, eines Containers oder dergleichen.

Der zweite Wannenelementschenkel 5 bildet jeweils einen Teil des Bodens und der Wannenelementschenkel 4 jeweils eine seitliche Begrenzungswandung des Waggonaufsatzes 1. Jedes Wannenelement 2, 3 weist eine L-förmige erste stirnseitige freie Frontendkante 8 und eine L-förmige zweite stirnseitige freie Frontendkante 9 auf. Weiterhin hat jeder Wannenelementschenkel 5 eine zu einer vertikalen Längsmittelebene 7 weisende freie Längskante 10 sowie jeder Wannenelementschenkel 4 eine obere freie Längskante 11.

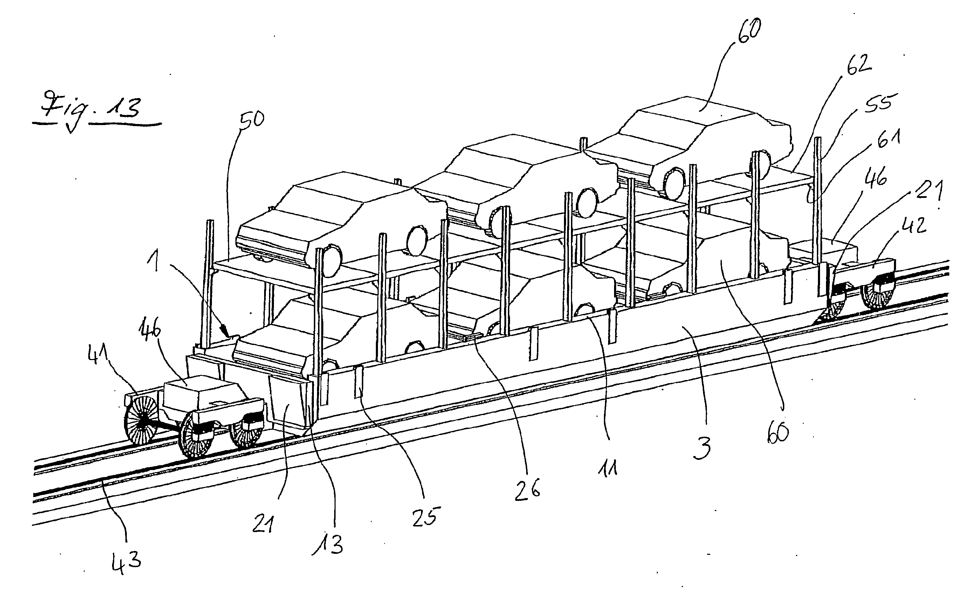

Die Wannenelemente 2, 3 bilden jeweils einen Hauptteil des Waggonaufsatzes 1 und sind derart angeordnet, dass sich die freien Längskanten 10 parallel beabstandet gegenüberliegen, so dass eine Lücke bzw. ein Schlitz 10a ausgebildet ist. Die zweiten Wannenelementschenkel 5 sind in einer horizontalen Ebene liegend angeordnet und die freien Frontendkanten 8, 9 der Wannenelemente 2, 3 fluchten miteinander in einer quer zur Ebene 7 liegenden vertikalen Ebene. An den Kanten 8, 9 der zweiten Wannenelementschenkel 5 ist jeweils stirnseitig eine um eine horizontale Achse 12 verschwenkbare Schließklappe 13 angeordnet, welche von einer horizontalen, mit den Wannenelementschenkeln 5 fluchtenden Lage in eine vertikale Lage verschwenkbar ist, in der die Klappe 13 an den freien Endkanten 8, 9 der ersten Wannenelementschenkel 4 anliegt. In der geschlossenen, angeklappten Stellung (vgl. Fig. 3) schließt die Klappe 13 bündig oder vorzugsweise etwas unterhalb des Niveaus der oberen Längskanten 11 ab. Die Schließklappe 13 weist eine erste waggonseitige Flachseite 14 und eine außenseitige Flachseite 15 sowie zwei seitliche Schmalseitenbegrenzungskanten 16 und eine Endkante 17 und eine Anlenkungskante 18 auf. Im Bereich der Kante 18 ist die Klappe 13 um jeweils eine Achse 12 auf einer Länge, welche der Breite der Schenkel 5 entspricht, mit den Wannenelementen 2, 3 gelenkig schwenkbar verbunden. Symmetrisch zur Längsmittelebene 7 bilden jeweils zwei Wannenelemente 2, 3, welche sich mit ihren horizontalen Wannenelementschenkeln 5 beabstandet gegenüberliegen, einen Hauptteil des Waggonaufsatzes 1. Bevorzugt verbleibt die Außenkontur des Waggonaufsatzes 1 innerhalb der für den Schienenverkehr gültigen Profilgrenzen.

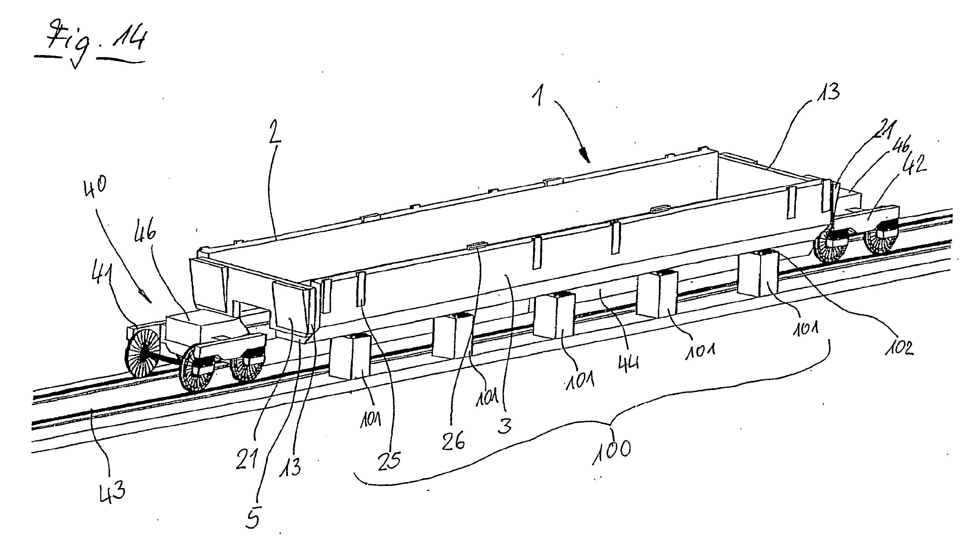

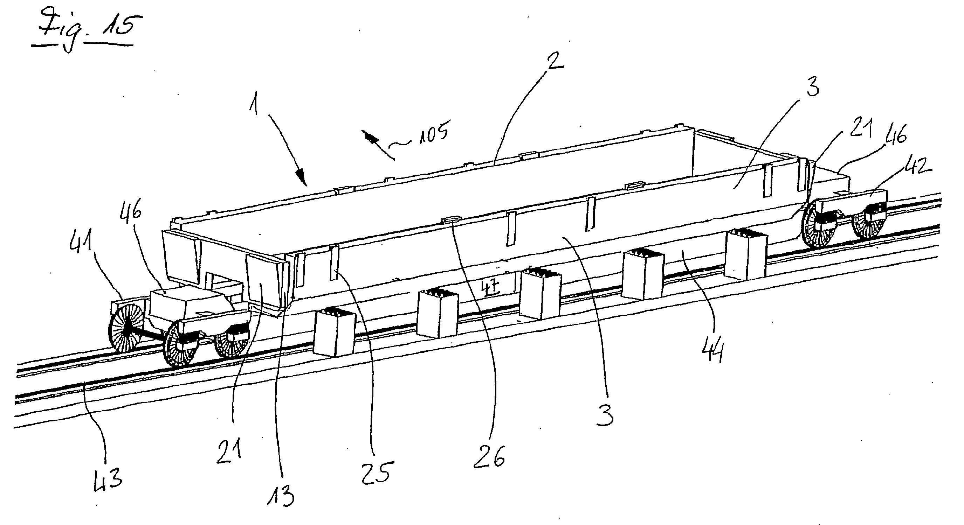

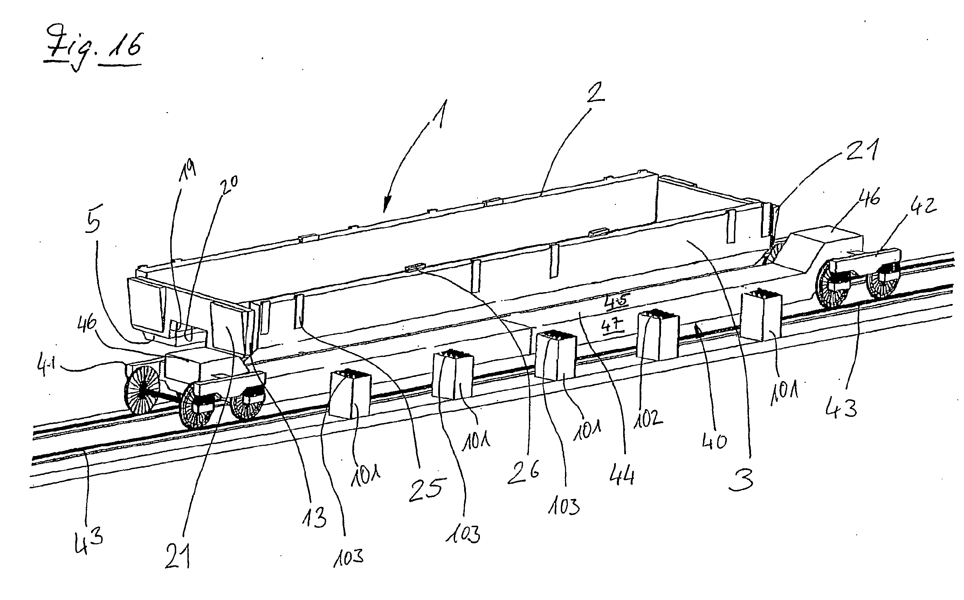

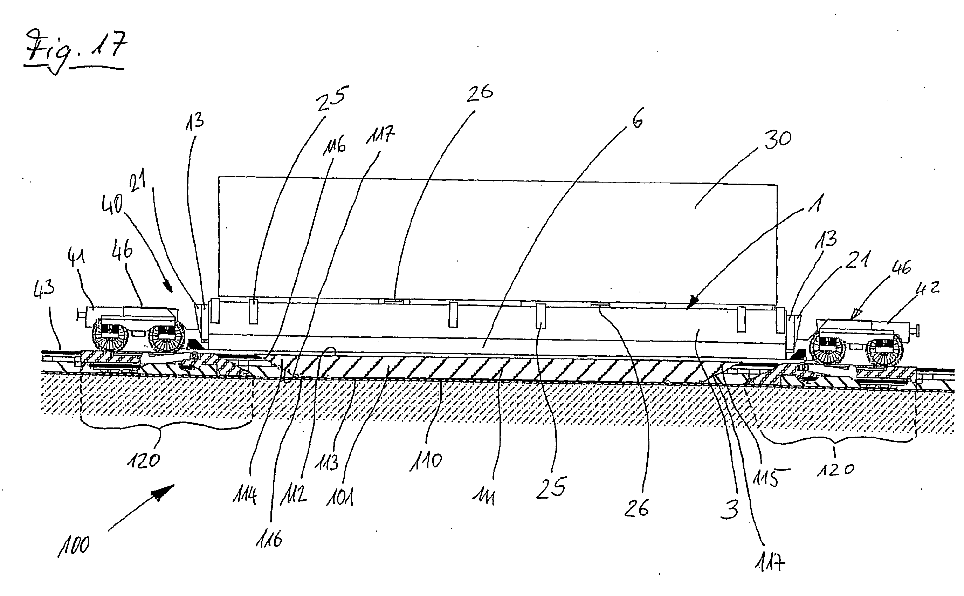

Im Bereich der Lücke 10a weist die Klappe 13 eine von der Kante 18 ausgehende U-förmige Ausnehmung 10b mit zwei U-Schenkelkanten 19 und einer U-Basiskante 20 auf. Die U-förmige Ausnehmung 10b ist derart bemessen, dass sie die Breite der Lücke 10a hat und in der vertikal angeklappten Stellung der Klappe 13 einen vertikalanschlag für einen Mittellängsträger 44 eines Waggongestelles 40 - wie weiter unten beschrieben (Fig. 4) - bildet.

In angeklapptem Zustand ist die Klappe 13 mittels geeigneter verriegelungselemente (nicht gezeigt) mit den Wannenelementen 2, 3 verriegelbar. An der Endkante 17 der Klappe 13 sind seitlich zwei keilförmige Auffahrrampenelemente 21 an der Klappe 13 um jeweils eine Achse 22 schwenkbar angeordnet. In abgeklappter Stellung der Klappe 13 fluchtet die Unterseite der Auffahrrampenelemente 21 mit der Flachseite 15. Die Auffahrrampenelemente 21 weisen eine Keilform auf, so dass Fahrzeuge, z.B. ein LKW oder ein LKW-Auflieger, in den Waggonaufsatz 1 einfahren können.

Im angeklappten Zustand der Klappe 13 wird jeweils die Unterseite der Auffahrrampenelemente 21 an die Flachseite 15 der Klappen 13 angeklappt und dort arretiert. Bei einer Ausführungsform ist die Klappe 13 dazu eingerichtet, einer Arretierung des LKWs bzw. des LKW-Aufliegers zu dienen. Eine oder beide Schließklappen 13 bilden dabei zusammen mit einem ebenfalls klappbaren Mechanismus ein Gelenkgestell, wobei die Oberseite Aufnahmen aufweist, die zur Arretierung des Sattelaufliegers 30, z.B. an den sogenannten Königszapfen, geeignet sind. Besonders bevorzugt ist das Gelenkgestell mit den Wannenschenkeln 4 form- und/oder kraftschlüssig verriegelbar. Die Verriegelung bewirkt eine seitliche Stabilisierung der Wannenschenkel 4.

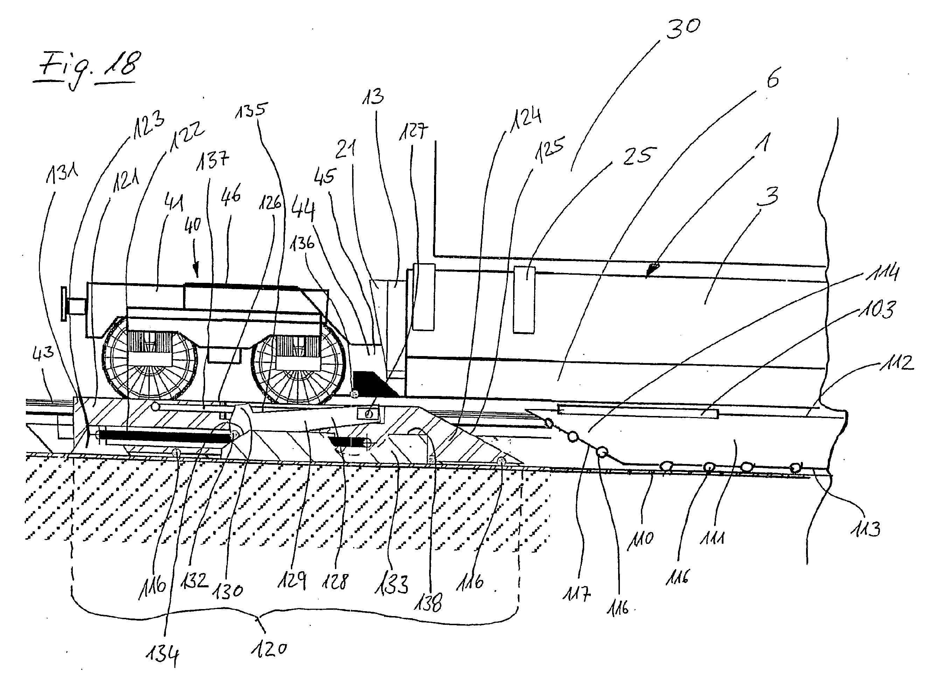

Mit der Klappe 13 und der Achse 12 wird der Zusammenhalt des Waggonaufsatzes 1 bzw. der Wannenelemente 2, 3 gewährleistet. Entlang der Längsaußenseite des Waggonaufsatzes 1, insbesondere der Wannenelementschenkel 4, sind ausklappbare Auflagemittel 25 (Lastaufnahmen) angeordnet. Die Auflagemittel 25 sind entlang der Längserstreckung des Waggonaufsatzes 1 beidseitig so angeordnet, dass sowohl handelsübliche 20 Fuß-Container 31 als auch 40 Fuß-Container 32 auf den ausgeklappten Auflagemitteln 25 (vgl. z.B. Fig. 5, 6, 7) aufsetzbar sind. Die Auflagemittel 25 sind in einer Ruhestellung in den ersten Wannenelementschenkeln 4 der Wannenelemente 2, 3 versenkbar angeordnet und bei Bedarf durch Hochziehen nach innen hin zur Längsmittelebene 7 klappbar, so dass Auflageflächen für die Container 31, 32 entstehen. In der Ruhestellung der Auflagemittel 25 stören diese die freie lichte Weite zwischen den Wannenelementen 2, 3 nicht, so dass ein Einfahren von Sattelaufliegern oder anderen rollbaren Gutbehältern ungehindert möglich ist.

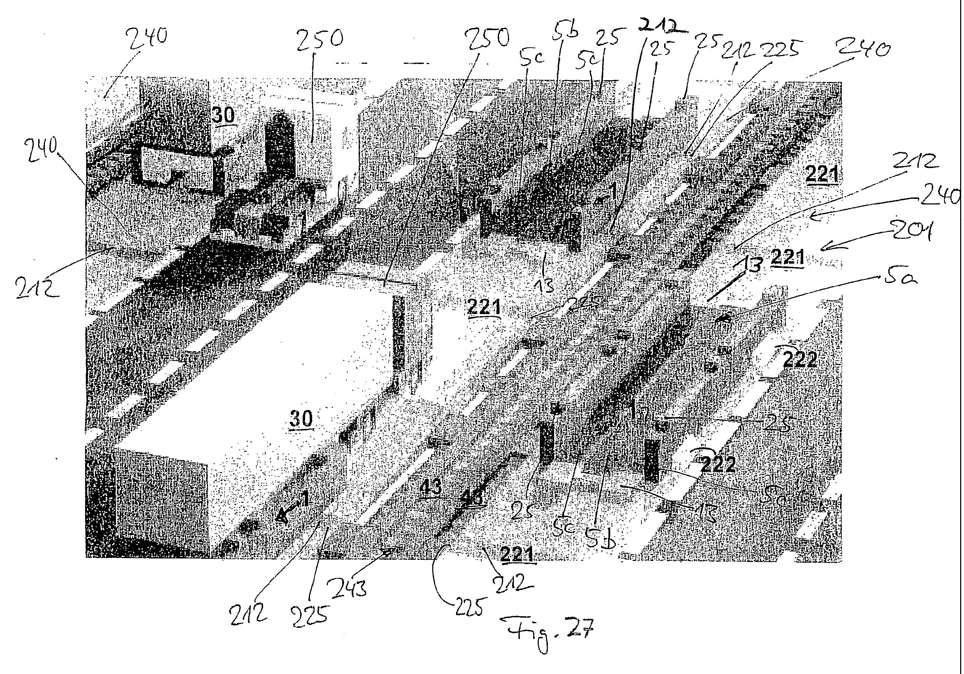

Bei einer Ausführungsform des Waggonaufsatzes 1 (Fig. 27) sind die Auflagemittel 25 als Lastaufnahmen derart ausgebildet, dass Container, insbesondere genormte und im Transportwesen übliche Eckbeschläge oder Kran-Greifkanten von Containern und/oder Wechselbrücken, kraftschlüssig und/oder formschlüssig an den Lastaufnahmen 25 arretierbar sind. Die Lastaufnahmen 25 sind dazu eingerichtet, dass die Container/Wechselbrücken in einer Transportstellung, in der die Container/Wechselbrücken auf LKW-Pritschen und/oder Anhängern aufliegen, an den Lastaufnahmen 25 arretierbar sind. Diese Ausführungsform eignet sich besonders zur Verwendung in einer LKW-Wechselbrücke. Der LKW-Wechselbrückentransporter mit einer oder zwei Wechselbrücken kann die Wechselbrücken 30 auf den Waggonaufsatz 1 übergeben und wieder aufnehmen, ohne dass dazu die Stützbeine der Wechselbrücken 30 ausgeklappt werden müssten. Ferner kann ein Container von einem LKW 250 auf den Waggonaufsatz 1 ohne Zuhilfenahme eines Kranes oder anderer Transportmittel übergeben und wieder aufgenommen werden. Die Lastaufnahmen 25 sind vorzugsweise so ausgeführt und gelagert, dass sie eine freie Durchfahrt von Sattelaufliegern bzw. Wechselbrücken-LKW 250 gewährleisten, wenn die Lastaufnahmen 25 nicht verwendet werden und in eine Ruhestellung gebracht sind. Besonders bevorzugt sind die Lastaufnahmen 25 dabei derart eingerichtet, dass sie zur Arretierung der Wechselbrücken 30 und Container Positionierungstoleranzen der LKW 250 im Bereich bis etwa 25 cm und Höhentoleranzen von wenigen Zentimetern, z.B. 5 bis 10 cm, ausgleichen können. Die Bewegung der Lastaufnahmen 25 ist manuell und/oder durch hydraulische/pneumatische und/oder durch elektrische Antriebe erzeugbar. Bevorzugt weisen die Lastaufnahmen 25 Hubzylinder auf. Die Hubzylinder sind für einen elektrischen oder fluidischen Betrieb eingerichtet. Die Hubzylinder heben Wechselbrücken 30 und/oder Container von den LKW-Ladeflächen an. Vorzugsweise sind die Lastaufnahmen 25 derart eingerichtet, dass sie nach Ausfahrt der LKW aus dem Waggonaufsatz 1 eine Transportstellung mit zusätzlicher mechanischer Sicherung etwa an den Unterseiten der Eckbeschläge der Wechselbrücken 30 und Container annehmen.

Weiterhin sind auf den freien Längskanten 11 der Wannenelementschenkel 4 in geeigneten Abständen Greifkanten 26 angeordnet, welche korrespondierend zu Greifarmen von Verladekränen, z.B. sogenannten Pickypack-Kränen od. dgl., ausgebildet sind.

Über die Greifkanten 26 kann der Waggonaufsatz 1 zusammen mit dem geladenen Gut bei Bedarf nach Art eines Containers angehoben und verladen werden. Die Greifkanten 26 haben eine im Querschnitt L-förmige Raumform, welche derart auf dem Waggonaufsatz 1 angeordnet sind, dass ein Greifhinterschnitt für die Pickypack-Arme ausgebildet ist.

Besonders vorteilhaft bei einem derartigen erfindungsgemäß verwendeten Waggonaufsatz 1 ist, dass durch Abklappen der beidendig angeordneten Klappen 13 und der Auffahrrampenelemente 21 ein in Längsrichtung frei durchfahrbarer Waggonaufsatz 1 gebildet ist, so dass ein LKW z.B. zusammen mit dem Sattelauflieger 30 einendig auf den Waggonaufsatz 1 auffahren kann. Wenn der LKW-Auflieger 30 in Längsrichtung an der geeigneten Position bezüglich des Waggonaufsatzes 1 angelangt ist, kann der LKW abgekoppelt werden und den Waggonaufsatz 1 anderendig über die Klappe und die Rampenelemente 21 wieder verlassen.

Bei einer Ausführungsform sind an der Außenseite des Waggonaufsatzes 1 Anschlüsse für eine Energieversorgung (fluidisch, elektrisch oder mechanisch) und/oder für eine Datenübermittlung (elektrisch, elektronisch, optisch, magnetisch oder fluidisch) vorhanden. Bevorzugt sind diese Anschlüsse für einen automatisierten Anschlussvorgang vorgesehen. Der Waggonaufsatz 1 ist dazu eingerichtet, mit dem Waggongestell 40 bei einer Entkopplung der Energieanschlüsse eine passive Einheit zu bilden, die mechanisch kraft- und formschlüssig vorzugsweise redundant verriegelt ist. Bei dieser Ausführungsform ist eine Zuführung externer Energie und/oder externer Signale durch entsprechende Anschlüsse des Waggongestells 40 erforderlich, um die Passivität aufzuheben, insbesondere um eine Entriegelung zu bewirken.

Bei einer Ausführungsform ist der Waggonaufsatz 1 dazu eingerichtet, über extern zugeführte fluidische oder elektrische Energie eine den Waggonaufsatz 1 und Zuladung tragende fluidische oder magnetische Schicht unter dem Waggonaufsatz 1 zu erzeugen. Als Fluid ist z.B. ein pneumatisches oder hydraulisches oder ein sonstiges Fluid, etwa ein zumindest auf die Oberfläche des Hubbalkens 212 gebrachter Ölfilm und/oder eine unter dem Boden 5a des Waggonaufsatzes 1 erzeugte Pressluftschicht, vorgesehen. Bei einer besonderen Ausführungsform ist der Waggonaufsatz 1 nach Art einer Magnetschwebebahn bewegbar. Das Fluid ermöglicht ein Querverschieben des Waggonaufsatzes 1 auf beliebigen glatten Oberflächen, etwa vom Waggon 1, 40 auf eine Entladefläche oder auf der Entladefläche zu weiteren Orten oder von der Entladefläche auf einen anderen Waggon 1, 40. Der dabei erforderliche Kraftaufwand ist besonders gering.

Der Waggonaufsatz 1 ist an ein Waggongestell 40 angepasst. Das Waggongestell 40 (Fig. 4 - 8) sitzt in einer bevorzugten Ausgestaltung mit zwei beabstandeten Drehgestellen 41 und 42 auf Gleisen 43 auf. Die Drehgestelle 41, 42 sind vorzugsweise als Doppelachsdrehgestelle ausgebildet und entsprechen gängigem Standard der Bahnunternehmen. Die Drehgestelle 41, 42 sind zweckmäßigerweise mit einem einzigen zentralen Längsträger 44 verbunden.

Der Längsträger 44 hat eine im Querschnitt rechteckförmige, vorzugsweise rohrförmig hohle Rechteckraumform und weist ggf. geeignete innenliegende versteifungsbleche bzw. Versteifungsstege (nicht gezeigt) auf. Bevorzugt erhält der Längsträger 44 mittels einer Vorspannung, die z.B. über hoch belastbare Seile oder Gurte oder durch andere Mittel erzeugt wird, in Längsrichtung eine besonders hohe Biegesteifigkeit. Somit ist ein besonders niedriger Längsträgerquerschnitt möglich.

Im Bereich zwischen den Drehgestellen 41, 42 ist der Längsträger 44 derart angeordnet, dass dessen Oberseite 45 etwas oberhalb der Ebene der Radsatzdrehachsen angeordnet ist. Der Längsträger 44 ist an beiden Enden nach oben gekröpft ausgebildet und sitzt mit seinen gekröpften Enden 46 auf dem jeweiligen Drehgestell 41, 42 auf. Der zentrale Längsträger 44 weist eine Breite auf, welche der Breite der Lücke 10a entspricht, so dass ein erfindungsgemäß verwendeter Waggonaufsatz 1 mit der Lücke 10a über den Längsträger 44 stülpbar ist.

Dabei durchdringt der Längsträger 44 die Lücke 10a, bis die U-Basiskante 20 auf der Oberseite 45 aufsitzt, so dass der Waggonaufsatz 1 in vertikaler Richtung bezüglich des Längsträgers 44 festgelegt ist. In seitlicher Richtung können sich die Längskanten 10 und die U-Schenkelkanten 19 an Seitenflächen 47 des Längsträgers 44 abstützen, so dass eine seitliche Führung des Waggonaufsatzes auf dem Waggongestell gewährleistet ist.

Bei einer Ausführungsform weist der rechteckige oder trapezförmige Querschnitt des Längsträgers 244 eine besonders geringe Höhe auf (Fig. 26). Der Längsträger 244 ist z.B. in Längsrichtung von Kanälen 245 durchsetzt, so dass das Gewicht des Längsträgers 244 bei vorgegebener Steifigkeit besonders niedrig ist. Somit ist das Waggongestell 40 leicht. Bei einer Ausführungsform ist das Waggongestell 40 so leicht gebaut, dass die Steifigkeit des Waggongestells 40 zur Aufnahme der Last des Waggonaufsatzes 1, insbesondere des mit einer Ladung 30 beladenen Waggonaufsatzes 1, an sich nicht ausreicht, z.B. zur Gewährleistung der für den Waggon 1, 40 vorgesehenen Höchstbelastungen.

Der Waggonaufsatz 1 der Ausführungsform mit der geschlossenen Wannenform weist z.B. einen Boden 5a aus Stahlblech aus. Das Stahlblech ist z.B. maximal drei Zentimeter stark. Bevorzugt ist das Stahlblech dünner ausgebildet, z.B. beträgt die Dicke ein bis zwei Zentimeter. Auf dem Stahlblech ist bei einer Ausführungsform ein Bodenaufsatz 5b ausgebildet. Der Bodenaufsatz 5b versteift zweckmäßigerweise den Waggonaufsatz 1. Beidseitig des Bodenaufsatzes 5b weist der Boden 5a Spurrillen 5c auf. Vorzugsweise kann der Waggonaufsatz 1, insbesondere mit der Unterseite des Bodens 5a, flach auf dem Längsträger 244 aufsitzen. Die Seitenwandungen 4 des wannenförmigen Waggonaufsatzes 1 sind z.B. aus einem vergleichsweise dünnen Stahlblech hohl, etwa als Hohlprofilkörper, ausgebildet und verleihen dem Waggonaufsatz 1 eine besonders hohe Steifigkeit. Der Waggonaufsatz 1 ist mit dem Waggongestell 40 verriegelbar ausgebildet. Wenn der Waggonaufsatz 1 auf dem Waggongestell 40, insbesondere auf dem besonders leicht gebauten Waggongestell 40, insbesondere mit dem Längsträger 244 niedriger Höhe, abgesetzt und mit dem Waggongestell 40 verriegelt ist, weist der Waggon 1, 40, d.h. der verriegelte verbund von Waggonaufsatz 1 und Waggongestell 40, insgesamt eine genügende Steifigkeit, insbesondere Biegesteifigkeit und/oder Schubsteifigkeit und/oder Torsionssteifigkeit, auf, um insbesondere im betrieb auftretende statische und/oder dynamische Belastungen sicher aufzunehmen, so dass z.B. die vorgesehenen Höchstbelastungen für den Waggon 1, 40 auf diese Weise gewährleistet sind.

Eine Festlegung des Waggonaufsatzes 1 in Längsrichtung bezüglich des Waggongestells 40 erfolgt beispielsweise über die untere Kröpfungskante 45a, wobei von Vorteil ist, dass die Verkröpfung jeweils über eine Schräge 45b erfolgt, wobei die Schrägen 45b beim Aufsetzen des Waggonaufsatzes 1 dessen Zentrierung durch Abrutschen ermöglichen. Der Waggonaufsatz 1 ist somit selbstsichernd arretierbar. Zudem können weitere geeignete Aufnahmedorne od. dgl. Befestigungsmittel vorgesehen sein. Bei einer weiteren bevorzugten Ausführungsform des Waggongestells 40 sind an mehreren Stellen auf dem Längsträger 244 Arretierungen angeordnet. Die Anordnung der Arretierungen an mehreren Stellen ist besonders vorteilhaft, weil durch die Aufnahme von Kräften in allen Raumrichtungen ein Durchbiegen des Längsträgers 244 gegenüber dem Waggonaufsatz 1 minimiert wird.

Bei einer Ausführungsform des Waggongestells 40 sind im Längsträger keil- und/oder rechteckförmige Zentrierflächen eingearbeitet. Die Zentrierflächen sind vorzugsweise dazu eingerichtet, im Zusammenwirken mit Rampenflächen von Hubbalken und bei einer Zustellbewegung der Hubbalken eine Zentrierung und Arretierung der Waggongestelle 40 in allen Raumrichtungen zu bewirken.

Neben den standardmäßigen Drehgestellen 41, 42 beinhaltet das Waggongestell 40 weitere zur Zugbildung und für den Fahrbetrieb nötige Einrichtungen wie z.B. Bremsen, Hauptluftsystem, Signalsystem, Puffer, Kupplungseinrichtungen, Positionsleuchten, usw. Diese sind hier der Einfachheit halber nicht dargestellt.

In einer alternativen, nicht dargestellten Ausgestaltung des erfindungsgemäß verwendeten Waggongestells sind zwei Längsträger über ein einziges Doppelachsdrehgestell, sog. Jakobs-Drehgestelle, derart miteinander verbunden, dass sich jeweils zwei Waggons auf diesem Drehgestell abstützen. Besonders vorteilhaft ist hierbei eine kürzere Zugbauform.

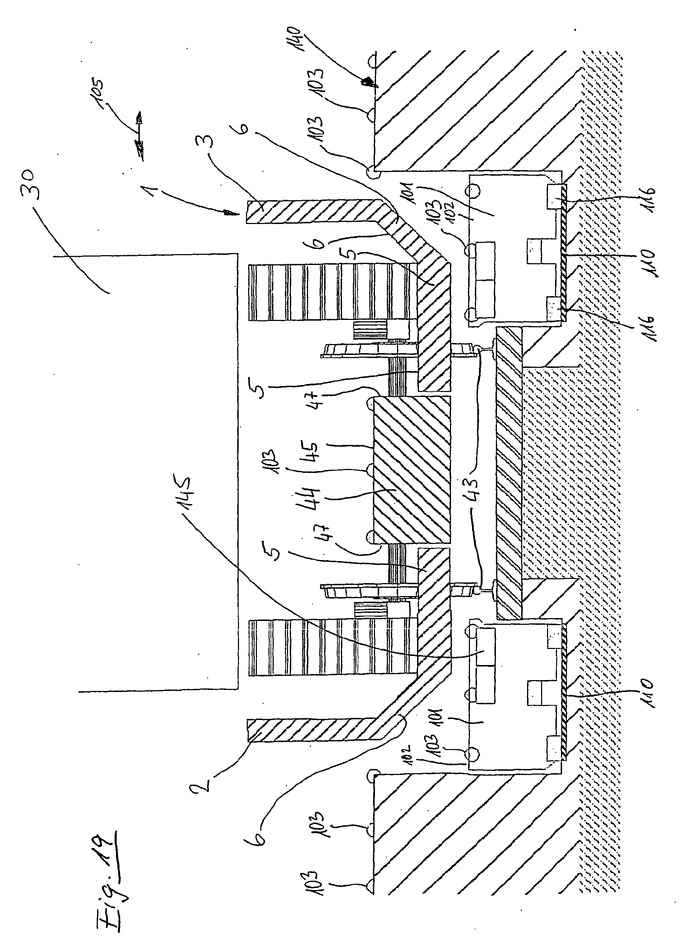

Ein erfindungsgemäß verwendeter Waggon 1, 40 gemäß Fig. 9 bestehend aus einem erfindungsgemäß verwendeten Waggonaufsatz 1 und einem erfindungsgemäß verwendeten Waggongestell 40 ist in einfacher Art und Weise in einen Plattenwagen umgestaltbar. Hierzu sind Bodendielen 50 in das Innere des wannenförmigen Waggonaufsatzes 1 einlegbar, wobei die Bodendielen 50 eine Oberseite 51 aufweisen, welche bündig mit den Längskanten 11 abschließt. Zur Bildung eines flachen Bodens sind eine Vielzahl von Bodendielen 50 derart angeordnet, dass die Wanne des wannenförmigen Waggonaufsatzes 1 verschlossen ist.

Die Bodendielen 50 haben eine im Wesentlichen rechteckplattenförmige Raumform mit Längskanten 52 und Schmalseitenkanten 53, wobei die Bodendielen 50 derart angeordnet sind, dass die Schmalseitenkanten 53 an den ersten Wannenelementschenkeln 4 anliegen, so dass Fugen zwischen den Bodendielen 50 quer zur Fahrtrichtung ausgerichtet sind.

Bei einer weiteren Ausführungsform des erfindungsgemäß verwendeten Waggons 1, 40 (Fig. 10) bestehend aus Waggonaufsatz 1 und Waggongestell 40 sind entlang der Längskanten 11 der Wannenelementschenkel 4 vertikal nach oben abgehende Rungen 55 eingesetzt, so dass in einfacher Art und Weise aus einem Flachwagen ein Rungenwagen gebildet werden kann. Die Rungen sind längliche stabförmige Halteelemente, welche es ermöglichen, langgestrecktes Gut 56, beispielsweise Baumstämme oder Rohre, mit dem erfindungsgemäß verwendeten Waggon 1, 40 zu transportieren.

Bei einer weiteren Ausführungsform gemäß Fig. 11 des erfindungsgemäß verwendeten Waggons 1, 40 sind die Bodendielen 50 einen Zwischenboden bildend gegenüber dem Niveau der Längskanten 11 etwas abgesenkt angeordnet, so dass ein wannenförmiger Raum entsteht, welcher einen geschlossenen Boden und vier Seitenwände aufweist. Der Boden ist dabei durch die Dielen 50 gebildet, die beiden Längsseitenwandungen durch die Wannenschenkel 4 und die Querseitenwandungen durch die Klappen 13. Selbstverständlich kann ein solcher Wannenwaggon 1, 40 auch ohne Rungen 55 für geeignete Ladung bereitgestellt werden. Weiterhin ist anstelle der Bodendielen 50 eine Tragbodenkonstruktion ausführbar, die aufgrund ihrer Oberflächenformgebung geeignet ist, Stückgutbehälter, Einzelstückgüter, Sondertransportbehälter oder bei zusätzlicher Verwendung von Transportrollen/-kugeln auch Air-Cargo-Paletten und -Container aufzunehmen. Mittels geeigneter Haltevorrichtungen werden diese im Waggonaufsatz 1 arretiert.

Zur Erhöhung des Wannenvolumens kann der Waggonaufsatz 1 aber auch anstelle der Rungen 55 Plattenelemente aufweisen, die vorzugsweise mit stegartigen Verlängerungen in die Rungenaufnahmen der Wannenelementschenkel 4 eingesteckt werden. Stirnseitig sind die Plattenelemente mit den Wannenelementschenkeln 5 verbunden. Die Plattenelemente stehen vertikal von den Wannenelementschenkeln 4, 5 ab und können untereinander kraft- oder formschlüssig verbunden sein. Somit wird in einfacher Weise aus einem Flachwagen ein Schüttgutwagen.

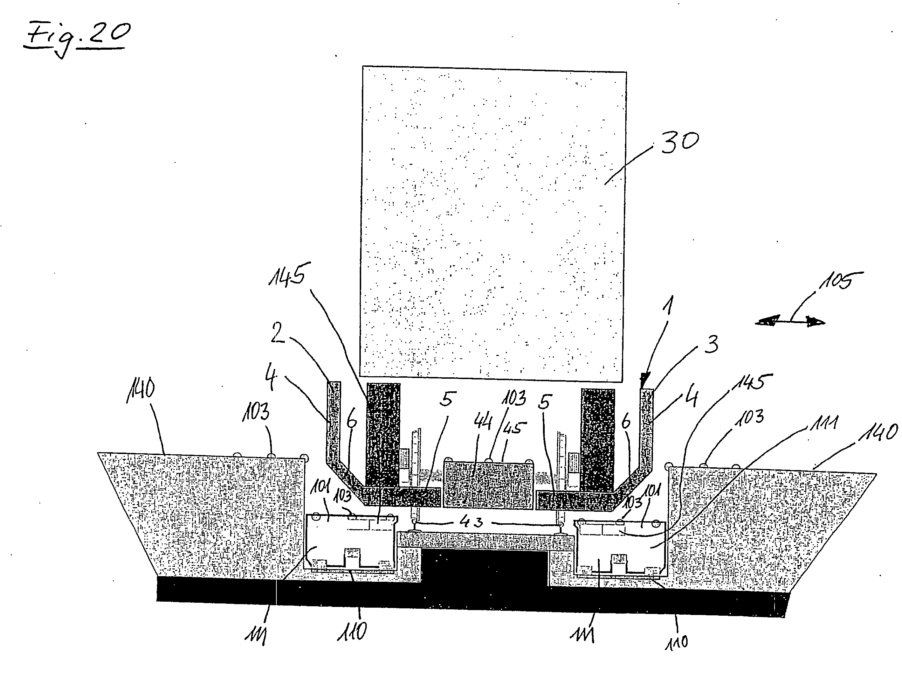

Bei einer weiteren Ausführungsform des erfindungsgemäß verwendeten Waggons 1, 40 gemäß Fig. 13 ist dieser als Kraftfahrzeugwaggon ausgebildet, wobei Kraftfahrzeuge 60 auf einem ersten, unteren Niveau, insbesondere einem abgesenkten Dielenboden gemäß Fig. 11 oder auf den zweiten Wannenelementschenkeln 5 abgestellt sind. Ein solcher Waggon 1, 40 weist entlang der Längskanten 11 Rungen 55 auf, wobei die Rungen 55 geeignete Aufnahmemittel 61 zur Auflage von einem zweiten Dielenboden 62 bestehend aus weiteren Dielen 50 aufweist. Der zweite Dielenboden 62 ist vertikal oberhalb dem ersten Dielenboden bzw. der Ebene der zweiten Wannenschenkel 5 angeordnet, derart, dass der zweite Dielenboden 62 oberhalb der Kraftfahrzeuge 60 angeordnet ist. Auf dem zweiten Dielenboden 62 können somit ebenfalls Kraftfahrzeuge 60 transportiert werden. Selbstverständlich ist es auch zweckmäßig, den zweiten Dielenboden 62 nicht aus Einzeldielen 50 aufzubauen, sondern beispielsweise aus Fahrschienen od. dgl. geeignete Tragbodenkonstruktionen zur Ausbildung einer Tragstruktur für Kraftfahrzeuge.

Im Folgenden wird anhand der Fig. 14, 15 und 16 eine erste Ausführungsform einer erfindungsgemäß verwendeten Be- und/oder Entladevorrichtung für erfindungsgemäße Waggons 1, 40 bestehend aus Waggonaufsatz 1 und Waggongestell 40 beschrieben.

Die erste Ausführungsform einer erfindungsgemäßen Be- und/oder Entladevorrichtung 100 weist eine Vielzahl von Hubeinrichtungen 101 auf, welche erfindungsgemäß entlang der Gleise 43 außerhalb neben den Gleisschienen angeordnet sind. Entlang eines Wannenelementschenkels 5 sind beispielsweise fünf Hubeinrichtungen 101 vorgesehen, welche so angeordnet sind, dass eine freie Durchfahrt der Lok und der Waggons auf den Gleisen 43 möglich ist. Die Hubeinrichtungen 101 sind vorzugsweise hydraulische oder auch pneumatische Hubstempel, welche eine Lastauflage 102 aufweisen. Die Be- und/oder Entladevorrichtung weist Mittel zum Nivellieren, insbesondere zum horizontalen und/oder vertikalen Nivellieren des Waggons 1, 40 und/oder des Waggonaufsatzes 1 und/oder des Waggongestells 40 auf, so dass das Waggongestell 40 und/oder der Waggonaufsatz 1 und/oder der gesamte Waggon 1, 40 in allen Richtungen, insbesondere in horizontaler und/oder vertikaler Richtung längs und quer zur Fahrtrichtung des Waggons 1, 40 nivellierbar ist. Die Lastauflage 102 der Hubeinrichtungen 101 wirkt jeweils mit der Unterseite jedes Wannenelementschenkels 5 der Wannenelemente 2, 3 zusammen, derart, dass der Waggonaufsatz 1 mittels den Hubeinrichtungen 101 derart weit angehoben werden kann, dass die Unterseite der Wannenelementschenkel 5 auf gleichem oder vorzugsweise etwas höherem Niveau liegt wie die Oberseite 45 des Längsträgers 44. Vorteilhafterweise weisen die Lastauflagen 102 der Hubeinrichtungen 101 Rollelemente 103, z. B. Rollen oder Kugelelemente, auf, so dass der Waggonaufsatz 1 nach dem Anheben in einer Richtung quer zur Fahrtrichtung auf den Lastauflagen 102 verschiebbar ist. Zweckmäßigerweise ist außerhalb neben den Hubeinrichtungen 101 ein Bahnsteig (nicht gezeigt) angeordnet, welcher ein Niveau korrespondierend zum Niveau der Oberseite 45 des Längsträgers bzw. der Lastauflagen 102 in ausgefahrener Stellung der Hubeinrichtungen 101 aufweist.

Hierdurch ist gewährleistet, dass ein Waggonaufsatz 1 nach dem Anheben horizontal quer zur Fahrtrichtung über die Rollelemente 103 seitlich auf den Bahnsteig verfahrbar ist. Vorzugsweise ist der Aufnahmebereich für Waggonaufsätze 1 des Bahnsteigs ebenfalls mit Rollenelementen 103, beispielsweise Kugeln oder Rollen, versehen, so dass ein Waggonaufsatz 1 im Bereich des Bahnsteiges ebenfalls leicht bewegbar ist. Zumindest einige der Rollen der Lastauflagen 102 und des Bahnsteigs sind derart motorisch angetrieben, dass der Waggonaufsatz automatisch verfahrbar ist. Alternativ können einige der Rollen der Lastauflagen 102 durch form- oder kraftschlüssigen Eingriff von bahnsteigseitigen Antriebseinrichtungen angetrieben sein.

Besonders bevorzugt weist der Längsträger 44 auf seiner Oberseite 45 ebenfalls Rollelemente 103 auf, damit für das Be- und Entladen mit der Bahnsteigebene, den angehobenen Lastauflagen 102 und der Oberseite 45 des Längsträgers 44 eine jeweils mit Rollelementen 103 versehene, nahezu geschlossene Rollenelementbahn gebildet ist, so dass der Waggonaufsatz 1 während des gesamten Be- und/oder Entladevorgangs immer auf einer ausreichenden Anzahl von Rollelementen 103 kippsicher und leicht bewegbar aufsitzt. Zweckmäßigerweise sind zumindest ausgewählte Rollelemente 103 der Bestandteile der Rollenelementbahn motorisch antreibbar ausgestaltet.

In Fig. 14 ist der Waggonaufsatz 1 in einem bezüglich des Längsträgers 44 angehobenen zustand gezeigt, wobei die Wannenelementschenkel 5 auf den Lastauflagen 102 der Hubelemente 101 aufliegen.

In Fig. 15 ist der Waggonaufsatz 1 in angehobener und teilweise seitlich versetzter Position quer zur Fahrtrichtung entlang der Be- und Entladerichtung 105 gezeigt, wobei der Waggonaufsatz 1 in der in Fig. 15 dargestellten Situation auf einen Bahnsteig (nicht gezeigt), welcher sich hinter dem Waggon 1, 40 befindet, bewegt wird. Dabei verlässt der zweite Wannenelementschenkel 5 des zweiten Wannenelements 3 gerade die Lastauflagen 102 und wird im Bereich der Längskanten 10 gerade von nicht eingezeichneten Rollelementen 103 auf der Oberseite 45 des Längsträgers 44 übernommen.

In Fig. 16 befindet sich der Waggonaufsatz 1 bereits vollständig neben dem Längsträger 45, wobei der Wannenelementschenkel 5 des Wannenelements 2 bereits auf dem Bahnsteig (nicht gezeigt) aufsitzt und der Wannenelementschenkel 5 des Wannenelements 3 auf den den dargestellten Hubeinrichtungen 101 gegenüberliegenden Hubeinrichtungen 101 bzw. deren Lastauflagen 102 aufsitzt. Ausgehend vom Zustand gemäß Fig. 16 kann der Waggonaufsatz 1 weiter verschoben werden, bis er vollständig auf dem Bahnsteig (nicht gezeigt) aufliegt. Der oben anhand der Fig. 14 bis 16 beschriebene Entladevorgang wird zum Beladen eines Waggongestells 40 mit einem Waggonaufsatz 1 in umgekehrter Reihenfolge durchgeführt, wobei der Waggonaufsatz 1 nach dem Erreichen einer korrekten Position in Querrichtung bezüglich des Waggongestells 40 mittels der Hubeinrichtungen 101 abgesenkt wird und mit geeigneten Befestigungs- oder Arretierungseinrichtungen am Waggongestell 40 befestigt wird. Vorzugsweise sind diese Arretierungseinrichtungen als selbstsichernde Einschnappvorrichtungen ausgeführt, wobei die Lösung während des Hubvorgangs unter Ausnutzung einer von der vertikalen Hubkraft abgeleiteten Querkraft, die beispielsweise eine federkraftverspannte Verklinkung löst, erfolgt.

Besonders vorteilhaft bei der ersten Ausführungsform der erfindungsgemäßen Be- und/oder Entladevorrichtung 100 ist, dass die Hubeinrichtungen 101 gleisbettfest neben den Waggons 1, 40 in deren Be- und Entladeposition angeordnet sind, so dass das Leergewicht der Waggons vermindert ist und außerdem die gesamte benötigte Anzahl an Hubeinrichtungen 101 vermindert werden kann, da lediglich im Bereich der Rangierbahnhöfe Hubelemente 101 angeordnet sein müssen, nicht jedoch an jedem Waggongestell 40. Somit kann die Gesamtzahl der erforderlichen Hubelemente 101 deutlich reduziert werden.

Eine erfindungsgemäße Anordnung der Hubelemente 101 seitlich neben den Gleisen 43 wird erfindungsgemäß erst dadurch ermöglicht, dass das Waggongestell 40 in der oben beschriebenen Zentrallängsträgerbauart ausgeführt ist und der Waggonaufsatz 1 Angriffsflächen (hier: die Unterseiten der Wannenelementschenkel 5) aufweist, welche mit den Lastauflagen 102 der Hubelemente 101 zusammenwirken können.

Eine derartige erfindungsgemäße Be- und/oder Entladevorrichtung 100 wäre mit einem Leiterrahmengestell eines Waggongestells gemäß dem Stand der Technik technisch nur unbefriedigend lösbar. Vorteilhaft bei der erfindungsgemäßen Be- und/oder Entladevorrichtung ist, dass den Waggons keinerlei hydraulische oder zusätzlich zu den Bremssystemen vorhandene pneumatische Energie zugeführt werden muss, was ebenfalls zu einer kostengünstigen und vom Wartungsaufwand her gewünschten Kostenreduzierung beiträgt. Die Waggongestelle 40 können bis auf die erforderlichen Pneumatiksysteme für die Bremsen der Radsätze als vollständig passive Waggons ausgebildet werden. Hierdurch wird die Reparaturanfälligkeit verringert und somit die Ausfallwahrscheinlichkeit eines derartigen Waggongestells 40 minimiert.

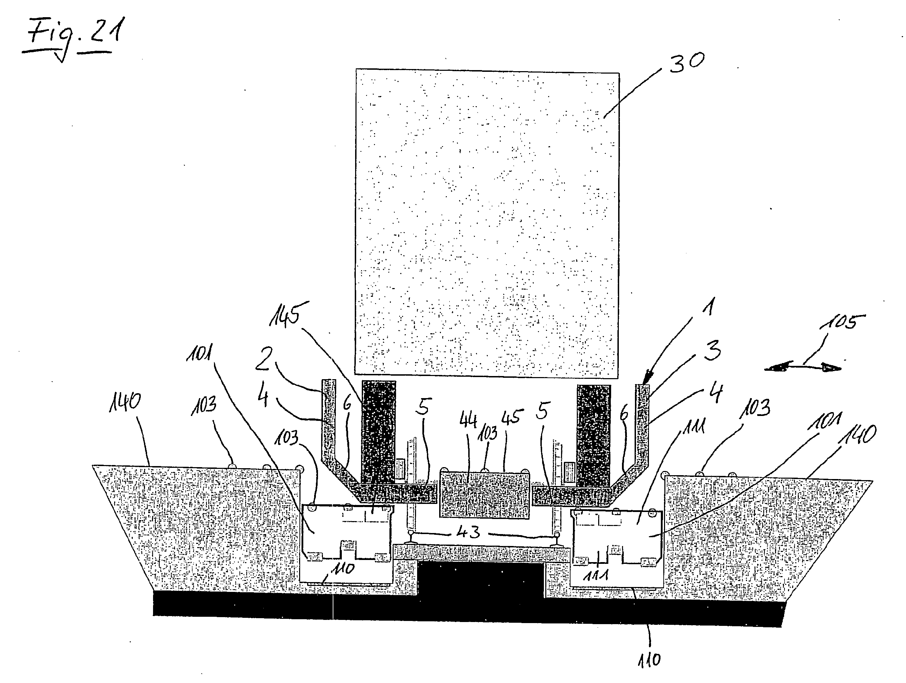

Im Folgenden wird eine zweite alternative Ausführungsform der erfindungsgemäßen Be- und/oder Entladevorrichtung 100 anhand der Fig. 17, 18 und 19 beschrieben.

Die zweite Ausführungsform der erfindungsgemäßen Be- und/oder Entladevorrichtung 100 weist als Hubeinrichtung 101 einen Hubbalken 111 auf, welcher sich außerhalb der Schienengleise 43 benachbart zum Gleisstrang erstreckt und benachbart zum Gleisbett auf einer bodenfesten Laufbahn 110 aufliegt. Der Hubbalken 111 ist im Querschnitt im Wesentlichen rechteckförmig mit einer Oberseite 112, einer Unterseite 113 und einem ersten freien Ende 114 und einem zweiten freien Ende 115. Im Bereich der Unterseite 113 sind bevorzugt im Bereich der freien Enden Tragrollen 116 angeordnet, so dass der Hubbalken 111 in seiner Längsrichtung, welche parallel zur Gleisrichtung gerichtet ist, auf der Rollbahn 110 leicht verschieblich ist.

Die freien Enden 114, 115 sind spitzwinklig zur Rollbahn 110 ausgebildet, so dass unterseitige Rampenflächen 117 ausgebildet sind, welche zur Laufbahn 110 weisen.

Im Bereich der Rampenflächen 117 sind ebenfalls Tragrollen 116 angeordnet.

Während des Be- und/oder Entladevorgangs ist der Hubbalken 111 etwa mittig bezüglich der Längserstreckung des Waggonaufsatzes 1 unterhalb der Wannenelementschenkel 5 angeordnet, wobei die Positionierung des Waggonaufsatzes 1 zusammen mit dem Waggongestell 40 bezüglich des Hubbalkens 111 durch Positionierung des Waggons 1, 40 durch Verfahren desselben mittels einer Positioniervorrichtung 120 erfolgt. Auf der Oberseite 112 des Hubbalkens 111 sind zweckmäßigerweise Rollelemente 103, welche den Rollelementen 103 am Bahnsteig und auf der Oberseite 45 des Längsträgers 44 entsprechen, angeordnet.

In Längsrichtung zum Hubbalken 111 fluchtend beabstandet zu den freien Enden 114, 115 angeordnet weist die Positioniervorrichtung 120 einen Positionier-/Hubschlitten 121 auf, welcher auf Tragrollen 116 parallel zur Fahrrichtung des Waggons 1, 40 auf der Rollbahn 110 antreibbar verschiebbar ist. Der Positionier-/Hubschlitten 121 ist mit einem beispielsweise pneumatischen hydraulischen oder mechanischen Linearantrieb 122 gekoppelt, wobei der Linearantrieb 122 einendig mit dem Positionier-/Hubschlitten 121 verbunden ist und anderendig an einem bodenfesten Widerlagerbock 123 befestigt ist. Der Positionier-/Hubschlitten 121 weist ein erstes freies Ende 124 auf, welches einem der freien Enden 114, 115 des Hubbalkens 111 zugewandt ist und eine zur Rampenfläche 117 korrespondierende Gegenrampenfläche 125 aufweist. Der Positionier-/Hubschlitten weist eine Oberseite 126 auf, welche in Ruhestellung in etwa fluchtend mit der Oberseite 112 des Hubbalkens verläuft und bezüglich des Niveaus unterhalb des zweiten Wannenelementschenkels eines erfindungsgemäß verwendeten Waggons 1, 40 angeordnet ist.

Im Bereich der Oberseite 126 benachbart zum freien Ende 124 ist um eine Achse 127 schwenkbar ein Fanghakenelement 128 mit einer Hakenbasis 129 und einem Hakenvorsprung 130 angeordnet. Die Hakenbasis 129 ist langgestreckt stegförmig ausgebildet und erstreckt sich von der Achse 127 etwa über ein Drittel des Positionier-/Hubschlittens 121 vom ersten freien Ende 124 weg in Richtung zu einem zweiten freien Ende 131 des Positionier-/Hubschlittens 121, wobei sich der Hakenvorsprung 130 von der Hakenbasis 129 endseitig ein Stück etwa vertikal nach oben erstreckt. In einer Ruhestellung ist das Fanghakenelement 128 derart angeordnet, dass der Hakenvorsprung 130 auf oder etwas unterhalb dem Niveau der Oberseite 126 des Positionier-/Hubschlittens 121 angeordnet ist.

Gegenüberliegend zum Hakenvorsprung 130 ist an der Hakenbasis 129 eine Führungsrolle 132 angeordnet, welche mit einem bodenfesten Auflaufbock 133, der eine Rampenfläche 134 aufweist, zusammenwirkt. Die Rampenfläche 134 des Auflaufbockes 133 ist der Führungsrolle 132 des Fanghakenelements 128 derart zugeordnet, dass in einer Ruhestellung gemäß Fig. 18 der Hakenvorsprung 130 etwa auf dem Niveau der Oberseite 126 des Positionier-/Hubschlittens 121 zu liegen kommt.

Korrespondierend zum Hakenelement 128, insbesondere zu einer Oberkante 135 der Hakenbasis 129, weist das Waggongestell 40 seitlich am Längsträger 44 im Bereich der Drehgestelle 41, 42 eine korrespondierende Tragrolle 136 auf, welche derart angeordnet ist, dass sie mit der Oberkante 135 der Hakenbasis 129 zusammenwirken kann.

Das Fanghakenelement 128 ist zusammen mit der Achse 127 in Längsrichtung des Positionier-/Hubschlittens 121 relativ zu diesem bewegbar und mittels einer Feder- und/oder Dämpfungseinrichtung 137 gedämpft, insbesondere gedämpft vorgespannt bezüglich des Positionier-/Hubschlittens 121 auf dessen Ende 131 zu bewegbar.

Im Folgenden wird die vorbeschriebene Be- und/oder Entladevorrichtung bestehend aus dem Hubbalken 111 und Positioniervorrichtungen 120 hinsichtlich ihrer Funktionsweise näher beschrieben (vgl. Fig. 18 und 19). In einem ersten Schritt wird der Waggon 1, 40 in Längsrichtung bezüglich der Be- und/oder Entladevorrichtung 100 durch definiertes Anhalten der Zuglok an einem vorbestimmten Ort grob positioniert. Nach dem Stillstand der Waggons 1, 40 wird der Linearantrieb 122 der Positionier-/Hubschlitten 121 betätigt, so dass der Positionier-/Hubschlitten 121 von seiner Ausgangsposition gemäß Fig. 18 in Richtung auf den Hubbalken 111 zu bewegt wird. Hierbei nähern sich zum einen die Gegenrampenflächen 125 und die Rampenflächen 117 an, zum anderen läuft die Führungsrolle 132 des Fanghakenelements 128 auf der Rampenfläche 134 des Auflaufbocks 133 auf, so dass das Fanghakenelement 128, insbesondere der Hakenvorsprung 130 und ein Teil der Oberkante 135 der Hakenbasis 129 auf ein Niveau oberhalb der Oberseite 126 des Positionier-/Hubschlittens 121 angehoben wird. Somit überragt also ein Teil der Oberkante 135 und der Hakenvorsprung 130 den Positionier-/Hubschlitten 121. In dieser Stellung verharrt das Fanghakenelement 128 relativ zum Positionier-/Hubschlitten 121, was dadurch erreicht wird, dass die Führungsrolle 132 auf einer horizontalen Oberkante 138 des Auflaufbocks 133 abrollt. Nach einer bestimmten Verfahrstrecke der Positioniervorrichtung 120 gelangt die Oberkante 135 des Fanghakenelements 128 mit der waggonfesten Tragrolle 136 in Kontakt, wobei die Oberkante 135 des Fanghakenelements 128 eine schräge Rampe für die Tragrolle 136 bildet. Durch gleichzeitiges Aufeinanderzufahren zweier Positioniervorrichtungen 120 je Waggonseite wird somit der mit relativ großem Spiel durch die Waggonkupplungen geführte Waggon in Längsrichtung mittig bezüglich der Positioniervorrichtungen 120 fein positioniert. Außerdem wird durch die gleichzeitige Betätigung aller vier Positioniervorrichtungen 120 an jedem "Eck" eines Waggons 1, 40 erreicht, dass über die Tragrollen 136 der Waggon 1, 40 in seiner Längs- und auch in seiner Querrichtung horizontal auf gleiches Niveau gebracht wird, d. h. in eine definierte horizontale Höhenlage verbringbar ist. Dies ist insbesondere bei ungleichförmiger Beladung des Waggonaufsatzes 1 erforderlich, da durch ungleichförmige Gewichtsverteilung ein unterschiedliches Einfedern der Drehgestelle ein unterschiedliches Höhenniveau der vier Tragrollen 136 am Waggon zur Folge haben kann.

Im Ergebnis wird somit ein Waggon 1, 40 durch die Betätigung der Positioniervorrichtungen 120 sowohl in Längsrichtung bezüglich der Gleise 43 als auch in Höhenrichtung definiert vorpositioniert, wenn die Tragrollen 136 auf der Oberkante 135 aufliegen und am Hakenvorsprung 130 anschlagen.

Nach erfolgter Längs- und Höhenpositionierung wird der Positionier-/Hubschlitten 121 weiter in Richtung auf den Hubbalken 111 zubewegt, wodurch das Fanghakenelement 128 durch die Feder-/Dämpfereinheit 137 vorgespannt an den Tragrollen 136 anliegend relativ zum Positionier-/Hubschlitten 121 auf das zweite freie Ende 131 zubewegt wird. Nach einer gewissen weiteren Fahrstrecke des Positionier-/Hubschlittens 121 trifft die Gegenrampenfläche 125 auf die Rollelemente 116 der Rampenfläche 117, wobei der Hubbalken 111 durch den Positionier-/Hubschlitten 121 nach Art eines Unterfahrkeiles aus seiner Ruheposition angehoben wird, bis die Rollelemente 103 auf der Oberseite 112 des Hubbalkens 111 die Unterseite der zweiten Wannenelementschenkel 5 berühren. Die Gegenrampenfläche 125 und die Rampenfläche 117 sind in ihrer Schräge und Länge derart abgestimmt, dass bei vollständigem oder nahezu vollständigem Unterfahren des Hubbalkens 111 durch die Positionier-/Hubschlitten 121 der Waggonaufsatz 1 mit seiner Unterseite bis auf ein Niveau des Bahnsteigs 140 (vgl. Fig. 19) anhebbar ist. Hat der waggonaufsatz 1 das gewünschte Bahnsteigniveau erreicht, so wird der Linearantrieb 122 der Positionier-/Hubschlitten 121 angehalten, so dass mittels geeigneter Vorrichtungen der Waggonaufsatz 1 seitlich vom Waggongestell 40 wegbewegbar und auf den Bahnsteig 140 aufsetzbar ist. Gemäß einer besonders bevorzugten Ausführungsform sind zumindest einige der Rollelemente 103, welche auf der Oberseite 112 des Hubbalkens 111 angeordnet sind, mittels geeigneter Antriebseinrichtungen 145 antreibbar, so dass der Waggonaufsatz 1 motorisch in eine Querbewegung vom Waggongestell 40 wegversetzbar ist.

Ebenso können selbstverständlich einzelne oder mehrere der Rollelemente 103 bahnsteigseitig angetrieben sein.

Weiterhin besteht die Möglichkeit, bei Vorhandensein eines Waggongestells 40 ein reines Queren eines Waggonaufsatzes 1 von einer Bahnsteigseite über die Hubbalken 111, das Waggongestell 40 hinüber zur anderen Bahnsteigseite zu bewerkstelligen. Besonders vorteilhaft bei den erfindungsgemäß verwendeten Waggonaufsätzen ist, dass diese sowohl für einen oben dargestellten Querbe- und/oder Querentladevorgang geeignet sind, als auch aufgrund der Greifkanten 26 für eine Verladung in konventioneller Art mittels Portalkränen oder Hubstaplern geeignet sind.

Es liegt im Bereich der Erfindung, die oben beschriebenen Hubeinrichtungen durch andere geeignete Hubeinrichtungen, beispielsweise Hebelanordnungen oder Scherenanordnungen, zu ersetzen. Die Antriebe dieser Hubvorrichtungen können außerdem mittels Zylinderstangen, Zahnstangen, Schraubenstangen, Riemen, Zahnriemen oder sonstigen Getrieben oder unverzahnten Zug-/Druckstangenkonstruktionen erreicht werden.

Nachfolgend wird noch eine dritte Ausführungsform der Be- und/oder Entladevorrichtung beschrieben, mit Hubeinrichtungen, die Hubbalken 221 aufweisen, die quer zur Längsrichtung der Gleise eines Gleiskörpers 243 und bevorzugt horizontal ausgerichtet sind. Die Hubbalken 221 sind insbesondere verschiebbar ausgebildet. Vorzugsweise greifen die querverschobenen Hubbalken 221 in den Waggon 1, 40 ein. Der Waggon 1, 40 ist mittels der Hubbalken 221 zentrierbar.

Bei einer Ausführungsform bilden gegenüberliegende Hubbalken 221, die aufeinander zu verschoben sind, allein oder im Zusammenwirken mit dem Waggon 1, 40 eine Brücke. Auf der mit der Brücke ist der Waggonaufsatz 1 verschiebbar, so dass beispielsweise ein Waggonaufsatz 1 auf der Brücke den Gleiskörper 243 überqueren kann.

Bei einer bevorzugten Ausführungsform bewirken die Hubeinrichtungen nur einen geringen Hub von beispielsweise nur wenigen Zentimetern, wenn die Hubeinrichtungen in eine Arbeitsposition ausgefahren werden. Der geringe Hub kompensiert beispielsweise mechanische Toleranzen und/oder Unterschiede der Einfederung der Drehgestelle 46 des Waggons 1, 40.

Die Hubbalken 221 sind bei einer Ausführungsform horizontal angeordnet. Die Hubbalken 221 sind quer zu der Schienenlängsrichtung des Gleises orientiert. In einer Ruhestellung sind die Hubbalken 221 eingefahren. In der Ruhestellung befinden sich die Hubbalken 221 außerhalb eines Bereiches des Gleises, das durch gültige Profilgrenzen für den Schienengüterverkehr vorgegeben ist.

Die Hubbalken 221 weisen an ihren freien Enden jeweils eine Rampenfläche 225 auf, die zum Eingriff mit einer zugeordneten Gegenfläche 217, die am Waggonlängsträger 244 ausgebildet ist, vorgesehen ist. Wenn die Rampenfläche 225 des Hubbalkens 221 mit der zugeordneten Gegenfläche 217 des Waggonlängsträgers 244 in Eingriff gebracht ist, ist der Waggonlängsträger 244 vorzugsweise horizontal und vertikal und in Längsrichtung zentriert. Der Waggonlängsträger 244 ist besonders bevorzugt durch das Zusammenwirken der Hubbalken 221 mit dem Waggonlängsträger 244 arretierbar.

Die Hubbalken 221 sind für eine horizontale Aus/Einfahrbewegung eingerichtet. Die Hubbalken 221 werden in die Arbeitsstellung überführt, indem sie auf Tragrollen, insbesondere in bahnsteigseitig festen Laufbahnen, horizontal und/oder quer zur Schienenlängsrichtung bewegt werden. Am Waggon 1, 40, insbesondere am Waggonlängsträger 244, sind die Gegenrampenflächen 217 so ausgebildet, das die Gegenrampenflächen 217 den Rampenflächen 225 der Hubbalken 221 entsprechen. Die horizontale Ausfahrbewegung erzeugt den geringen Hub im Zusammenwirken von Rampenflächen 225 der Hubbalken 221 und Gegenrampenflächen 217 am Waggon 1, 40.

Bevorzugt sind die Hubbalken 221 derart ausgebildet, dass die Hubbalken 221 beim Zusammenwirken ihrer Rampenflächen 225 mit den Gegenrampenflächen 217 der Waggonlängsträger 244 eine Ebene bilden, in der Auflageflächen 212 der Hubbalken 221 sowie die Auflageflächen des Waggonlängsträgers 244 angeordnet sind. Die Auflageflächen 212 der Hubbalken 221 fluchten mit der Auflagefläche des Waggonlängsträgers 244. Bevorzugt liegt die Ebene auf derselben Höhe wie die Entladefläche des Bahnsteigs 240 oder etwas darunter. Ganz besonders bevorzugt sind die Hubbalken 221 derart ausgebildet, dass Hubbalken 221 von Hubeinrichtungen 201, die beidseitig eines Gleiskörpers 243 angeordnet sind, derart ausfahrbar sind, dass die Auflageflächen 212 der Hubbalken 221 eine geschlossene Laufbahn bilden, auf der ein Waggonaufsatz 1 von einer ersten Entladefläche auf einer ersten Seite des Gleiskörpers 243 über dem Gleis auf eine zweite Entladefläche auf der anderen Seite des Gleiskörpers 243 verschiebbar ist.

Bei einer Ausführungsform erfolgt die Bewegung der Hubbalken 221 jeweils vor Beginn einer Be- und/oder Entladephase. Wenn die Hubbalken 221 in die Arbeitsstellung ausgefahren sind, entspricht die Höhe einer nach oben weisenden Auflagefläche des Hubbalkens 221 der Höhe einer nach unten weisenden Aufstandfläche des Waggonaufsatzes 1, der auf dem Waggonlängsträger 244 angeordnet ist.

Der Waggonaufsatz 1 wird bei einer Ausführungsform mittels der Hubeinrichtungen mit Energie und/oder Signalen versorgt. Bei einer Ausführungsform der Erfindung weisen die Hubeinrichtungen Anschlüsse zum Zuführen von mechanischer, elektrischer, pneumatischer oder hydraulischer Antriebsenergie auf. Bevorzugt weisen die Hubeinrichtungen Anschlüsse zum Übertragen von elektrischen, elektronischen und/oder optischen und/oder mechanischen Signalen auf. Insbesondere sind die Anschlüsse zum Anschluss an entsprechende Gegenanschlüsse an den Waggonaufsätzen 1 ausgebildet. Bevorzugt sind die Anschlüsse über die Hubbalken 221 mit den Waggonaufsätzen 1 verbindbar. Ganz besonders bevorzugt sind die Anschlüsse als Kupplungselemente ausgebildet, die auf dem Hubbalken 221 verschiebbar gelagert sind. Beispielsweise werden die verschiebbar gelagerten Kupplungselemente auf den Hubbalken zum Waggon 1, 40 hin verfahren, wenn der Waggon 1, 40 von den Hubbalken 221 zentriert und/oder arretiert ist. Die an den Waggon 1, 40 verfahrenen Kupplungselemente sind bei einer Ausführungsform an entsprechend ausgebildete Gegenkupplungselemente der Waggonaufsätze 1 andockbar.

Bei einer Ausführungsform weist die Be- und/oder Entladevorrichtung eine Einrichtung zum Ausbilden eines Tragfilms auf. Der Tragfilm ist hierbei insbesondere als Fluidtragfilm ausgebildet. Die Einrichtung ist auf einer Auflagefläche für den Waggonaufsatz 1 ausbildbar, wobei sich die Auflagefläche auf der Be- und/oder Entladevorrichtung und auf den Waggonaufsatz 1 erstreckt. Bei dieser Ausführungsform ist der Waggonaufsatz 1 auf dem Tragfilm über dem Waggongestell und/oder der Be- und/oder Entladevorrichtung besonders reibungsarm bewegbar.

Sämtliche angesprochenen Antriebseinheiten können elektrisch, elektromagnetisch, hydraulisch oder pneumatisch ausgebildet sein. Weiterhin ist es zweckmäßig, die Antriebsenergie für alle Antriebe der erfindungsgemäßen Be- und/oder Entladevorrichtung zentral zu erzeugen und bereitzustellen. Die Antriebsenergie aller Be- und/oder Entladevorrichtungen kann von Verladestationen mit einer oder mehreren Verladestellen zentral erzeugt werden. Besonders vorteilhaft bei dem erfindungsgemäßen Be- und/oder Entladeverfahren ist, dass das horizontale Nivellieren der Waggons 1, 40 unmittelbar vor dem eigentlichen Anhebevorgang des Waggonaufsatzes 1 erfolgt, wobei das Nivellieren in einer ersten Phase und das Anheben in einer zweiten Phase einer gleichförmigen Bewegung der Hubvorrichtung erfolgt.

Weiterhin ist vorteilhaft, dass während des Anhub- und Entladevorganges die Waggons in Längsrichtung arretiert sind und nach Abschluss eines Beladevorgangs durch Rückbewegung der Be- und/oder Entladevorrichtung in deren Ausgangsstelle automatisch wieder freigegeben werden. Zweckmäßigerweise wird die Steuerung und die Erfassung der zur Steuerung der Anlage notwendigen Signale vom Bahnsteig aus bewerkstelligt. Eine zugseitige Ausführung ist jedoch ebenfalls denkbar.

Bei einer Ausführungsform der Erfindung weisen die Hubvorrichtungen 201 Anschlüsse zum Zuführen von mechanischer, elektrischer, pneumatischer oder hydraulischer Antriebsenergie auf. Bevorzugt weisen die Hubvorrichtungen Anschlüsse zum Übertragen von elektrischen, elektronischen und/oder optischen und/oder mechanischen Signalen auf. Insbesondere sind die Anschlüsse zum Anschluss an entsprechende Gegenanschlüsse an den Waggonaufsätzen 1 ausgebildet. Bevorzugt sind die Anschlüsse über die Hubbalken 221 mit den Waggonaufsätzen 1 verbindbar.

Ganz besonders bevorzugt sind die Anschlüsse als Kupplungselemente 222 ausgebildet, die auf dem Hubbalken 221 verschiebbar gelagert sind. Beispielsweise werden die verschiebbar gelagerten Kupplungselemente auf den Hubbalken 221 zum Waggon 1, 40 hin verfahren, wenn der Waggon 1, 40 von den Hubbalken 221 zentriert und/oder arretiert ist. Die an den Waggon 1, 40 verfahrenen Kupplungselemente sind bei einer Ausführungsform an entsprechend ausgebildete Gegenkupplungselemente der Waggonaufsätze 1 andockbar.

Bei einer Ausführungsform ist die Be- und/oder Entladevorrichtung dazu eingerichtet, dass Energie und/oder Signale, die pneumatisch, elektrisch, hydraulisch und/oder mechanisch an die Waggonaufsätze 1 übertragen werden, Bewegungen der Klappen 13 der Waggonaufsätze 1 und/oder der Auflagemittel für Container und Sattelauflieger 30 (Wechselbrücken) steuern, antreiben oder die Waggonaufsätze 1 verriegeln oder entriegeln. Beispielsweise sind auf den Hubbalken 221 bewegliche und durch elektrische oder fluidtechnische Stellmotoren angetriebene Kupplungen 222 dazu eingerichtet, an die Waggonaufsätze 1 anzudocken und Energie und/oder Signale an die Waggonaufsätze 1 zu führen. Bevorzugt sind die mittels der Stellmotoren angetriebenen Kupplungen 222 ferner dazu eingerichtet, die Waggonaufsätze 1 über die Hubbalken 221 auf die Entladefläche zu verschieben. Bei einer Ausführungsform sind die Kupplungen 222 dazu eingerichtet, den Fluidfilm auf der Be- und/oder Entladefläche bzw. unter dem Waggonaufsatz 1 zu erzeugen.

Besonders bevorzugt weisen die auf dem Hubbalken 221 beweglich angeordneten Kupplungen 222 jeweils eine Steuereinheit auf, die eine zentrale Verarbeitungseinheit, ein Eingabemittel, z.B. eine Tastatur und/oder ein Kartenlesegerät, sowie eine Ausgabeeinheit, z.B. mit einer optischen und/oder akustischen Anzeige, aufweisen. Die Steuereinheit ermöglicht etwa eine Bedienung durch Bedienpersonal, z.B. Fahrer der LKW 250, und eine individuelle Steuerung und Rückmeldung des Be- und/oder Entladevorgangs. Bei einer bevorzugten Ausführungsform sind die beweglichen Kupplungen 222 über ein Netzwerk, insbesondere ein stationäres Netzwerk mit einem zentralen Rechner verbunden, der z.B. für eine automatische Steuerung des Güterumschlags eingerichtet ist.

Bei einer Ausführungsform weist die Be- und/oder Entladevorrichtung eine Heizung auf, die zum Heizen der Oberfläche der Hubbalken 221 und/oder der Unterseite der Waggonaufsätze 1 sowie vorzugsweise der Oberseite der Waggonlängsträger 44 eingerichtet ist. Beispielsweise ist die Heizeinrichtung als elektrische Heizung eingerichtet. Bei einer Ausführungsform ist die Heizeinrichtung zum Erzeugen warmer Druckluft ausgebildet. Bei einer weiteren Ausführungsform weist die Be- und/oder Entladevorrichtung eine mechanische Reinigungsvorrichtung auf. Die Heizeinrichtung und/oder die Reinigungsvorrichtung ist dazu vorgesehen, die Be- und/oder Entladevorrichtung sauber, trocken und eisfrei zu halten.

Im Folgenden wird anhand der Figuren der Ablauf des erfindungsgemäßen Verfahrens erläutert.

In einer Ausgangssituation fährt ein Waggon 1, 40 in einen entsprechenden Be- und Entladebereich eines Bahnhofes ein (Fig. 20) und überfährt dabei Hubbalken 111, welche sich in ihrer Ausgangsstellung auf der Laufbahn 110 befinden.

In einem ersten Schritt, welcher figürlich nicht gezeigt ist, erfolgt die oben beschriebene Positionierung in Längs- und Höhenrichtung durch die Positionier-/Hubschlitten 121. Die Positionierung erfolgt vorzugsweise gleichzeitig und parallel für alle Waggons des Zugverbands.

Anschließend werden die Hubbalken 111 durch die Positionier-/Hubschlitten 121 von der Laufbahn 110 abgehoben, bis sie die Unterseite der zweiten Wannenelementschenkel 5 erreichen. Durch Weiterbewegung der Positionier-/Hubschlitten 121 wird eine teilangehobene Position des Waggonaufsatzes 1 gemäß Fig. 21 erreicht.

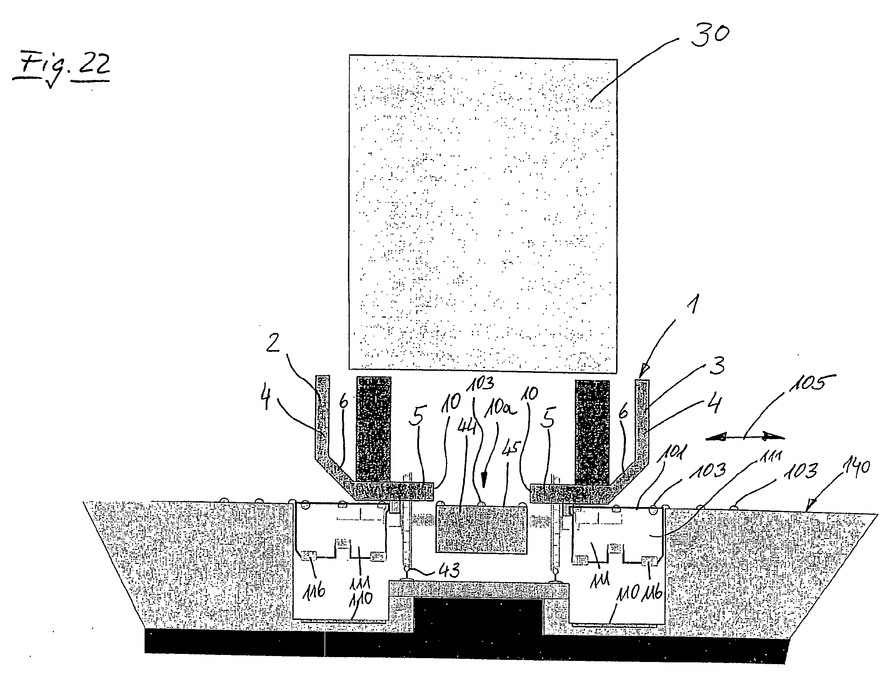

In einer Endstellung der Positionier-/Hubschlitten 121 befinden sich die Hubbalken 111 auf einem Bahnsteigniveau des Bahnsteiges 140 (Fig. 22), so dass die Rollelemente 103 des Bahnsteigs 140, der Hubbalken 111 und des Längsträgers 44 eine Rollebene bilden, wobei die maximalen Abstände zwischen Rollelementen 103 in Querrichtung kleiner sind als die Erstreckung der zweiten Wannenelementschenkel 5 in Querrichtung, so dass sichergestellt ist, dass der Waggonaufsatz 1 immer kippsicher geführt ist.

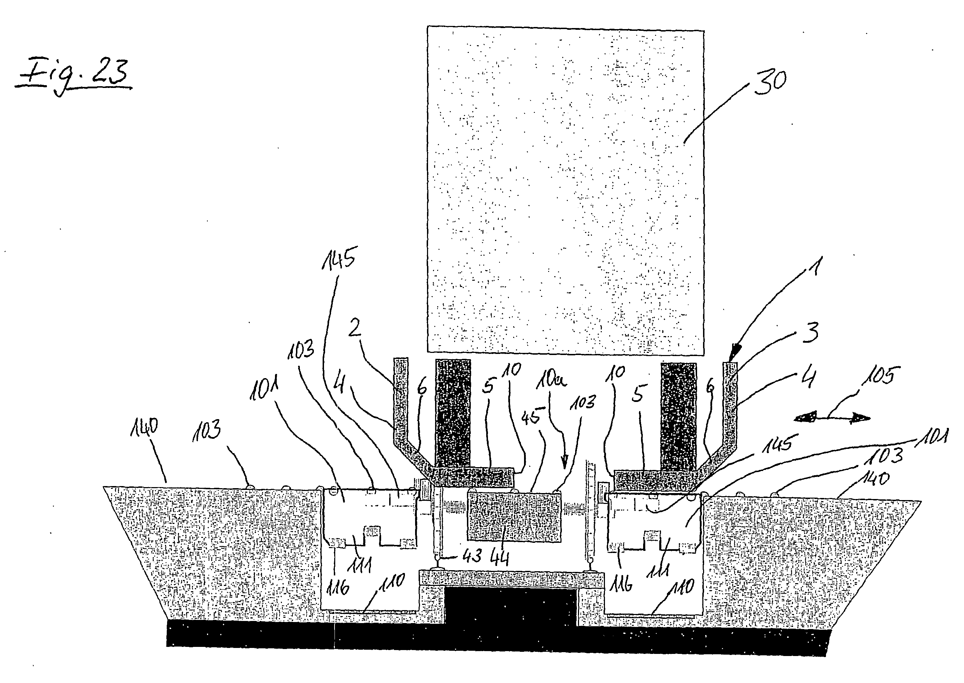

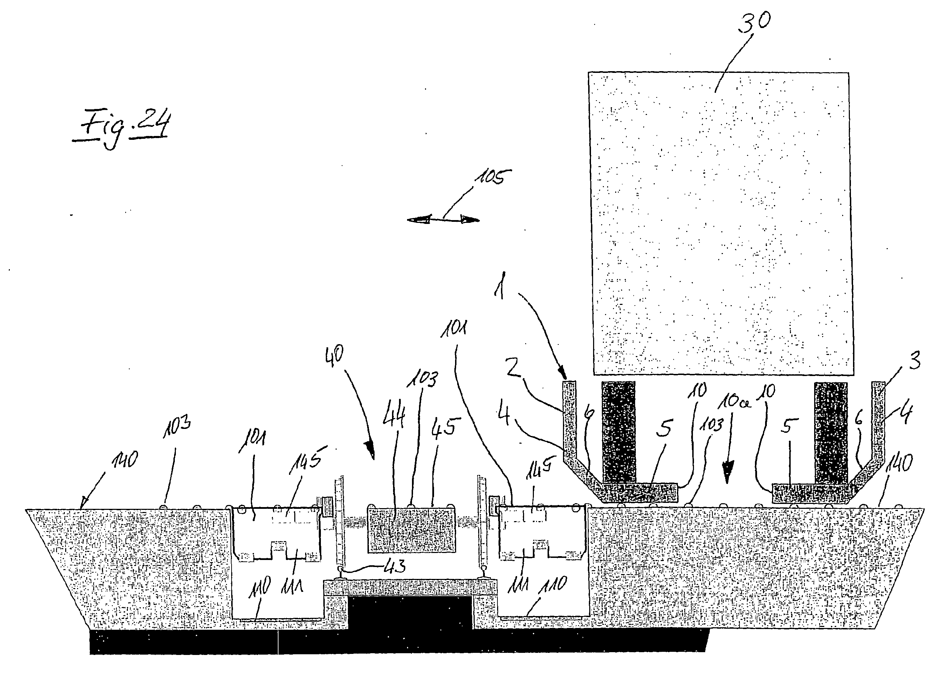

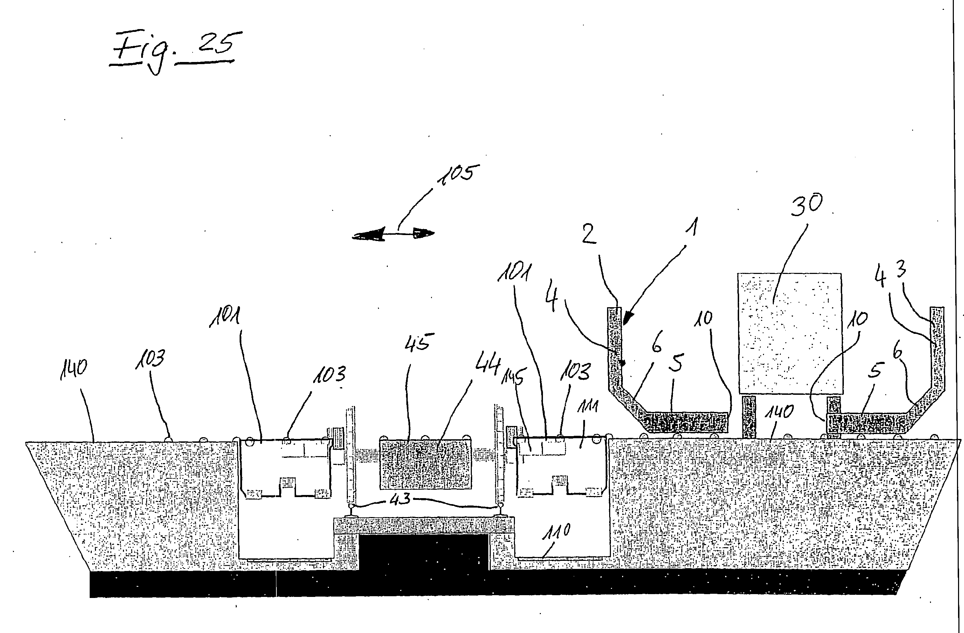

Nach Erreichen des Bahnsteigniveaus kann über die Antriebe 145 ein seitliches Versetzen der Waggonaufsätze 1 erfolgen (Fig. 23). Nach dem Versetzvorgang befindet sich der Waggonaufsatz 1 zusammen mit der Ladung, z. B. einem LKW-Sattelauflieger 30, vollständig auf dem Bahnsteig 140 (Fig. 24). Das Waggongestell 40 ist zur Aufnahme eines anderen Waggonaufsatzes 1 bereit. Nach dem Abstellen der "aussteigenden" Waggonaufsätze 1 auf dem Bahnsteig 140 (Fig. 25) bzw. dem Beladen der Waggongestelle 40 mit weiteren Waggonaufsätzen 1 kann der Zug wieder auslaufen und auf dem Bahnsteig 140 werden die Klappen 13 und die Auffahrrampenelemente 21 auf dem Bahnsteigboden ausgelegt, so dass eine LKW-Zugmaschine (nicht gezeigt) den LKW-Sattelauflieger 30 ankuppeln kann und vom Waggonaufsatz 1 abziehen kann. Dieser Vorgang ist ebenso wie das Beladen des Waggonaufsatzes 1 mit beliebigem Ladegut von der Anwesenheit eines Waggons oder Zugverbandes unabhängig.

Mit dem erfindungsgemäßen Verfahren und der erfindungsgemäßen Vorrichtung ist es in besonders vorteilhafter Weise möglich, die große Mehrheit der LKW-Anhänger (Trailer bzw. Sattelauflieger, oder Anhänger zur Aufnahme von Containern oder Wechselbrücken), welche nicht für eine Verladung per Kran zugelassen sind, so verladen zu können, dass die Fahrer oder die Zugmaschine während des Verladevorgangs nicht vor Ort sein müssen. Hierdurch entstehen niedrige Speditions- und Transportkosten, da die zugmaschinen und deren Fahrer unmittelbar nach dem Abstellen der Auflieger den Bahnhof wieder verlassen können. Vorteilhaft ist weiterhin, dass die Be- und Entladung der Waggons 1, 40 zeitgleich mit der Be- und Entladung weiterer oder aller Waggons eines Zugverbandes geschehen kann. Der Umschlag aller auf den Waggonaufsätzen befestigten oder der Umschlag eines Teils der Ladegüter oder der Ein- oder Umstieg eines einzelnen Ladegutes ist somit in der gleichen Zeitspanne von in etwa 5 bis 10 Minuten möglich. So kann ein ganzer Zug mit z.B. 30 Sattelaufliegern in dieser kurzen Zeit entladen und mit 30 anderen Sattelaufliegern beladen werden. Gerade diese Parallelität ermöglicht einen signifikanten Vorteil der Erfindung gegenüber einem konventionell sequentiell arbeitenden Terminal-Kran, welcher für die Ent- und Beladung einer solchen Zugeinheit zwischen zwei und drei Stunden benötigen würde.

Im Folgenden wird der Ablauf des Verladeverfahrens mit der oben beschriebenen dritten Ausführungsform der erfindungsgemäßen Be- und Entladevorrichtung erläutert, bei der die Hub- und Verschiebeeinrichtungen 201 bahnsteigfest angeordnet sind.

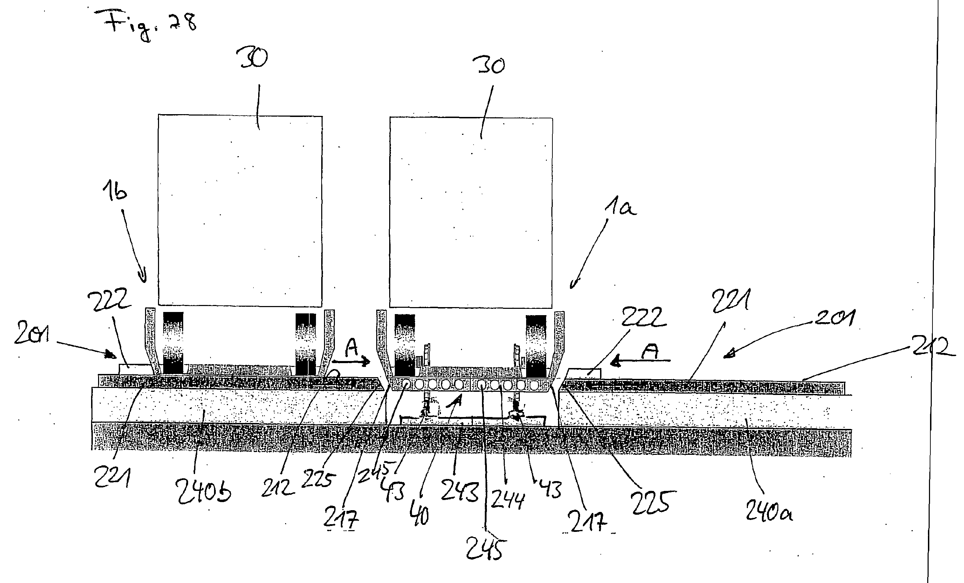

Ein Waggon 1a, 40 wird in den Be- und Entladebereich zwischen die beidseitig des Gleiskörpers 243 angeordneten Hub- und Verschiebeinrichtungen 201 eingefahren. Der Waggon 1a, 40 hält neben einem zu verladenden Waggonaufsatz 1b. Die Hubbalken 221 werden quer zu den Gleisen des Gleiskörpers 243 aus der Ruhestellung horizontal in die Arbeitsstellung ausgefahren (Fig. 28, Pfeile A). Die Rampenflächen 225 an den freien Enden der Hubbalken treffen auf die Gegenrampenflächen 217 am Waggon 1a, 40. Die Rampenflächen 225 wirken mit den Gegenrampenflächen 217 derart zusammen, dass der Waggon 1a, 40 arretiert und der Waggonaufsatz 1a leicht angehoben wird, wobei im wesentlichen mechanische Toleranzen und Unterschiede in der Einfederung des Waggons 1, 40 kompensiert werden.

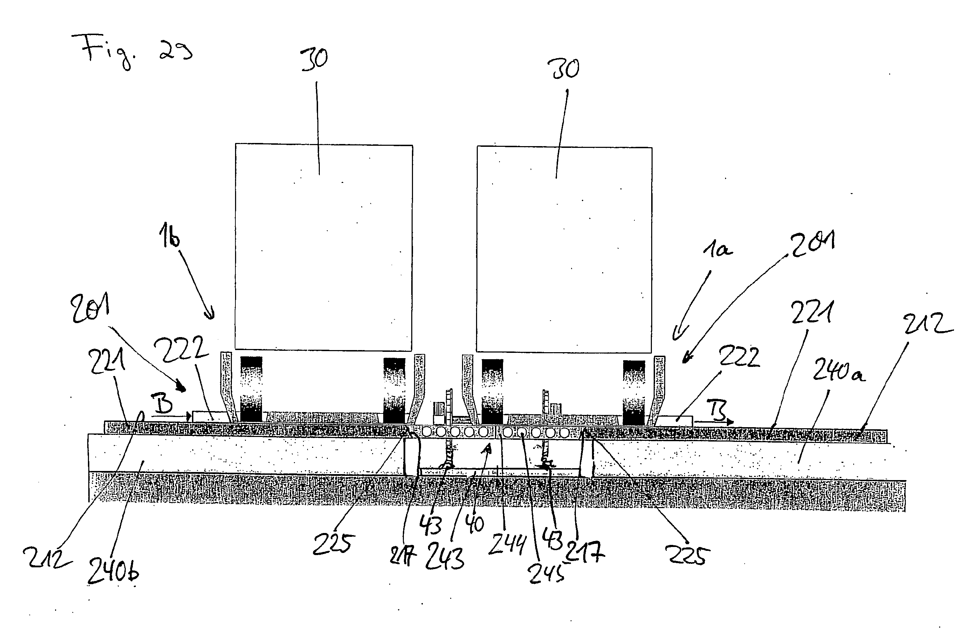

Die Kupplungen 222 werden an die Waggonaufsätze 1a, 1b auf dem Bahnsteig 240b bzw. auf dem Waggongestell 40 angedockt. Die Kupplung 222 verschieben die Waggonaufsätze 1a, 1b quer (Fig. 29, Pfeile B), so dass der Waggonaufsatz 1a von dem Waggongestell 40 auf den Bahnsteig 240a gelangt, während der Waggonaufsatz 1b von dem Bahnsteig 240b auf das Waggongestell 40 gelangt.

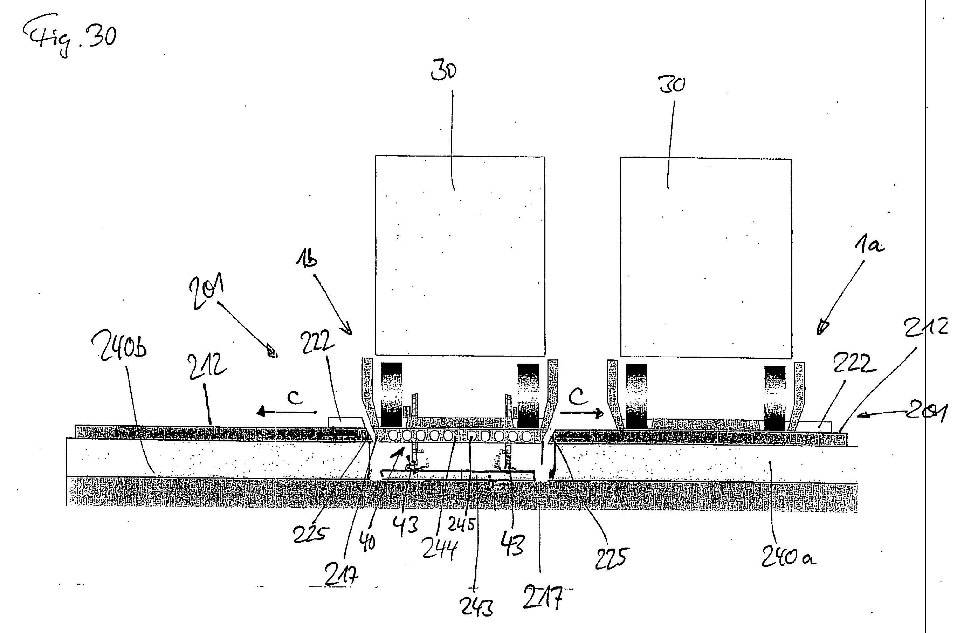

Die Hubbalken 221 werden aus der Arbeitsstellung in die Ruhestellung eingefahren (Fig. 30, Pfeile C). Der Waggon 1b, 40 wird aus dem Be- und Entladebereich herausgefahren.

Bei einer Ausführungsform des erfindungsgemäßen Verfahrens werden ein oder mehrere Waggonaufsätze 1 eines Zuges gemeinsam mit ggf. darauf befindlicher Ladung 30 von dem oder den Waggons 1, 40 auf eine Entladefläche 140 bewegt. Dies geschieht z.B. mittels der gleisbettgebundener Hub- und Verschiebeeinrichtungen der ersten oder der zweiten Ausführungsform.

Direkt im Anschluss oder, bei einer anderen Ausführungsform des Verfahrens, zu einem späteren Zeitpunkt, werden die Waggonaufsätze 1 auf einen weiteren Waggon bewegt, der bevorzugt wie ein erfindungsgemäß verwendeter Waggon ausgebildet ist. Der weitere Waggon ist beispielsweise auf einem Gleis angeordnet, das an die Entladefläche angrenzt. Bei einer Ausführungsform ist der weitere Waggon auf demselben Gleis wie der erste Waggon angeordnet. Vorzugsweise ist der weitere Waggon mittels weiterer bzw. derselben Hub- und Verschiebeeinrichtungen arretiert. Somit ist ein Wechsel der Waggonaufsätze mitsamt ggf. darauf befindlicher Ladung von einem ersten Zug auf einen zweiten Zug besonders weitgehend automatisiert möglich. Eine bevorzugte Anwendung dieser Ausführungsform ist ein Spurwechsel eines Zuges. Unter "Spurwechsel" ist gemäß der Erfindung zu verstehen, dass die Ladung des Zuges mit einer ersten Spurweite auf einen zweiten Zug mit einer zweiten Spurweite umgeladen wird, die von der ersten Spurweite verschieden ist. Beispielsweise wird mit dem Verfahren gemäß der Erfindung ein Spurwechsel eines Zuges an der Grenze der Europäischen Union nach Osteuropa vorgenommen. Mit dem erfindungsgemäßen Verfahren kann auch ein Spurwechsel an der Grenze von Frankreich nach Spanien vorgenommen werden. Bevorzugt erfolgt der Spurwechsel eines oder mehrerer, insbesondere sämtlicher Waggonaufsätze des ersten Zuges zu derselben Zeit oder zumindest zeitlich überlappend. Ein Spurwechsel kann jedoch auch Waggon für Waggon individuell und zeitlich nicht überlappend durchgeführt werden.

Außerdem können neben den Sattelaufliegern ebenso Container oder anderes Ladegut, etwa Stacks, Rollen, Schüttgut, Stückgut, Sondertransportgut, Luftfrachtpaletten bzw. -container, Wechselpritschen oder Baumstämme auf diese Art und Weise effizient und schnell während eines kurzen Zughaltes auf Schienenwaggons verladen werden.

Die Erfindung ist nicht auf die dargestellten Ausführungsbeispiele beschränkt, sondern umfasst alle im Sinne der Erfindung gleich wirkenden Ausgestaltungen. Denkbar wäre z.B., dass die Anhubvorrichtung derart ausgestaltet ist, dass nur ein gleichzeitiges Anheben des Waggonaufsatzes an mehreren Punkten nicht dargestellte Sicherheitsklinken entriegelt. Diese sind hierbei am Längsträger 44 des Waggons angeordnet und greifen derart in den Waggonaufsatz 1 ein, dass dieser während der Fahrt sicher mit dem Längsträger verbunden ist. Die Anhubvorrichtung kann aber auch Sensoren aufweisen, die eine korrekte Verriegelung der Sicherheitsklinken redundant erkennen. Somit wäre bei einer Freigabe zur Zugausfahrt gewährleistet, dass die Waggonaufsätze sicher mit den Längsträgern verbunden sind.

## Patentansprüche

1. Verfahren zum Be- und Entladen von Schienenwaggons, wobei zumindest ein Waggon, bestehend aus einem Waggongestell (40) und einem Waggonaufsatz (1), in eine Be- und Entladeposition verbracht wird und:
a) beim Entladen der Waggonaufsatz (1) bezüglich des Waggongestells mittels. Hubvorrichtungen (101, 111) auf ein Entladeniveau angehoben wird, nach dem Anheben der Waggonaufsatz (1) auf dem Entladeniveau in einer Richtung quer zu einer Waggonlängsebene (7) bewegt wird, bis der Waggonaufsatz (1) vollständig auf einer Be- und Entladefläche (140) aufsitzt und
b) beim Beladen der Waggonaufsatz (1) von der Be- und Entladefläche (140) quer zur Waggonlängsebene (7) bis oberhalb des Waggongestells (40) bewegt wird, der Waggonaufsatz (1) mittels der Hubvorrichtungen (101, 111) auf das in Be- und Entladeposition befindliche Waggongestell (40) abgesenkt wird,
**dadurch gekennzeichnet,**
**daß** das Anheben und das Absenken der Waggonaufsätze (1) mittels gleisbettgebundener oder bahnsteigfester Hubvorrichtungen (101, 111) erfolgt.

2. Verfahren nach Anspruch 1,
**dadurch gekennzeichnet,**
**daß** der Waggon (1, 40) mittels einer Zuglock für das Be- und Entladen grob vorpositioniert wird und mittels einer Positioniervorrichtung (121) in Be- und Entladeposition fein positioniert wird.

3. Verfahren nach Anspruch 1 und/oder 2,
**dadurch gekennzeichnet,**
**daß** vor dem Anheben des Waggonaufsatzes (1) eine horizontale Nivellierung des Waggons (1, 40) in Längs- und Querrichtung erfolgt.

4. Verfahren nach einem oder mehreren der vorangegangenen Ansprüche,
**dadurch gekennzeichnet,**
**daß** die horizontale Nivellierung mittels der Positioniervorrichtung (120), welche auf das Waggongestell (40) einwirkt, erfolgt.

5. Verfahren nach einem oder mehreren der vorangegangenen Ansprüche,
**dadurch gekennzeichnet,**
**daß** der Waggonaufsatz (1) auf Bahnsteigniveau (140) angehoben wird.

6. Verfahren nach einem oder mehreren der vorangegangenen Ansprüche,
**dadurch gekennzeichnet,**
**daß** das Waggongestell (40) während des Be- und Entladevorganges in Fahrtrichtung arretiert wird.

7. Verfahren nach einem oder mehreren der vorangegangenen Ansprüche,
**dadurch gekennzeichnet,**
**daß** das Be- und Entladen des Waggonaufsatzes auf dem Bahnsteig (140) unabhängig von der Anwesenheit eines Waggongestells (40) erfolgt.

8. Verfahren nach einem oder mehreren der vorangegangenen Ansprüche,
**dadurch gekennzeichnet,**
**daß** der Waggonaufsatz während des gesamten Be- und Entladevorgangs kippsicher geführt wird.

9. Verfahren nach einem oder mehreren der vorangegangenen Ansprüche,
**dadurch gekennzeichnet,**
**daß** das horizontale Nivellieren der Waggons (1, 40) unmittelbar vor dem eigentlichen Anhebevorgang des Waggonaufsatzes (1) erfolgt, wobei das Nivellieren in einer ersten Phase und das Anheben in einer zweiten Phase einer gleichförmigen Bewegung der Hubvorrichtung (111) erfolgt.

10. Verfahren nach einem oder mehreren der vorangegangenen Ansprüche,
**dadurch gekennzeichnet,**
**daß** die Waggongestelle nach Abschluß des Be- und Entladevorgangs automatisch wieder in Fahrtrichtung freigegeben werden.

11. Verfahren nach einem der vorstehenden Ansprüche, wobei der erste Waggon in die Entladeposition verbracht wird und ein zweiter Waggon in die Beladeposition verbracht wird,
**gekennzeichnet durch** die Schritte:
- seitliches Abschieben des Waggonaufsatzes (1) von dem Waggongestell des ersten Waggons, und
- seitliches Aufschieben des Waggonaufsatzes auf das Waggongestell des zweiten Waggons.

12. Verfahren nach Anspruch 11,
**gekennzeichnet durch** den Schritt:
- Anordnen des zweiten Waggongestells neben dem ersten Waggongestell derart, dass der Waggonaufsatz auf das zweite Waggongestell aufgeschoben wird, während der Waggonaufsatz von dem ersten Waggongestell abgeschoben wird.

13. Verfahren zum Umladen von Ladung von einem ersten Zug auf einen zweiten Zug an einer Ent- und Beladeposition mit gleisbettgebundenen oder bahnsteigfesten Hubvorrichtungen (101, 111; 201, 221) mit den Schritten von Anspruch 1 und mit den folgenden Schritten:
- Verbringen des ersten Zuges mit wenigstens einem ersten Waggon (1, 40), der ein Waggongestell (40) und einen Waggonaufsatz (1) mit der Ladung umfasst, in die Entladeposition,
- Anheben des Waggonaufsatzes (1) bezüglich des Waggongestells (40) mittels der Hubvorrichtungen (101, 111; 201, 221),
- Bewegen des Waggonaufsatzes (1) in einer Richtung quer zu einer Waggonlängsebene (7) des ersten Waggons, bis der Waggonaufsatz (1) im wesentlichen nicht oberhalb des ersten Waggongestells (40) angeordnet ist,
- Verbringen des zweiten Zuges mit wenigstens einem zweiten Waggon, der ein Waggongestell (40) umfasst, in die Beladeposition,
- Bewegen des Waggonaufsatzes (1) in einer Richtung quer zu einer Waggonlängsebene (7) des zweiten Waggons, bis der Waggonaufsatz (1) oberhalb des Waggongestells (40) des zweiten Waggons angeordnet ist,
- Absenken des Waggonaufsatzes (1) mittels der Hubeinrichtungen (101, 111; 201, 221) auf das zweite Waggongestell (40).

14. Verfahren nach Anspruch 13,
**dadurch gekennzeichnet,**
**daß** der erste und der zweite Zug an der Ent- und Beladeposition nebeneinander angeordnet sind, während der Waggonaufsatz (1) von dem Waggongestell (40) des ersten Zuges auf das Waggongestell des zweiten Zuges umgeladen wird.

15. Verfahren nach Anspruch 13,
**dadurch gekennzeichnet,**
**daß** der erste Zug neben der Ent- und Beladeposition angeordnet ist; auf die der Waggonaufsatz (1) von dem Waggongestell (40) des ersten Zuges verbracht wird, und dass der zweite Zug neben der Ent- und Beladeposition angeordnet ist, von der der Waggonaufsatz (1) auf das Waggongestell des zweiten Zuges verbracht wird.

16. Verfahren nach Anspruch 15,
**dadurch gekennzeichnet,**
**daß** nach dem Entladen des ersten Zuges der zweite Zug an die Stelle des ersten Zuges neben die Ent- und Beladeposition gefahren wird, und der Waggonaufsatz (1) auf das benachbarte Waggongestell (40) des zweiten Zuges verbracht wird.

17. Verfahren nach einem oder mehreren der Ansprüche 1 bis 16
**dadurch gekennzeichnet,**
**daß** ein Waggongestell zur Aufnahme eines Waggonaufsatzes (1) aufweisend zwei Drehgestelle (41, 42), welche in Fahrtrichtung des Waggongestells (40) beabstandet voneinander angeordnet sind und mittels einer Trägerkonstruktion verbunden sind, verwendet wird, wobei die Trägerkonstruktion ein zentraler Mittellängsträger (44, 244) ist.

18. Verfahren nach Anspruch 17,
**gekennzeichnet durch** die Verwendung eines Waggongestells, dessen Längsträger (44, 244) eine im Querschnitt rechteckförmige, vorzugsweise rohrförmig hohle Rechteckraumform aufweist und gegebenenfalls geeignete innen liegende Versteifungsbleche und/oder Versteifungsstege aufweist.

19. Verfahren nach Anspruch 17 oder 18,
**gekennzeichnet durch** die Verwendung eines Waggongestells mit Vorspannungsmitteln zum Erzeugen einer Vorspannung in Längsrichtung an dem Waggongestell derart, dass eine Biegesteifigkeit des Waggongestells erhöht ist.

20. Verfahren nach einem der Ansprüche 17 bis 19,
**gekennzeichnet, durch** die Verwendung eines Waggongestells, dessen Längsträger (44) in seiner Breite geringer als die Spurweite der Radsätze der Drehgestelle (41, 42) ausgebildet ist.

21. Verfahren nach einem oder mehreren der Ansprüche 17 bis 20,
**gekennzeichnet durch** die Verwendung eines Waggongestells, dessen Längsträger (44, 244) zwischen den Drehgestellen (41, 42) derart nach unten gekröpft parallel versetzt ist, daß dessen Oberseite (45) in vertikaler Richtung im Bereich der Radsatzdrehachsen etwas oberhalb dieser angeordnet ist.

22. Verfahren nach einem oder mehreren der Ansprüche 17 bis 21,
**gekennzeichnet durch** die Verwendung eines Waggongestells, dessen Längsträger (44, 244) an beiden Enden gekröpft ausgebildet ist und mit seinen freien Enden (46) oberhalb der Drehgestelle (41, 42) auf diesen aufsitzt.

23. Verfahren nach einem oder mehreren der Ansprüche 17 bis 22,
**gekennzeichnet durch** die Verwendung eines Waggongestells, dessen Längsträger (44) eine Breite aufweist, derart, daß ein Waggonaufsatz (1) auf den Längsträger (44) aufsteckbar ist.

24. Verfahren nach einem oder mehreren der Ansprüche 17 bis 23,
**gekennzeichnet durch** die Verwendung eines Waggongestells, dessen Längsträger (44) mit einer Lücke (10a) eines Waggonaufsatzes (1) derart zusammenwirkt, daß der Waggonaufsatz (1) in vertikaler Richtung und in einer Richtung quer zum Längsträger (44) festgelegt ist.

25. Verfahren nach einem oder mehreren der Ansprüche 17 bis 24,
**gekennzeichnet durch** die Verwendung eines Waggongestells, bei dem Mittel vorhanden sind, mit welchen ein Waggonaufsatz (1) bezüglich des Längsträgers (44, 244) in dessen Längsrichtung festgelegt werden kann.

26. Verfahren nach Anspruch 24 oder 25,
**gekennzeichnet durch** die Verwendung eines Waggongestells, bei dem die Mittel zum Arretieren und/oder Festlegen des Waggonaufsatzes (1) bezüglich des Längsträgers (44, 244) derart an dem Waggongestell angeordnet sind, dass der Waggonaufsatz (1) im wesentlichen keine Biegelast auf den Längsträger (44, 244) überträgt.

27. Verfahren nach einem der Ansprüche 17 bis 26,
**gekennzeichnet durch** die Verwendung eines Waggongestells, bei dem das Waggongestell (40), insbesondere der der Längsträger (44, 244) des Waggongestells (40) eine so geringe Steifigkeit aufweist, daß die Steifigkeit des Waggongestells (40) zur Aufnahme statischer und/oder dynamischer Lasten, insbesondere der Gewichtslast, des Waggonaufsatzes (1), insbesondere des mit einer Ladung (30) beladenen Waggonaufsatzes (1), an sich bzw. allein zum sicheren Betrieb unzureichend ist, insbesondere der für eine Höchstbelastung des Waggons (1, 40) vorgesehenen Belastbarkeit nicht genügt.

28. Verfahren nach einem oder mehreren der Ansprüche 1 bis 27,
**dadurch gekennzeichnet,**
**daß** ein Waggonaufsatz (1) für ein Waggongestell (40) verwendet wird, der eine im wesentlichen wannenförmige Raumform und entlang seiner Längserstrekung am Wannenboden eine Lücke (10a) aufweist, welche in Querrichtung des Waggonaufsatzes (1) mittig im Wannenboden angeordnet ist.

29. Verfahren nach Anspruch 28,
**gekennzeichnet durch** die Verwendung eines Waggonaufsatzes, der aus einem ersten Wannenelement (2) und einem zweiten Wannenelement (3) gebildet ist, wobei die Wannenelemente (2, 3) eine im Querschnitt etwa L-förmige Raumform mit einem ersten Wannenelementschenkel (4) und einem zweiten Wannenelementschenkel (5) aufweisen.

30. Verfahren nach Anspruch 28 und/oder 29,
**gekennzeichnet durch** die Verwendung eines Waggonaufsatzes, bei dem die Wannenelementschenkel (4, 5) in deren Eckbereich mittels einer Schrägwandung (6) verbunden sind.

31. Verfahren nach einem oder mehreren der Ansprüche 28 bis 30,
**gekennzeichnet durch** die Verwendung eines Waggonaufsatzes, bei dem der zweite Wannenelementschenkel (5) einen Teil des Bodens des Waggonaufsatzes (1) bildet und der Wannenelementschenkel (4) eine seitliche Begrenzungswandung des Waggonaufsatzes (1) bildet.

32. Verfahren nach einem oder mehreren der Ansprüche 28 bis 31,
**gekennzeichnet durch** die Verwendung eines Waggonaufsatzes, bei dem jedes Wannenelement (2, 3) eine L-förmige erste freie Frontendkante (8) und eine L-förmige zweite freie Frontendkante (9) sowie eine zu einer Längsmittelebene (7) weisende freie Längskante (10) und eine obere freie Längskante (11) aufweist.

33. Verfahren nach einem oder mehreren der Ansprüche 28 bis 32,
**gekennzeichnet durch** die Verwendung eines Waggonaufsatzes, bei dem die Wannenelemente (2, 3) derart angeordnet sind, daß sich die freien Längskanten (10) parallel beabstandet gegenüberliegen, so daß eine Lücke (10a) ausgebildet ist, welche mit einem Längsträger (44) eines Waggongestelles (40) korrespondiert.

34. Verfahren nach einem oder mehreren der Ansprüche 28 bis 33,
**gekennzeichnet durch** die Verwendung eines Waggonaufsatzes, bei dem die zweiten Wannenelementschenkel (5) in einer Ebene liegend angeordnet sind und die freien Frontendkanten (8, 9) der Wannenelemente (2, 3) bündig miteinander abschließen.

35. Verfahren nach einem oder mehreren der Ansprüche 28 bis 34,
**gekennzeichnet durch** die Verwendung eines Waggonaufsatzes, bei dem an den freien Enden der zweiten Wannenelementschenkel (5) jeweils stirnseitig an beide Wannenelemente (2, 3) eine um eine Achse (12) horizontal verschwenkbare Schließklappe (13) angeordnet ist, welche von einer horizontalen, mit den Wannenschenkeln (5) bündig abschließenden Lage in eine vertikale Lage verschwenkbar ist, in der die Klappe (13) an den freien Frontendkanten (9) der ersten Wannenelementschenkel (4) anliegt.

36. Verfahren nach Anspruch 35,
**gekennzeichnet durch** die Verwendung eines Waggonaufsatzes, bei dem in der geschlossenen, angeklappten Stellung die Klappe (13) bündig oder etwas unterhalb dem Niveau der zweiten Längskanten mit den Wannenelementen (2, 3) abschließt.

37. Verfahren nach Anspruch 35 oder 36,
**gekennzeichnet durch** die Verwendung eines Waggonaufsatzes, bei dem die Schließklappe (13) eine erste Flachseite (14) und eine zweite Flachseite (15) aufweist, wobei zwei Schmalseitenbegrenzungskanten (16), eine Endkante (17) und eine Anlenkungskante (18) vorhanden sind.

38. Verfahren nach einem oder mehreren der Ansprüche 35 bis 37,
**gekennzeichnet durch** die Verwendung eines Waggonaufsatzes, bei dem im Bereich der Anlenkungskante (18) die Klappe (13) um die Achse (12) gelenkig schwenkbar über eine Länge, welche der Breite der zweiten Wannenelementschenkel (5) entspricht mit den Wannenelementen (2, 3) verbunden ist.

39. Verfahren nach einem oder mehreren der Ansprüche 28 bis 38,
**gekennzeichnet durch** die Verwendung eines Waggonaufsatzes, bei dem symmetrisch zur Längsmittelebene (7) jeweils zwei Wannenelemente (2, 3), welche sich mit ihren horizontalen Wannenelementschenkeln (5) beabstandet gegenüberliegen, einen Hauptteil des Waggonaufsatzes (1) bilden.

40. Verfahren nach einem oder mehreren der Ansprüche 35 bis 39,
**gekennzeichnet durch** die Verwendung eines Waggonaufsatzes, bei dem im Bereich der Lücke (10a) die Klappe (13) eine zur Anlenkungskante (18) hin offene U-förmige Ausnehmung aufweist, welche zwei U-Schenkelkanten (19) und eine Bodenbegrenzungskante (20) aufweist.

41. Verfahren nach Anspruch 40,
**gekennzeichnet durch** die Verwendung eines Waggonaufsatzes, bei dem die U-förmige Ausnehmung derart bemessen ist, daß sie im horizontal abgeklappten Zustand der Klappe (13) eine Verlängerung der Lücke (10a) darstellt und in der vertikal angeklappten Stellung der Klappe (13) einen Vertikalanschlag für einen Mittellängsträger (44) eines Waggongestells (40) bildet.

42. Verfahren nach einem oder mehreren der Ansprüche 35 bis 41,
**gekennzeichnet durch** die Verwendung eines Waggonaufsatzes, bei dem im angeklappten Zustand die Klappe (13) mittels geeigneter Verriegelungselemente mit den Wannenelementen (2, 3) verbindbar ist.

43. Verfahren nach einem oder mehreren der Ansprüche 35 bis 42,
**gekennzeichnet durch** die Verwendung eines Waggonaufsatzes, bei dem im Bereich der Endkante (17) der Klappe (13) Auffahrrampenelemente (21) mit der Klappe (13) um eine Achse (22) gelenkig verbunden sind.

44. Verfahren nach Anspruch 43,
**gekennzeichnet durch** die Verwendung eines Waggonaufsatzes, bei dem in angeklappter Stellung der Klappe (13) die Auffahrrampenelemente (21) bündig mit der zweiten Flachseite (15) auf einem Untergrund aufliegen.

45. Verfahren nach Anspruch 43 oder 44,
**gekennzeichnet durch** die Verwendung eines Waggonaufsatzes, bei dem die Auffahrrampenelemente (21) eine Keilform aufweisen, so daß Fahrzeuge, beispielsweise ein LKW oder ein LKW-Auflieger in den Waggonaufsatz (1) einfahren können.

46. Verfahren nach einem oder mehreren der Ansprüche 43 bis 45,
**gekennzeichnet durch** die Verwendung eines Waggonaufsatzes, bei dem im angeklappten Zustand der Klappe (13) der Auffahrrampenelemente (21) an die zweite Flachseite (15) der Klappen (13) angeklappt und dort arretiert sind.

47. Verfahren nach einem oder mehreren der Ansprüche 28 bis 46,
**gekennzeichnet durch** die Verwendung eines Waggonaufsatzes, bei dem entlang der Längsaußenseite des Waggonaufsatzes (1) ausklappbare Auflagemittel (25) angeordnet sind.

48. Verfahren nach Anspruch 47,
**gekennzeichnet durch** die Verwendung eines Waggonaufsatzes, bei dem die Auflagemittel (25) entlang der Längserstreckung des Waggonaufsatzes (1) beidseitig so angeordnet sind, daß sowohl handelsübliche 20 Fuß-Container (31) als auch 40 Fuß-Container (32) auf den ausgeklappten Auflagemitteln (25) aufsetzbar sind.

49. Verfahren nach Anspruch 47 oder 48,
**gekennzeichnet durch** die Verwendung eines Waggonaufsatzes, bei dem die Auflagemittel (25) in einer Ruhestellung in den ersten Wannenelementschenkeln (4) der Wannenelemente (2, 3) versenkbar angeordnet sind und bei Bedarf **durch** Hochziehen nach innen hin zur Längsmittelebene (7) klappbar sind, so daß Auflageflächen für die Container (31, 32) entstehen.

50. Verfahren nach einem oder mehreren der Ansprüche 47 bis 49,
**gekennzeichnet durch** die Verwendung eines Waggonaufsatzes, bei dem in der Ruhestellung der Auflagemittel (25) diese nicht in die freie lichte Weite zwischen den Wannenelementen (2, 3) hereinragen.

51. Verfahren nach einem oder mehreren der Ansprüche 28 bis 50,
**gekennzeichnet durch** die Verwendung eines Waggonaufsatzes, der mittels der Lücke (10a) und den Bodenbegrenzungskanten (20) auf einem Längsträger (44) eines Waggongestells (40) in Vertikalrichtung und in einer Richtung quer zur Fahrtrichtung festlegbar ist.

52. Verfahren nach Anspruch 51,
**gekennzeichnet durch** die Verwendung eines Waggonaufsatzes, der selbstsichernd arretierbar ist.

53. Verfahren nach einem oder mehreren der Ansprüche 28 bis 52,
**gekennzeichnet durch** die Verwendung eines Waggonaufsatzes, mit dem mit einem Waggongestell (40) ein Waggon gebildet ist, wobei Bodendielen (50) in das Innere des wannenförmigen Waggonaufsatzes (1) einlegbar sind und die Bodendielen (50) eine Oberseite (51) aufweisen, welche bündig mit den Längskanten (11) abschließt.

54. Verfahren nach Anspruch 53,
**gekennzeichnet durch** die Verwendung eines Waggonaufsatzes, bei dem die Bodendielen (50) eine im wesentlichen rechteckplattenförmige Raumform mit Längskanten (52) und Schmalseitenkanten (53) aufweisen, wobei die Bodendielen (50) derart angeordnet sind, daß die Schmalseitenkanten (53) an den ersten Wannenelementschenkeln (4) anliegen, so daß Fugen zwischen den Bodendielen (50) quer zur Fahrtrichtung ausgerichtet sind.

55. Verfahren nach Anspruch 53 oder 54,
**gekennzeichnet durch** die Verwendung eines Waggonaufsatzes, der entlang der Längskanten (11) der Wannenelementschenkel (4) vertikal nach oben abgehende Rungen (55) aufweist, so daß in einfacher Art und Weise aus einem Flachwagen ein Rungenwagen gebildet werden kann.

56. Verfahren nach Anspruch 55,
**gekennzeichnet durch** die Verwendung eines Waggonaufsatzes, bei dem die Bodendielen (50) einen Zwischenboden bildend gegenüber dem Niveau der Längskanten (11) etwas abgesenkt angeordnet sind.

57. Verfahren nach einem oder mehreren der Ansprüche 28 bis 56,
**gekennzeichnet durch** die Verwendung eines Waggonaufsatzes, der entlang der Längskanten (11) der Wannenelementschenkel (4) und stirnseitig an den Wannenelementschenkeln (5) vertikal nach oben abgehende Plattenelemente aufweist, so daß in einfacher Weise aus einem Flachwagen ein Schüttgutwagen gebildet werden kann.

58. Verfahren nach einem der Ansprüche 28 bis 57,
**gekennzeichnet durch** die Verwendung eines Waggonaufsatzes, der für ein flaches Aufsitzen auf dem Längsträger (244) ausgebildet und/oder eingerichtet ist.

59. Verfahren nach einem der Ansprüche 28 bis 58,
**gekennzeichnet durch** die Verwendung eines Waggonaufsatzes, der im Wesentlichen einteilig ausgebildet ist.

60. Verfahren nach einem der Ansprüche 28 bis 59,
**gekennzeichnet durch** die Verwendung eines Waggonaufsatzes, dessen Wannenform im Querschnitt geschlossen ist, wobei der Waggonaufsatz zur Durchfahrt von LKW geeignete Innenabmessungen und vorzugsweise Außenabmessungen innerhalb gültiger Profilgrenzen, insbesondere für einen Schienentransport in der Europäischen Union, Spanien und/oder Osteuropa, aufweist.

61. Verfahren nach einem der Ansprüche 29 bis 60,
**gekennzeichnet durch** die Verwendung eines Waggonaufsatzes, dessen Wannenschenkelelemente (4, 5) des Waggonaufsatzes (1) zur Waggonlastaufnahme tragend, vorzugsweise hohl, ausgebildet sind.

62. Verfahren nach einem der Ansprüche 35 bis 61,
**gekennzeichnet durch** die Verwendung eines Waggonaufsatzes, dessen eine oder beide Schließklappen (13) zusammen mit einem vorzugsweise klappbaren Mechanismus ein Gelenkgestell bilden, das Aufnahmen zum Arretieren von Zuladung (30), insbesondere an einer Oberseite Aufnahmen für Ladungspositionierungsmittel, aufweist und/oder das mit dem Waggonaufsatz (1) verriegelbar ist.

63. Verfahren nach Anspruch 62,
**gekennzeichnet durch** die Verwendung eines Waggonaufsatzes, dessen Gelenkgestelle zum Stabilisieren der Wannenschenkelelemente (4, 5) eingerichtet sind.

64. Verfahren nach einem der Ansprüche 47 bis 63,
**gekennzeichnet durch** die Verwendung eines Waggonaufsatzes, dessen Auflagemittel (25) zur Aufnahme und/oder kraftschlüssigen und/oder formschlüssigen Arretierung von Containern, die auf einem in den Waggonaufsatz eingefahrenen Lkw-Sattelschlepper oder LKW-Zugmaschine mit Anhänger aufliegen, eingerichtet sind.

65. Verfahren nach einem der Ansprüche 28 bis 64,
**gekennzeichnet durch** die Verwendung eines Waggonaufsatzes, der wenigstens eine Anschlusseinrichtung zum Anschluss von Energieversorgungsmitteln und/oder Signalübertragungsmitteln an den Waggonaufsatz (1) aufweist.

66. Verfahren nach Anspruch 65,
**gekennzeichnet durch** die Verwendung eines Waggonaufsatzes, der mit dem Waggongestell (40) verriegelt eine Einheit bildet, die nicht entriegelbar ist, solange die Energieversorgungsmittel und/oder Signalübertragungsmittel nicht an die Anschlusseinrichtungen des Waggonaufsatzes (1) angeschlossen sind.

67. Verfahren nach Anspruch 66,
**gekennzeichnet durch** die Verwendung eines Waggonaufsatzes, bei dem Waggongestell und/oder Waggonaufsatz eine Notfallentriegelungseinrichtung aufweisen, die zum Entriegeln der passiv verriegelten Einheit von Waggonaufsatz und Waggongestell vorgesehen ist.

68. Verfahren nach einem der Ansprüche 28 bis 67,
**gekennzeichnet durch** die Verwendung eines Waggonaufsatzes, der zum Gleiten auf einer Fluidschicht eingerichtet ist.

69. Verfahren nach einem oder mehreren der Ansprüche 1 bis 68, bei dem ein Waggon (1, 40) verwendet wird im wesentlichen bestehend aus einem Waggonaufsatz (1) und einem Waggongestell (40) mit mindestens einem Längsträger (44, 244), wobei
a) das Waggongestell (40) insbesondere der Längsträger (44, 244) des Waggongestells (40), eine für die vorgegebene Belastbarkeit des Waggons (1, 40) ungenügende Belastbarkeit, insbesondere ungenügende Steifigkeit, aufweist,
b) das Waggongestell (40) mit geeigneten entriegelbaren Verriegelungselementen mit dem Waggonaufsatz (1) verriegelt ist,
c) durch die Verriegelung die vorgegebene Belastbarkeit, insbesondere genügende Steifigkeit, des Waggons (1, 40) erzielt wird.

70. Be- und/oder Entladevorrichtung für Waggonaufsätze (1) eines ein Waggongestell (40) für Waggonaufsätze (1) aufweisenden Schienenwaggons (1, 40) zur Durchführung des Verfahrens nach einem oder mehreren der Ansprüche 1 bis 69, aufweisend
a) eine Be- und Entladefläche (140), die benachbart zu Schienengleisen (43) angeordnet ist, und
b1) Hubvorrichtungen (101, 111, 201) zum Anheben und Absenken eines Waggonaufsatzes (1) von einem bzw. auf ein Waggongestell (40), die benachbart zu den Gleisen (43, 243) angeordnet und derart ausgebildet sind, dass sie einendig auf den Waggonaufsatz (1) einwirken können und sich anderendig direkt oder indirekt vom Waggongestell (40) unabhängig auf dem Bodenbereich benachbart zu den Gleisen (43) abstützen, oder
b2) Hubvorrichtungen (201) mit Hubbalken (221) zum Anheben und Absenken eines Waggonaufsatzes (1) von einem bzw. auf ein Waggongestell (40), wobei die Hubbalken (221) quer zur Schienenrichtung verschiebbar sind und die Hubeinrichtungen (201) bevorzugt am Bahnsteig derart angeordnet sind, dass sie einendig auf einen Waggonaufsatz (1) einwirken können, und
c) Mittel zum Bewegen des Waggonaufsatzes in einer gegenüber dem Waggongestell (40) angehobenen Position quer zur Fahrtrichtung des Waggons von einer Stellung vertikal oberhalb des Waggongestells (40) auf die Be- und Entladefläche (140), wobei die Hubeinrichtungen (101, 111, 201) eine Lastauflage (102) aufweisen, die mit einer Unterseite des Waggonaufsatzes (1) zusammenwirkt derart, daß der Waggonaufsatz (1) mit seiner Unterseite auf das Niveau der Be- und/oder Entladefläche (140) anhebbar ist und wobei die Lastauflagen (102) Rollelemente (103) aufweisen, so daß der Waggonaufsatz (1) nach dem Anheben in einer Richtung quer zur Fahrtrichtung auf den Lastauflagen (102) verschiebbar ist.

71. Be- und/oder Entladevorrichtung nach Anspruch 70,
**dadurch gekennzeichnet,**
**daß** die Be- und Entladevorrichtung eine Positioniervorrichtung zur Positionierung des Waggons in dessen Fahrtrichtung aufweist.

72. Be- und/oder Entladevorrichtung nach Anspruch 70 oder 71,
**dadurch gekennzeichnet,**
**daß** die Be- und Entladevorrichtung Mittel zum Nivellieren, insbesondere zum horizontalen und/oder vertikalen Nivellieren des Waggons (1, 40) und/oder des Waggonaufsatzes (1) und/oder des Waggongestelles (40) aufweist, so daß das Waggongestell (40) und/oder der Waggonaufsatz (1) und/oder der gesamte Waggon (1, 40) in allen Richtungen, insbesondere in horizontaler und/oder vertikaler Richtung längs und quer zur Fahrtrichtung des Waggons (1, 40) nivellierbar ist.

73. Be- und/oder Entladevorrichtung nach einem oder mehreren der Ansprüche 70 bis 72,
**dadurch gekennzeichnet,**
**daß** die Be- und/oder Entladevorrichtung (100) eine Vielzahl von Hubeinrichtungen (101) aufweist, welche entlang der Gleise (43) außerhalb neben den Gleisschienen angeordnet sind.

74. Be- und/oder Entladevorrichtung nach einem oder mehreren der Ansprüche 70 bis 73,
**dadurch gekennzeichnet,**
**daß** die Hubeinrichtungen (101) pneumatische oder hydraulische oder mechanische, insbesondere auf dem Keilprinzip basierende Hubeinrichtungen sind.

75. Be- und/oder Entladevorrichtung nach einem oder mehreren der Ansprüche 70 bis 74,
**dadurch gekennzeichnet,**
**daß** die Rollelemente (103) Rollen oder Kugelelemente sind.

76. Be- und/oder Entladevorrichtung nach einem oder mehreren der Ansprüche 70 oder 75,
**dadurch gekennzeichnet,**
**daß** die Be- und/oder Entladefläche ein Bahnsteig (140) ist, welcher mit den Lastauflagen (102) in deren angehobener Position eine Ebene bildet.

77. Be- und/oder Entladevorrichtung nach einem oder mehreren der Ansprüche 70 bis 76,
**dadurch gekennzeichnet,**
**daß** die Hubeinrichtungen (101) gleisbettfest neben den Waggons in deren Be- und Entladeposition angeordnet sind.

78. Be- und/oder Entladevorrichtung nach einem oder mehreren der Ansprüche 70 bis 77,
**dadurch gekennzeichnet,**
**daß** die Hubeinrichtung (101) als Hubbalken (111) ausgeführt ist, welcher sich außerhalb der Schienengleise (43) benachbart zum Gleisstrang erstreckt und benachbart zum Gleisbett auf einer bodenfesten Laufbahn (110) aufliegt oder sich direkt oder indirekt auf dieser Laufbahn (110) abstützt.

79. Be- und/oder Entladevorrichtung nach Anspruch 78,
**dadurch gekennzeichnet,**
**daß** der Hubbalken (111) im Querschnitt im wesentlichen rechteckförmig mit einer Oberseite (112), einer Unterseite (113) und einem ersten freien Ende (114) und einem zweiten freien Ende (115) ausgebildet ist, wobei im Bereich der Unterseite (113) bevorzugt im Bereich der freien Enden Tragrollen (116) angeordnet sind, so daß der Hubbalken (111) in seiner Längsrichtung, welche parallel zur Gleisrichtung gerichtet ist, auf der Rollbahn (110) leicht verschieblich ist.

80. Be- und/oder Entladevorrichtung nach Anspruch 79,
**dadurch gekennzeichnet,**
**daß** die freien Enden (114, 115) spitzwinklig zur Rollbahn (110) ausgebildet sind, so daß Rampenflächen (117) ausgebildet sind, welche zur Laufbahn (110) weisen.

81. Be- und/oder Entladevorrichtung nach Anspruch 80,
**dadurch gekennzeichnet,**
**daß** im Bereich der Rampenflächen (117) Tragrollen (116) angeordnet sind.

82. Be- und/oder Entladevorrichtung nach einem oder mehreren der Ansprüche 78 bis 81,
**dadurch gekennzeichnet,**
**daß** während des Be- und/oder Entladevorgangs der Hubbalken (111) etwa mittig bezüglich der Längserstreckung des Waggonaufsatzes (1) unterhalb des Waggonaufsatzes (1) angeordnet ist.

83. Be- und/oder Entladevorrichtung nach einem oder mehreren der Ansprüche 78 bis 82,
**dadurch gekennzeichnet,**
**daß** eine Positioniervorrichtung (120) zur Positionierung des Waggonaufsatzes (1) zusammen mit dem Waggongestell (40) bezüglich des Hubbalkens (111) vorhanden ist.

84. Be- und/oder Entladevorrichtung nach einem oder mehreren der Ansprüche 78 bis 83,
**dadurch gekennzeichnet,**
**daß** auf der Oberseite (112) des Hubbalkens (111) Rollelemente (103) angeordnet sind, welche den Rollelementen (103) am Bahnsteig (140) entsprechen.

85. Be- und/oder Entladevorrichtung nach einem oder mehreren der Ansprüche 83 bis 84,
**dadurch gekennzeichnet,**
**daß** die Positioniervorrichtung (120) in Längsrichtung zum Hubbalken (111) fluchtend beabstandet zu den freien Enden (114, 115) einen Positionier-/Hubschlitten (121) aufweist, welcher auf Tragrollen (116) parallel zur Fahrtrichtung des Waggons (1, 40) auf der Rollbahn (110) antreibbar verschiebbar ist.

86. Be- und/oder Entladevorrichtung nach Anspruch 85,
**dadurch gekennzeichnet,**
**daß** der Positionier-/Hubschlitten (121) mit einem Linearantrieb (122) gekoppelt ist, wobei der Linearantrieb (122) einendig mit dem Positionier-/Hubschlitten (121) verbunden ist und anderendig an einem bodenfesten Widerlagerbock (123) befestigt ist.

87. Be- und/oder Entladevorrichtung nach Anspruch 86,
**dadurch gekennzeichnet,**
**daß** der Linearantrieb pneumatisch, hydraulisch, mechanisch, elektrisch oder elektromagnetisch ausgebildet ist.

88. Be- und/oder Entladevorrichtung nach einem oder mehreren der Ansprüche 85 bis 87,
**dadurch gekennzeichnet,**
**daß** der Positionier-/Hubschlitten (121) ein erstes freies Ende (124) aufweist, welches einem der freien Enden (114, 115) des Hubbalkens (111) zugewandt ist und eine zur Rampenfläche (117) korrespondierende Gegenrampenfläche (125) aufweist.

89. Be- und/oder Entladevorrichtung nach einem oder mehreren der Ansprüche 85 bis 88,
**dadurch gekennzeichnet,**
**daß** der Positionier-/Hubschlitten (121) eine Oberseite (126) aufweist, welche in Ruhestellung in etwa fluchtend mit der Oberseite (112) des Hubbalkens verläuft und bezüglich des Niveaus unterhalb des Waggonaufsatzes (1) angeordnet ist.

90. Be- und/oder Entladevorrichtung nach Anspruch 88 oder 89,
**dadurch gekennzeichnet,**
**daß** im Bereich der Oberseite (126) benachbart zum freien Ende (124) ein um eine Achse (127) schwenkbar angeordnetes Fanghakenelement (128) mit einer Hakenbasis (129) und einem Hakenvorsprung (130) angeordnet ist, wobei die Hakenbasis langgestreckt stegförmig ausgebildet ist und sich von der Achse (127) etwa über ein Drittel des Positionier-/Hubschlittens (121) vom ersten freien Ende (124) weg in Richtung zu einem zweiten freien Ende (131) des Positionier-/Hubschlittens (121) erstreckt, wobei sich der Hakenvorsprung (130) von der Hakenbasis (129) endseitig ein Stück etwa vertikal nach oben erstreckt.

91. Be- und/oder Entladevorrichtung nach Anspruch 90,
**dadurch gekennzeichnet,**
**daß** in der Ruhestellung das Fanghakenelement (128) derart angeordnet ist, daß der Hakenvorsprung (130) auf oder etwas unterhalb dem Niveau der Oberseite (126) des Positionier-/Hubschlittens (121) angeordnet ist.

92. Be- und/oder Entladevorrichtung nach einem oder mehreren der Ansprüche 90 oder 91,
**dadurch gekennzeichnet,**
**daß** gegenüberliegend zum Hakenvorsprung (130) an der Hakenbasis (129) eine Führungsrolle (132) angeordnet ist, welche mit einem bodenfesten Auflaufbock (133), der eine Rampenfläche (134) aufweist, zusammenwirkt.

93. Be- und/oder Entladevorrichtung nach Anspruch 92,
**dadurch gekennzeichnet,**
**daß** die Rampenfläche (134) des Auflaufbocks (133) der Führungsrolle (132) des Fanghakenelements (128) derart zugeordnet ist, daß in einer Ruhestellung der Hakenvorsprung (130) etwa auf dem Niveau der Oberseite (126) des Positionier-/Hubschlittens (121) zu liegen kommt.

94. Be- und/oder Entladevorrichtung nach einem oder mehreren der Ansprüche 90 bis 93,
**dadurch gekennzeichnet,**
**daß** korrespondierend zum Hakenelement (128) insbesondere seiner Oberkante (135) der Hakenbasis (129) das Waggongestell (40) eine korrespondierende Tragrolle (136) aufweist, welche derart angeordnet ist, daß sie mit der Oberkante (135) der Hakenbasis zusammenwirken kann.

95. Be- und/oder Entladevorrichtung nach einem oder mehreren der Ansprüche 90 bis 94,
**dadurch gekennzeichnet,**
**daß** das Fanghakenelement (128) zusammen mit der Achse (127) in Längsrichtung des Positionier-/Hubschlittens (121) relativ zu diesem bewegbar und mittels einer Feder und/oder Dämpfungseinrichtung (137) gedämpft, insbesondere gedämpft vorgespannt bezüglich des Positionier-/Hubschlittens (121) auf dessen Ende (131) zu bewegbar ist.

96. Be- und/oder Entladevorrichtung nach einem oder mehreren der Ansprüche 70 bis 95,
**dadurch gekennzeichnet,**
**daß** die Hubeinrichtungen (101, 111) Hebelanordnungen oder Scherenanordnungen sind.

97. Be- und/oder Entladevorrichtung nach einem oder mehreren der Ansprüche 70 bis 96,
**dadurch gekennzeichnet,**
**daß** zumindest eine Auswahl der Rollelemente (103) der Hubeinrichtungen (101, 111) motorisch antreibbar sind.

98. Be- und/oder Entladevorrichtung nach Anspruch 97,
**dadurch gekennzeichnet,**
**daß** die Rollelemente (103) elektrisch, elektromagnetisch, hydraulisch oder pneumatisch antreibbar sind.

99. Be- und/oder Entladevorrichtung nach einem oder mehreren der Ansprüche 70 bis 98,
**dadurch gekennzeichnet,**
**daß** die Rollenelemente (103) direkt oder vom Bahnsteig angesteuert antreibbar sind.

100. Be- und/oder Entladevorrichtung nach einem oder mehreren der Ansprüche 70 bis 99,
**dadurch gekennzeichnet,**
**daß** die Antriebsenergie für alle Antriebe der Be- und/oder Entladevorrichtung (100) zentral erzeugt werden.

101. Be- und/oder Entladevorrichtung nach einem oder mehreren der Ansprüche 70 bis 100,
**dadurch gekennzeichnet,**
**daß** Einrichtungen zum Arretieren des Waggons (1, 40) in Längsrichtung des Waggons (1, 40) während des Be- und/oder Entladevorganges vorhanden sind.

102. Be- und/oder Entladevorrichtung nach Anspruch 70,
**dadurch gekennzeichnet,**
**daß** die Hubeinrichtungen (201) Versorgungsanschlüsse zur Energiezufuhr und/oder Signalanschlüsse zur Signalübertragung aufweisen, gegebenenfalls in den Waggon (1, 40) eingreifen und/oder mittels entsprechender Anschlüsse des Waggons (1, 40) an den Waggon (1, 40) anschließbar sind.

103. Be- und/oder Entladevorrichtung nach Anspruch 102,
**dadurch gekennzeichnet, dass** die Hubeinrichtungen (201) derart eingerichtet sind, dass, wenn der erste und der zweite Zugabschnitt nebeneinander angeordnet sind, Hubbalken benachbart angeordneter Hubeinrichtungen, gegebenenfalls über ein Zwischengleis hinweg, ausfahrbar sind und die ausgefahrenen Hubbalken (221) ineinander greifen, um eine Brücke zu bilden, wobei der Waggonaufsatz (1) von dem Waggongestell (40) eines ersten Zuges auf ein zugeordnetes Waggongestell eines zweiten Zuges über die Brücke umladbar ist.

104. Be- und/oder Entladevorrichtung nach Anspruch 103,
**dadurch gekennzeichnet, dass** die horizontalen Hubbalken (221) der Hubeinrichtungen (201) für eine im wesentlichen horizontale Bewegung eingerichtet sind, bei der die Hubeinrichtungen (201), insbesondere die Hubbalken (221), mit Rampenflächen (217) und/oder Waggongegenflächen und/oder Waggonaufsatzgegenflächen zusammenwirken, um einen im wesentlichen geringen Hub des Waggonaufsatzes (1) zu bewirken, wobei der Hub hinreicht, um waggongestellabhängige und/oder drehgestellabhängige Höhenunterschiede zu überwinden.

105. Be- und/oder Entladevorrichtung nach Anspruch 103 oder 104,
**dadurch gekennzeichnet, dass** die Hubbalken (221) im wesentlichen horizontal und quer zur Schienenlängsrichtung angeordnet sind.

106. Be- und/oder Entladevorrichtung nach einem der Ansprüche 103 bis 105,
**dadurch gekennzeichnet,**
**daß** die Hubbalken (221) in eine Ruheposition einfahrbar sind, in der die Hubbalken (221) außerhalb eines vorgegebenen Gleisbereichs (243), insbesondere außerhalb gültiger Profilgrenzen für den Schienengüterverkehr, angeordnet und dazu eingerichtet sind, beispielsweise auf Tragrollen in bahnsteigseitig festen Laufbahnen so weit ausgefahren zu werden, bis an der Stirnseite der Hubbalken (221) ausgeführte Rampenflächen (225) in zugeordnete Gegenflächen (217) der Waggons (1, 40), insbesondere der Waggonlängsträger eingreifen, wobei vorzugsweise der Waggonlängsträger horizontal, vertikal und/oder in Längsrichtung zentriert und/oder arretiert wird.

107. Be- und/oder Entladevorrichtung nach einem der Ansprüche 103 bis 106,
**dadurch gekennzeichnet,**
**daß** die Hubbalken (221) derart mit dem Waggongestell (40) in Eingriff bringbar sind, dass eine Oberkante des Hubbalkens (221) in einer vorzugsweise horizontalen Ebene mit einer Oberkante des Waggonlängsträgers des Waggongestells (40) angeordnet ist, wobei eine Be- und Entladefläche gebildet wird, die im wesentlichen horizontal, vorzugsweise maximal in Höhe derselben Ebene, angeordnet ist.

108. Be- und/oder Entladevorrichtung nach einem der Ansprüche 103 bis 107,
**gekennzeichnet durch** eine Einrichtung zum Ausbilden eines Tragfilms, insbesondere eines Fluidtragfilms, auf einer Auflagefläche für den Waggonaufsatz (1), wobei die Auflagefläche auf der Be- und/oder Entladevorrichtung und auf dem Waggonaufsatz (1) ausgebildet ist.

109. Be- und/oder Entladevorrichtung nach einem der Ansprüche 103 bis 107,
**gekennzeichnet durch** eine Einrichtung zum Erwärmen und/oder Reinigen von Elementen der Be- und/oder Entladevorrichtung, deren Oberfläche die Auflagefläche für den Waggonaufsatz (1) bildet, insbesondere zum Erwärmen und/oder Reinigen der an den Hubbalken (221) ausgebildeten Auflagefläche.

## Claims

1. Method for loading and unloading rail wagons, wherein at least one wagon, composed of a wagon frame (40) and a wagon superstructure (1), is moved into a loading and unloading position, and:
a) when unloading is carried out, the wagon superstructure (1) is lifted up with respect to the wagon frame by means of lifting devices (101, 111) to a discharge level, after the lifting up operation of the wagon superstructure (1) is moved at the unloading level in a transverse direction with respect to a longitudinal plane (7) of the wagon until the wagon superstructure (1) is seated completely on a loading and unloading surface (140), and
b) when loading is carried out, the wagon superstructure (1) is moved from the loading and unloading surface (140) in the transverse direction with respect to the longitudinal plane (7) of the wagon to a position above the wagon frame (40), and the wagon superstructure (1) is lowered, by means of the lifting devices (101, 111), onto the wagon frame (40) which is located in the loading and unloading position,
**characterized in that** the wagon superstructures (1) are lifted and lowered by means of lifting devices (101, 111) which are anchored to the track bed or fixed to a railway platform.

2. Method according to Claim 1, **characterized in that** the wagon (1, 40) is roughly prepositioned by means of a locomotive for the loading and unloading and is finely positioned in the loading and unloading position by means of a positioning device (121).

3. Method according to Claim 1 and/or 2, **characterized in that** before the wagon superstructure (1) is lifted, horizontal levelling of the wagon (1, 40) is to be carried out in the longitudinal and transverse directions.

4. Method according to one or more of the preceding claims, **characterized in that** the horizontal levelling is carried out by means of the positioning device (120) which acts on the wagon frame (40).

5. Method according to one or more of the preceding claims, **characterized in that** the wagon superstructure (1) is lifted to the level (140) of the railway platform.

6. Method according to one or more of the preceding claims, **characterized in that** the wagon frame (40) is locked in the direction of travel during the loading and unloading operations.

7. Method according to one or more of the preceding claims, **characterized in that** the wagon superstructure is loaded and unloaded on the railway platform (140) irrespective of the presence of a wagon frame (40).

8. Method according to one or more of the preceding claims, **characterized in that** the wagon superstructure is guided in an anti-tilting fashion during the entire loading and unloading operations.

9. Method according to one or more of the preceding claims, **characterized in that** the horizontal levelling of the wagons (1, 40) is carried out immediately before the actual lifting operation of the wagon superstructure (1), wherein the levelling is carried out in a first phase and the lifting in a second phase of a simultaneous movement of the lifting device (111).

10. Method according to one or more of the preceding claims, **characterized in that** the wagon frame are automatically released again in the direction of travel after the loading and unloading operations have been finished.

11. Method according to one of the preceding claims, wherein the first wagon is moved into the unloading position, and a second wagon is moved into the loading position,
**characterized by** the steps:
- lateral pushing of the wagon superstructure (1) off the wagon frame of the first wagon, and
- lateral pushing of the wagon superstructure onto the wagon frame of the second wagon.

12. Method according to Claim 11, **characterized by** the step:
- arrangement of the second wagon frame next to the first wagon frame in such a way that the wagon superstructure is pushed onto the second wagon frame while the wagon superstructure is pushed off the first wagon frame.

13. Method for transferring cargo from a first train to a second train at a loading and unloading position with lifting devices (101, 111; 201, 221) which are anchored to the track bed or fixed to a railway platform with the steps in Claim 1 and having the following steps:
- transfer of the first train with at least a first wagon (1, 40), which comprises a wagon frame (40) and a wagon superstructure (1) with the cargo, into the unloading position,
- lifting of the wagon superstructure (1) with respect to the wagon frame (40) by means of the lifting devices (101, 111; 201, 221),
- movement of the wagon superstructure (1) in a transverse direction with respect to a longitudinal plane (7) of the first wagon until the wagon superstructure (1) is essentially not arranged above the first wagon frame (40),
- transfer of the second train with at least a second wagon, which comprises a wagon frame (40), into the unloading position,
- movement of the wagon superstructure (1) in a transverse direction with respect to a longitudinal plane (7) of the second wagon until the wagon superstructure (1) is arranged above the wagon frame (40) of the second wagon,
- lowering of the wagon superstructure (1) onto the second wagon frame (40) by means of the lifting devices (101, 111; 201, 221).

14. Method according to Claim 13, **characterized in that** the first and second trains are arranged one next to the other at the loading and unloading position, while the wagon superstructure (1) is transferred from the wagon frame (40) of the first train to the wagon frame of the second train.

15. Method according to Claim 13, **characterized in that** the first train is arranged next to the unloading and loading position to which the wagon superstructure (1) is transferred from the wagon frame (40) of the first train, and **in that** the second train is arranged next to the unloading and loading position from which the wagon superstructure (1) is transferred to the wagon frame of the second train.

16. Method according to Claim 15, **characterized in that** after the first train has been unloaded, the second train is moved to the position of the first train next to the loading and unloading position, and the wagon superstructure (1) is moved to the adjacent wagon frame (40) of the second train.

17. Method according to one or more of Claims 1 to 16, **characterized in that** a wagon frame is used to hold a wagon superstructure (1) having two bogies (41, 42) which are arranged spaced apart from one another in the direction of travel of the wagon frame (40) and are connected by means of a member structure, wherein the member structure is a central longitudinal member (44, 244).

18. Method according to Claim 17, **characterized by** the use of a wagon frame whose longitudinal member (44, 244) has a rectangular spatial form cross section, preferably in the form of a hollow tube and, if appropriate, suitable reinforcement sheet-metal plates and/or reinforcement webs located on the inside.

19. Method according to Claim 17 or 18, **characterized by** the use of a wagon frame with prestressing means for generating a prestress in the longitudinal direction on the wagon frame in such a way that the flexural rigidity of the wagon frame is increased.

20. Method according to Claim 17 to 19, **characterized by** the use of a wagon frame whose longitudinal member (44) is embodied so as to be less wide than the gauge of the wheel sets of the bogies (41, 42).

21. Method according to one or more of Claim 17 to 20, **characterized by** the use of a wagon frame whose longitudinal member (44, 244) is offset bent downward in parallel between the bogies (41, 42), in such a way that its upper side (45) is arranged somewhat above the rotational axes of the wheel sets, in the vertical direction in the region of said rotational axes of the wheel sets.

22. Method according to one or more of Claims 17 to 21, **characterized by** the use of a wagon frame whose longitudinal member (44, 244) is embodied so as to be bent at both ends and is seated on the bogies (41, 42) with its free ends (46) above said bogies (41, 42).

23. Method according to one or more of Claims 17 to 22, **characterized by** the use of a wagon frame whose longitudinal member (44) has a width such that a wagon superstructure (1) can be fitted onto the longitudinal member (44).

24. Method according to one or more of Claims 17 to 23, **characterized by** the use of a wagon frame whose longitudinal member (44) interacts with a gap (10a) in a wagon superstructure (1) in such a way that the wagon superstructure (1) is secured in the vertical direction and in a transverse direction with respect to the longitudinal member (44).

25. Method according to one or more of Claims 17 to 24, **characterized by** the use of a wagon frame, in which there are means with which a wagon superstructure (1) can be secured with respect to the longitudinal member (44, 244), in the longitudinal direction of said longitudinal member (44, 244).

26. Method according to Claim 24 or 25, **characterized by** the use of a wagon frame, in which the means for locking and/or securing the wagon superstructure (1) with respect to the longitudinal member (44, 244) are arranged on the wagon frame in such a way that the wagon superstructure (1) essentially transmits no bending load to the longitudinal member (44, 244).

27. Method according to one Claims 17 to 26, **characterized by** the use of a wagon frame, in which the wagon frame (40), in particular the longitudinal member (44, 244) of the wagon frame (40), has such a low level of rigidity that the rigidity of the wagon frame (40) is insufficient to take up static and/or dynamic loads, in particular the weight load, of the wagon superstructure (1), in particular of the wagon superstructure (1) which is loaded with cargo (30), per se or solely for the sake of safe operation, in particular does not satisfy the loading capacity provided for maximum loading of the wagon (1, 40).

28. Method according to one or more of Claims 1 to 27, **characterized in that** a wagon superstructure (1) which is used for a wagon frame (40) has an essentially trough-shaped spatial form and a gap (10a) along its longitudinal extent at the bottom of the trough, which gap (10a) is arranged in the centre in the bottom of the trough in the transverse direction of the wagon superstructure (1).

29. Method according to Claim 28, **characterized by** the use of a wagon superstructure, which is formed from a first trough element (2) and a second trough element (3), wherein the trough elements (2, 3) have a spatial form which is approximately L-shaped in cross section and have a first trough element limb (4) and a second trough element limb (5).

30. Method according to Claim 28 and/or 29, **characterized by** the use of a wagon superstructure, in which the trough element limbs (4, 5) are connected by means of an oblique wall (6) in their corner region.

31. Method according to one or more of Claims 28 to 30, **characterized by** the use of a wagon superstructure, in which the second trough element limb (5) forms part of the bottom of the wagon superstructure (1), and the trough element limb (4) forms a lateral boundary wall of the wagon superstructure (1).

32. Method according to one or more of Claims 28 to 31, **characterized by** the use of a wagon superstructure, in which each trough element (2, 3) has an L-shaped, first free front end edge (8) and an L-shaped, second free front end edge (9) as well as a free longitudinal edge (10) which points to a longitudinal central plane (7) and has an upper free longitudinal edge (11).

33. Method according to one or more of Claims 28 to 32, **characterized by** the use of a wagon superstructure, in which the trough elements (2, 3) are arranged in such a way that the free longitudinal edges (10) lie opposite one another in parallel and spaced apart so that a gap (10a) is formed which corresponds to a longitudinal member (44) of a wagon frame (40).

34. Method according to one or more of Claims 28 to 33, **characterized by** the use of a wagon superstructure, in which the second trough element limb (5) are arranged lying in a plane, and the free front end edges (8, 9) of the trough elements (2, 3) end flush with one another.

35. Method according to one or more of Claims 28 to 34, **characterized by** the use of a wagon superstructure, in which a closing flap (13) which can pivot horizontally about an axle (12) is arranged at the free ends of the second trough element limb (5), in each case at the ends of the two trough elements (2, 3), which closing flap can pivot from a horizontal position, in which it ends flush with the trough limbs (5), into a vertical position in which the flap (13) bears against the free front end edges (9) of the first trough element limbs (4).

36. Method according to Claim 35, **characterized by** the use of a wagon superstructure in which, in the closed, folded-up position, the flap (13) ends flush, or somewhat below the level of the second longitudinal edges, with the trough elements (2, 3).

37. Method according to Claim 35 or 36, **characterized by** the use of a wagon superstructure in which the closing flap (13) has a first flat side (14) and a second flat side (15), wherein there are two narrow side boundary edges (16), one end edge (17) and one coupling edge (18).

38. Method according to one or more of Claims 35 to 37, **characterized by** the use of a wagon superstructure, in which, in the region of the coupling edge (18), the flap (13) is connected to the trough elements (2, 3) so as to be pivotable in an articulated fashion about the axle (12), over a length which corresponds to the width of the second trough element limb (5).

39. Method according to one or more of Claims 28 to 38, **characterized by** the use of a wagon superstructure, in which in each case two trough elements (2, 3), whose horizontal trough element limbs (5) lie opposite one another in a spaced-apart arrangement, form a main part of a wagon superstructure (1) in a symmetrical fashion with respect to the longitudinal central plane (7).

40. Method according to one or more of Claims 35 to 39, **characterized by** the use of a wagon superstructure, in which, in the region of the gap (10a), the flap (13) has a U-shaped recess which is open to the coupling edge (18) and which has two U-limb edges (19) and one bottom boundary edge (20).

41. Method according to Claim 40, **characterized by** the use of a wagon superstructure, in which the U-shaped recess is dimensioned in such a way that, in the horizontally folded-out state of the flap (13), it constitutes a prolongation of the flap (10a), and in the vertically folded-up position of the flap (13) it forms a vertical stop for a central longitudinal member (44) of a wagon frame (40).

42. Method according to one or more of Claims 35 to 41, **characterized by** the use of a wagon superstructure in which, in the folded-up state, the flap (13) can be connected to the trough elements (2, 3) by means of suitable locking elements.

43. Method according to one or more of Claims 35 to 42, **characterized by** the use of a wagon superstructure in which, in the region of the end edge (17) of the flap (13), run-up ramp elements (21) are connected to the flap (13) so as to be articulated about an axle (22).

44. Method according to Claim 43, **characterized by** the use of a wagon superstructure in which, in the folded-up position of the flap (13), the run-up ramp elements (21) rest on an underlying surface, flush with the second flat side (15).

45. Method according to Claim 43 or 44, **characterized by** the use of a wagon superstructure, in which the run-up ramp elements (21) have a wedge shape so that vehicles, for example a lorry or a lorry semi trailer, can drive into the wagon superstructure (1).

46. Method according to one or more of Claims 43 to 45, **characterized by** the use of a wagon superstructure in which, in the folded-up state of the flap (13) of the run-up ramp elements (21), are folded up against the second flat side (15) of the flaps (13) and locked there.

47. Method according to one or more of Claims 28 to 46, **characterized by** the use of a wagon superstructure in which support means (25) which can fold out are arranged along the longitudinal outer side of the wagon superstructure (1).

48. Method according to Claim 47, **characterized by** the use of a wagon superstructure in which the support means (25) are arranged on both sides along the longitudinal extent of the wagon superstructure (1) in such a way that both commercially available twenty-foot containers (31) and forty-foot containers (30) can be fitted onto the folded-out support means (25).

49. Method according to Claim 47 or 48, **characterized by** the use of a wagon superstructure, in which, in a position of rest, the supporting means (25) are arranged in a lowerable fashion in the first trough element limbs (4) of the trough elements (2, 3), and when necessary can be folded inward in the direction of the longitudinal central plane (7) by pulling up so that supporting faces for the containers (31, 32) are produced.

50. Method according to one or more of Claims 47 to 49, **characterized by** the use of a wagon superstructure in which, in the position of rest of the supporting means (25), said supporting means (25) do not project into the clearance between the trough elements (2, 3).

51. Method according to one or more of Claims 28 to 50, **characterized by** the use of a wagon superstructure which can be secured in the vertical direction and in a transverse direction with respect to the direction of travel on a longitudinal member (44) of a wagon frame (40) by means of the gap (10a) and the bottom boundary edges (20).

52. Method according to Claim 51, **characterized by** the use of a wagon superstructure which can be locked in a self-securing fashion.

53. Method according to one or more of Claims 28 to 52, **characterized by** the use of a wagon superstructure with which, together with a wagon frame (40), a wagon is formed, wherein floorboards (50) can be laid in the interior of the trough-shaped wagon superstructure (1), and the floorboards (50) have an upside (51) which ends flush with the longitudinal edges (11).

54. Method according to Claim 53, **characterized by** the use of a wagon superstructure in which the floorboards (50) have an essentially rectangular-panel-shaped spatial form with longitudinal edges (52) and narrow side edges (53), wherein the floorboards (50) are arranged in such a way that the narrow side edges (53) bear against the first trough element limbs (4) so that joints between the floorboards (50) are oriented transversely with respect to the direction of travel.

55. Method according to Claim 53 or 54, **characterized by** the use of a wagon superstructure which has vertically upwardly protruding stanchions (55) so that a wagon with stanchions can easily be formed from a flat wagon.

56. Method according to Claim 55, **characterized by** the use of a wagon superstructure in which the floorboards (50) are arranged in a somewhat lowered position compared to the level of the longitudinal edges (11) so as to form an intermediate floor.

57. Method according to one or more of Claims 28 to 56, **characterized by** the use of a wagon superstructure which has vertically upwardly protruding plate elements along the longitudinal edges (11) of the trough element limbs (4) and at the ends on the trough element limbs (5) so that a bulk freight wagon can easily be formed from a flat wagon.

58. Method according to one of Claims 28 to 57, **characterized by** the use of a wagon superstructure which is designed and/or configured to sit in a flat arrangement on the longitudinal member (244).

59. Method according to one of Claims 28 to 58, **characterized by** the use of a wagon superstructure which is of essentially one-part design.

60. Method according to one of Claims 28 to 59, **characterized by** the use of a wagon superstructure whose trough shape is closed in cross section, wherein the wagon superstructure has internal dimensions suitable for lorries to pass through and preferably has external dimensions within the valid profile limits, in particular for rail transport in the European Union, Spain and/or Eastern Europe.

61. Method according to one of Claims 29 to 60, **characterized by** the use of a wagon superstructure whose trough limb elements (4, 5) of the wagon superstructure (1) are of load-bearing, preferably hollow, design, in order to take up wagon loads.

62. Method according to one of Claims 35 to 61, **characterized by** the use of a wagon superstructure, one or both of whose closing flaps (13) form, together with a preferably foldable mechanism, a joint frame which has receptacles for securing cargo (30), in particular receptacles on an upper side for cargo positioning means, and/or which can be locked to the wagon superstructure (1).

63. Method according to Claim 62, **characterized by** the use of a wagon superstructure whose joint frames are configured to stabilize the trough limb elements (4, 5).

64. Method according to one of Claims 47 to 63, **characterized by** the use of a wagon superstructure whose supporting means (25) are configured to receive and/or to secure, in a frictionally locking and/or positively locking fashion, containers which rest on a lorry semi trailer or lorry power unit with a trailer, which has been driven into the wagon superstructure.

65. Method according to one of Claims 28 to 64, **characterized by** the use of a wagon superstructure which has at least one connecting device for connecting power supply means and/or signal transmission means to the wagon superstructure (1).

66. Method according to Claim 65, **characterized by** the use of a wagon superstructure which, when locked to the wagon frame (40), forms a unit which cannot be unlocked as long as the power supply means and/or signal transmission means are not connected to the connecting devices of the wagon superstructure (1).

67. Method according to Claim 66 **characterized by** the use of a wagon superstructure in which the wagon frame and/or wagon superstructure have an emergency unlocking device which is provided for unlocking the passively locked unit comprising the wagon superstructure and wagon frame.

68. Method according to one of Claims 28 to 67, **characterized by** the use of a wagon superstructure which is configured to slide on a layer of fluid.

69. Method according to one or more of Claims 1 to 68, in which a wagon (1, 40) is used comprising essentially a wagon superstructure (1) and a wagon frame (40) with at least one longitudinal member (44, 244), wherein
a) the wagon frame (40), in particular the longitudinal member (44, 244) of the wagon frame (40), has an insufficient loading capacity, in particular insufficient rigidity, for the predefined loading capacity of the wagon (1, 40),
b) the wagon frame (40) is locked to the wagon superstructure (1) using suitable unlockable locking elements, and.
c) the predefined loading capacity, in particular sufficient rigidity, of the wagon (1, 40) is achieved by means of the locking.

70. Loading and/or unloading device for wagon superstructures (1) of a rail vehicle (1, 40) having a wagon frame (40) for wagon superstructures (1), for carrying out the method according to one or more of Claims 1 to 69, having
a) a loading and unloading face (140) which is arranged adjacent to rail tracks (43), and
b1) lifting devices (101, 111, 201) for lifting a wagon superstructure (1) from a wagon frame (40) and lowering said wagon superstructure (1) on to it, said lifting devices (101, 111, 201) being arranged adjacent to the tracks (43, 243) and being embodied in such a way that they can act on the wagon superstructure (1) at one end and at the other end said lifting devices (101, 111) are supported directly or indirectly and independently of the wagon frame (40), on the ground area, adjacent to the tracks (43), or
b2) lifting devices (201) with walking beams (221) for lifting a wagon superstructure (1) from a wagon frame (40) and lowering said wagon superstructure (1) onto it, wherein the walking bars (221) can be displaced transversely with respect to the direction of the rails, and the lifting devices (201) are preferably arranged on the railway platform in such a way that they can act at one end on a wagon superstructure (1), and
c) means for moving the wagon superstructure transversely with respect to the direction of travel of the wagon, from a position vertically above the wagon frame (40) onto the loading and unloading face (140) in a position which is raised with respect to the wagon frame (40) wherein the lifting devices (101, 111, 201) have a load support (102) which interacts with an underside of the wagon superstructure (1) in such a way that the wagon superstructure (1) can be lifted with its underside at the level of the loading and/or unloading face (140), and
wherein the load supports (102) have roller elements (103) so that, after the lifting operation, the wagon superstructure (1) can be pushed in a transverse direction with respect to the direction of travel on the load supports (102).

71. Loading and/or unloading device according to Claim 70, **characterized in that** the loading and unloading device has a positioning device for positioning the wagon in its direction of travel.

72. Loading and/or unloading device according to Claim 70 or 71, **characterized in that** the loading and unloading device has means for levelling, in particular for horizontal and/or vertical levelling of the wagon (1, 40) and/or of the wagon superstructure (1) and/or of the wagon frame (40) so that the wagon frame (40) and/or the wagon superstructure (1) and/or the entire wagon (1, 40) can be levelled in all directions, in particular in the horizontal and/or vertical directions, longitudinally and transversely with respect to the direction of travel of the wagon (1, 40).

73. Loading and/or unloading device according to one or more of Claims 70 to 72, **characterized in that** the loading and/or unloading device (100) has a plurality of lifting devices (101) which are arranged along the tracks (43), on the outside next to the track rails.

74. Loading and/or unloading device according to one or more of Claims 70 to 73, **characterized in that** the lifting devices (101) are pneumatic or hydraulic lifting devices or mechanical lifting devices, in particular ones which are based on the wedge principle.

75. Loading and/or unloading device according to one or more of Claims 70 to 74, **characterized in that** the rolling elements (103) are rollers or ball elements.

76. Loading and/or unloading device according to one or more of Claims 70 or 75, **characterized in that** the loading and/or unloading face is a railway platform (140) which forms a plane with the load supports (102) in their raised position.

77. Loading and/or unloading device according to one or more of Claims 70 to 76, **characterized in that** the lifting devices (101) are arranged fixed to the track bed next to the wagons in their loading and unloading position.

78. Loading and/or unloading device according to one or more of Claims 70 to 77, **characterized in that** the lifting device (101) is embodied as a walking beam (111) which extends outside the rail tracks (43) adjacent to the rail, and rests on a rolling surface (110) which is fixed to the ground adjacent to the track bed, or is supported directly or indirectly on this rolling surface (110).

79. Loading and/or unloading device according to Claim 78, **characterized in that** the walking beam (111) is embodied with an essentially rectangular cross section with an upper side (112), an underside (113) and a first free end (114) and a second free end (115), wherein supporting rollers (116) are arranged in the region of the underside (113), preferably in the region of the free ends, so that the walking beam (111) is slightly displaceable in its longitudinal direction, which extends parallel to the direction of the track, on the rolling surface (110).

80. Loading and/or unloading device according to Claim 79, **characterized in that** the free ends (114, 115) are embodied at an acute angle with respect to the rolling surface (110) so that ramp faces (117) are formed which point to the rolling surface (110).

81. Loading and/or unloading device according to Claim 80, **characterized in that** supporting rollers (116) are arranged in the region of the ramp faces (117).

82. Loading and/or unloading device according to one or more of Claims 78 to 81, **characterized in that** during the loading and/or unloading operation the walking beam (111) is arranged approximately centrally with respect to the longitudinal extent of the wagon superstructure (1), underneath the wagon superstructure (1).

83. Loading and/or unloading device according to one or more of Claims 78 to 82, **characterized in that** there is a positioning device (120) for positioning the wagon superstructure (1) together with the wagon frame (40) with respect to the walking beam (111).

84. Loading and/or unloading device according to one or more of Claims 78 to 83, **characterized in that** rolling elements (103), which correspond to the rolling elements (103) on the railway platform (140), are arranged on the upper side (112) of the walking beam (111).

85. Loading and/or unloading device according to one or more of Claims 83 to 84, **characterized in that** the positioning device (120) has, aligned with the walking beam (111) in the longitudinal direction and spaced apart from the free ends (114, 115), a positioning/lifting carriage (121) which is capable of being displaced in a driveable fashion on supporting rollers (116), parallel to the direction of travel of the wagon (1, 40) on the rolling surface (110).

86. Loading and/or unloading device according to Claim 85, **characterized in that** the positioning/lifting carriage (121) is coupled to a linear drive (122), wherein the linear drive (122) is connected at one end to the positioning/lifting carriage (121) and is fastened at the other end to a counter bearing block (123) which is fixed to the ground.

87. Loading and/or unloading device according to Claim 86, **characterized in that** the linear drive is of pneumatic, hydraulic, mechanical, electrical or electromagnetic design.

88. Loading and/or unloading device according to one or more of Claims 85 to 87, **characterized in that** the positioning/lifting carriage (121) has a first free end (124) which faces one of the free ends (114, 115) of the walking beam (111), and a counter-ramp face (125) which corresponds to the ramp face (117).

89. Loading and/or unloading device according to one or more of Claims 85 to 88, **characterized in that** the positioning/lifting carriage (121) has an upper side (126) which, in the position of rest, runs approximately aligned with the upper side (112) of the walking beam and, with respect to the level, is arranged underneath the wagon superstructure (1).

90. Loading and/or unloading device according to Claim 88 or 89, **characterized in that** a catch hook element (128) which is arranged so as to be pivotable about an angle (127) and has a hook base (129) and a hook projection (130) is arranged in the region of the upper side (126) adjacent to the free end (124), wherein the hook base is of longitudinally extended, web-shaped design and extends from the axle (127) approximately over one third of the positioning/lifting carriage (121) from the first free end (124) away in the direction of a second free end (131) of the positioning/lifting carriage (121), wherein the hook projection (130) extends from the hook base (129) at the end for a certain distance in an approximately vertically upward direction.

91. Loading and/or unloading device according to Claim 90, **characterized in that** in the position of rest the catch hook element (128) is arranged in such a way that the hook projection (130) is arranged at or somewhat below the level of the upper side (126) of the positioning/lifting carriage (121).

92. Loading and/or unloading device according to one or more of Claims 90 or 91, **characterized in that** a guide roller (132), which interacts with a run-up bracket (133) which is fixed to the ground and has a ramp face (134), is arranged on the hook base (129) opposite the hook projection (130).

93. Loading and/or unloading device according to Claim 92, **characterized in that** the ramp face (134) of the run-up bracket (133) of the guide roller (132) of the catch hook element (128) is assigned in such a way that in a position of rest the hook projection (130) comes to rest approximately at the level of the upper side (126) of the positioning/lifting carriage (121).

94. Loading and/or unloading device according to one or more of Claims 90 to 93, **characterized in that**, corresponding to the hook element (128), in particular its upper edge (135), of the hook base (129), the wagon frame (40) has a corresponding supporting roller (136) which is arranged in such a way that it can interact with the upper edge (135) of the hook base.

95. Loading and/or unloading device according to one or more of Claims 90 to 94, **characterized in that** the catch hook element (128) together with the axle (127) can be moved relative to the positioning/lifting carriage (121) in the longitudinal direction of said positioning/lifting carriage (121) and is damped by means of a spring and/or damping device (137), in particular can be moved to the end (131) of the positioning/lifting carriage (121) with damped prestress with respect to the positioning/lifting carriage (121).

96. Loading and/or unloading device according to one or more of Claims 70 to 95, **characterized in that** the lifting devices (101, 111) are lever arrangements or scissor arrangements.

97. Loading and/or unloading device according to one or more of Claims 70 to 96, **characterized in that** at least a selection of the roller elements (103) of the lifting devices (101, 111) can be driven by motor.

98. Loading and/or unloading device according to Claim 97, **characterized in that** the rolling elements (103) can be driven electrically, electromagnetically, hydraulically or pneumatically.

99. Loading and/or unloading device according to one or more of Claims 70 to 98, **characterized in that** the roller elements (103) can be driven directly or by actuation by the railway platform.

100. Loading and/or unloading device according to one or more of Claims 70 to 99, **characterized in that** the drive energy for all the drives of the loading and/or unloading devices (100) is generated centrally.

101. Loading and/or unloading device according to one or more of Claims 70 to 100, **characterized in that** devices for locking the wagon (1, 40) in the longitudinal direction of the wagon (1, 40) are present during the loading and/or unloading operation.

102. Loading and/or unloading device according to Claim 70, **characterized in that** the lifting devices (201) have supply terminals for supplying energy and/or signal terminals for transmitting signals, they engage, if appropriate, in the wagon (1, 40) and/or they can be connected to the wagon (1, 40) by means of corresponding terminals of the wagon (1, 40).

103. Loading and/or unloading device according to Claim 102, **characterized in that** the lifting devices (201) are configured in such a way that if the first and the second train sections are arranged one next to the other, walking beams of adjacently arranged lifting devices can be extended, if appropriate beyond an intermediate track, and the extended walking beams (221) engage one in the other in order to form a bridge, wherein the wagon superstructure (1) can be transferred from the wagon frame (40) of a first train to an associated wagon frame of a second train by means of the bridge.

104. Loading and/or unloading device according to Claim 103, **characterized in that** the horizontal walking beams (221) of the lifting devices (201) are configured for an essentially horizontal movement, during which the lifting devices (201), in particular the walking beams (221), interact with ramp faces (217) and/or corresponding wagon faces and/or corresponding faces of the wagon superstructure in order to bring about an essentially small amount of travel of the wagon superstructure (1), wherein the amount of travel is sufficient to overcome differences in height dependent on the wagon frame and/or bogie.

105. Loading and/or unloading device according to Claim 103 or 104, **characterized in that** the walking beams (221) are arranged essentially horizontally and transversely with respect to the longitudinal direction of the rail.

106. Loading and/or unloading device according to one of Claims 103 to 105, **characterized in that** the walking beams (221) can be moved into a position of rest in which the walking beams (221) are arranged outside a predefined track region (243), in particular outside valid profile limits for goods traffic by rail, and are configured to be extended, for example on supporting rollers in rolling surfaces which are fixed to the railway platform, until ramp faces (225) which are formed on the end face of the walking beams (221) engage in associated faces (217) of the wagons (1, 40), in particular of the wagon longitudinal members, wherein the wagon longitudinal member is preferably centred and/or locked horizontally, vertically and/or in the longitudinal direction.

107. Loading and/or unloading device according to one of Claims 103 to 106, **characterized in that** the walking beams (221) can be engaged with the wagon frame (40) in such a way that an upper edge of the walking beam (221) is arranged in a preferably horizontal plane with an upper edge of the wagon longitudinal member of the wagon frame (40), wherein a loading and unloading face is formed which is arranged essentially horizontally, preferably at maximum at the level of the same plane.

108. Loading and/or unloading device according to one of Claims 103 to 107, **characterized by** a device for forming a supporting film, in particular a fluid supporting film, on a supporting surface for the wagon superstructure (1), wherein the supporting surface is formed on the loading and/or unloading device and on the wagon superstructure (1).

109. Loading and/or unloading device according to one of Claims 103 to 107, **characterized by** a device for heating and/or cleaning elements of the loading and/or unloading device, the surface of which forms the supporting surface for the wagon superstructure (1), in particular for heating and/or cleaning the supporting surface which is formed on the walking beams (221).

## Revendications

1. Procédé pour le chargement et le déchargement de wagon à rails selon lequel, au moins un wagon, comprenant un châssis de wagon (40) et un dessus de wagon (1), est amené dans une position de chargement et de déchargement et :
a) lors du chargement, le dessus de wagon (1) est soulevé par rapport au châssis de wagon au moyen de dispositifs de levage (101, 111) à un niveau de déchargement, le dessus de wagon (1) étant déplacé après le soulèvement au niveau de déchargement dans une direction transversale à un plan longitudinal du wagon (7) jusqu'à ce que le dessus du wagon (1) repose complètement sur une surface de chargement et de déchargement (140) et
b) lors du chargement, le dessus de wagon (1) est déplacé de la surface de chargement et de déchargement (140) transversalement au plan longitudinal de wagon (7) jusqu'au-dessus du châssis de wagon (40), lequel dessus de wagon (1) étant abaissé au moyen des dispositifs de levage (101, 111) sur le châssis de wagon (40) se trouvant dans la position de chargement et de déchargement,
**caractérisé en ce que**
le soulèvement et l'abaissement des dessus de wagon (1) sont effectués au moyen de dispositifs de levage (101, 111) liés au ballast de voie ou solidaires du quai.

2. Procédé selon la revendication 1,
**caractérisé en ce que**
le wagon (1, 40) est prépositionné de façon approximative au moyen d'une locomotive titulaire pour le chargement et le déchargement et est positionné de façon fine au moyen d'un dispositif de positionnement (121) dans la position de chargement et de déchargement.

3. Procédé selon la revendication 1 et/ou 2,
**caractérisé en ce qu'**une mise à niveau horizontale du wagon (1, 40) intervient dans le sens longitudinal et transversal avant le soulèvement du dessus de wagon (1).

4. Procédé selon l'une quelconque ou plusieurs des revendications précédentes,
**caractérisé en ce que**
la mise à niveau horizontale s'effectue au moyen du dispositif de positionnement (120) qui agit sur le châssis de wagon (40).

5. Procédé selon l'une quelconque ou plusieurs des revendications précédentes,
**caractérisé en ce que**
le dessus de wagon (1) est soulevé au niveau du quai (50).

6. Procédé selon l'une quelconque ou plusieurs des revendications précédentes,
**caractérisé en ce que**
le châssis de wagon (40) est bloqué pendant l'opération de chargement et de déchargement dans le sens de la marche.

7. Procédé selon l'une quelconque ou plusieurs des revendications précédentes,
**caractérisé en ce que**
le chargement et le déchargement du dessus de wagon s'effectuent sur le quai (50) indépendamment de la présence d'un châssis de wagon (40).

8. Procédé selon l'une quelconque ou plusieurs des revendications précédentes,
**caractérisé en ce que**
le dessus de wagon est guidé de façon stable au déversement pendant l'ensemble de l'opération de chargement et de déchargement.

9. Procédé selon l'une quelconque ou plusieurs des revendications précédentes,
**caractérisé en ce que**
la mise à niveau horizontale des wagons (1, 40) intervient directement avant l'opération de soulèvement proprement dite du dessus de wagon (1), la mise à niveau s'effectuant dans une première phase et le soulèvement dans une seconde phase d'un mouvement uniforme du dispositif de levage (111).

10. Procédé selon l'une quelconque ou plusieurs des revendications précédentes,
**caractérisé en ce que**
les châssis de wagon sont libérés automatiquement à nouveau dans le sens de marche après la fin de l'opération de chargement et déchargement.

11. Procédé selon l'une quelconque des revendications précédentes, le premier wagon étant transféré dans la position de déchargement et un second wagon dans la position de chargement,
**caractérisé par** les étapes suivantes :
- l'écartement latéral du dessus de wagon (1) du châssis du premier wagon, et
- le rapprochement latéral du dessus de wagon du châssis wagon du second wagon.

12. Procédé selon la revendication 11,
**caractérisé par** l'étape suivante :
- l'agencement du second châssis de wagon à côté du premier châssis de wagon de telle sorte que le dessus de wagon est glissé sur le second châssis de wagon, alors que le dessus de wagon est écarté du premier châssis de wagon.

13. Procédé pour le transbordement de charge d'un premier train à un second train sur une position de chargement et de déchargement avec des dispositifs de levage (101, 111 ; 201, 221) liés au ballast ou solidaires du quai, ce procédé comprenant les étapes dé la revendication 1 et les étapes suivantes :
- le transfert en position de déchargement, du premier train avec au moins un premier wagon (1, 40), qui comprend un châssis de wagon (40) et un dessus de wagon (1) avec la charge,
- le soulèvement du dessus de wagon (1) par rapport au châssis de wagon (40) au moyen des dispositifs de levage (101, 111 ; 201, 221),
- le déplacement du dessus de wagon (1) dans une direction transversalement à un plan longitudinal du wagon (7) du premier train jusqu'à ce que le dessus de wagon (1) ne soit pratiquement pas disposé au-dessus du premier châssis de wagon (40),
- le transfert en position de chargement, du second train comprenant au moins un second wagon, qui comprend un châssis de wagon (40),
- le déplacement du dessus de wagon (1) dans une direction transversale à un plan longitudinal de wagon (7) du second wagon jusqu'à ce que le dessus de wagon (1) soit disposé au-dessus du châssis de wagon (40) du second wagon,
- l'abaissement du dessus de wagon (1) au moyen des dispositifs de levage (101, 111 ; 201, 221) sur le second châssis de wagon (40).

14. Procédé selon la revendication 13,
**caractérisé en ce que**
le premier et le second trains sont disposés l'un à côté de l'autre sur la position de chargement et de déchargement, alors que le dessus de wagon (1) est transbordé du châssis de wagon (40) du premier train sur le châssis de wagon du second train.

15. Procédé selon la revendication 13,
**caractérisé en ce que**
le premier train est disposé à côté de la position de chargement et de déchargement, dans lequel le dessus de wagon (1) est transféré à partir du châssis de wagon (40) du premier train, et **en ce que** le second train est disposé à côté de la position de chargement et de déchargement, à partir de laquelle le dessus de wagon (1) est transféré au châssis de wagon du second train.

16. Procédé selon la revendication 15,
**caractérisé en ce que**,
après le déchargement du premier train, le second train est amené à l'emplacement du premier train à côté de la position de déchargement et de chargement, et le dessus de wagon (1) est transféré sur le châssis de wagon (40) voisin du second train.

17. Procédé selon l'une quelconque ou plusieurs des revendications 1 à 16,
**caractérisé en ce que**
un châssis de wagon est utilisé pour la réception d'un dessus de wagon (1) présentant deux bogies (41, 42), qui sont disposés à distance l'un de l'autre dans le sens de marche du châssis de wagon (40) et sont reliés au moyen d'une construction porteuse, la construction porteuse étant un longeron médian (44, 244) central.

18. Procédé selon la revendication 17,
**caractérisé par** l'utilisation d'un châssis de wagon, dont le longeron (44, 244) présente une forme d'espace rectangulaire creuse, de préférence tubulaire, rectangulaire en section et présente éventuellement des tôles de renfort et/ou des nervures de renfort appropriées et situées à l'intérieur.

19. Procédé selon la revendication 17 ou 18,
**caractérisé par** l'utilisation d'un châssis de wagon avec des moyens de précontrainte pour générer une précontrainte dans le sens longitudinal sur le châssis de wagon de telle sorte qu'une rigidité à la flexion du châssis de wagon est élevée.

20. Procédé selon l'une quelconque des revendications 17 à 19,
**caractérisé par** l'utilisation d'un châssis de wagon, dont le longeron (44) est réalisé plus faible dans sa largeur que l'écartement de voie des essieux montés des bogies (41, 42).

21. Procédé selon l'une quelconque ou plusieurs des revendications 17 à 20,
**caractérisé par** l'utilisation d'un châssis de wagon, dont le longeron (44, 244) entre les bogies (41, 42) est décalé en parallèle coudé vers le bas de telle sorte que son côté supérieur (45) est disposé dans la direction verticale dans la zone des axes de rotation d'essieu monté légèrement au-dessus de ceux-ci.

22. Procédé selon l'une quelconque ou plusieurs des revendications 17 à 21,
**caractérisé par** l'utilisation d'un châssis de wagon, dont le longeron (44, 244) est conçu coudé sur les deux extrémités et repose par ses deux extrémités (46) au-dessus des bogies (41, 42) sur ceux-ci.

23. Procédé selon l'une quelconque ou plusieurs des revendications 17 à 22,
**caractérisé par** l'utilisation d'un châssis de wagon, dont le longeron (44) présente une largeur telle qu'un dessus de wagon (1) peut être emboîté sur le longeron (44).

24. Procédé selon l'une quelconque ou plusieurs des revendications 17 à 23,
**caractérisé par** l'utilisation d'un châssis de wagon, dont le longeron (44) coopère avec un vide (10a) d'un dessus de wagon (1) de telle sorte que le dessus de wagon (1) est fixé dans la direction verticale et dans une direction transversale au longeron (44).

25. Procédé selon l'une quelconque ou plusieurs des revendications 17 à 24,
**caractérisé par** l'utilisation d'un châssis de wagon, sur lequel sont présents des moyens avec lesquels un dessus de wagon (1) peut être fixé par rapport au longeron (44, 244) dans sa direction longitudinale.

26. Procédé selon la revendication 24 ou 25,
**caractérisé par** l'utilisation d'un châssis de wagon, sur lequel les moyens destinés à l'arrêt et/ou à la fixation du dessus de wagon (1) par rapport au longeron (44, 244) sont disposés sur le châssis de wagon de telle sorte que le dessus de wagon (1) ne transfère pratiquement pas de charge de flexion au longeron (44, 244).

27. Procédé selon l'une quelconque des revendications 17 à 26,
**caractérisé par** l'utilisation d'un châssis de wagon, sur lequel le châssis de wagon (40), en particulier le longeron (44, 244) du châssis de wagon (40) présente une rigidité si faible que la rigidité du châssis de wagon (40) est insuffisante en soi respectivement seulement pour l'exploitation sûre pour la réception de charges statiques et/ou dynamiques, en particulier la charge de poids, du dessus de wagon (1), en particulier du dessus de wagon (1) chargé avec un chargement (30), en particulier qui ne répond pas à une capacité de charge prévue pour un chargement maximum du wagon (1, 40).

28. Procédé selon l'une quelconque ou plusieurs des revendications 1 à 27,
**caractérisé en ce que**
un dessus de wagon (1) est utilisé pour un châssis de wagon (40) qui présente une forme de construction sensiblement en forme de cuve et un vide (10a) le long de son extension longitudinale sur le fond de caisse, qui est disposé dans le sens transversal du dessus de wagon (1) au centre dans le fond de caisse.

29. Procédé selon la revendication 28,
**caractérisé par** l'utilisation d'un dessus de wagon, qui est formé d'un premier élément de caisse (2) et d'un second élément de caisse (3), les éléments de caisse (2, 3) présentant une forme de construction avec une section à peu près en L avec une première branche d'élément de caisse (4) et une seconde branche d'élément de caisse (5).

30. Procédé selon la revendication 28 et/ou 29,
**caractérisé par** l'utilisation d'un dessus de wagon, sur lequel les branches d'élément de caisse (4, 5) sont reliées dans leur zone rectangle au moyen d'une paroi inclinée (6).

31. Procédé selon l'une quelconque ou plusieurs des revendications 28 à 30,
**caractérisé par** l'utilisation d'un dessus de wagon, sur lequel la seconde branche d'élément de caisse (5) forme une partie du fond du dessus de wagon (1) et la branche d'élément de caisse (4) forme une paroi de délimitation latérale du dessus de caisse (1).

32. Procédé selon l'une quelconque ou plusieurs des revendications 28 à 31,
**caractérisé par** l'utilisation d'un dessus de wagon, sur lequel chaque élément de caisse (2, 3) présente une première arête d'extrémité avant (8) libre en forme de L et une seconde arête d'extrémité avant (9) libre en forme de L ainsi qu'une arête longitudinale (10) libre dirigée vers un plan médian longitudinal (7) et une seconde arête longitudinale (11) libre supérieure.

33. Procédé selon l'une quelconque ou plusieurs des revendications 28 à 32,
**caractérisé par** l'utilisation d'un dessus de wagon, sur lequel les éléments de caisse (2, 3) sont disposés de telle sorte que les arêtes longitudinales (10) libres se font face de façon parallèle et espacée, de sorte qu'un vide (10a) est formé, lequel correspond à un longeron (44) d'un châssis de wagon (40).

34. Procédé selon l'une quelconque ou plusieurs des revendications 28 à 33,
**caractérisé par** l'utilisation d'un dessus de wagon, sur lequel les secondes branches d'élément de caisse (5) sont disposées allongées dans un plan et les arêtes d'extrémité avant (8, 9) libres des éléments de caisse (2, 3) se terminent en affleurement les unes avec les autres.

35. Procédé selon l'une quelconque ou plusieurs des revendications 28 à 34,
**caractérisé par** l'utilisation d'un dessus de wagon, sur lequel sur les extrémités libres des secondes branches d'élément de caisse (5), à chaque fois un clapet de fermeture (13) pouvant basculer horizontalement autour d'un axe (12) est disposé côté avant sur chacun des deux éléments de caisse (2, 3), lequel clapet peut être basculé d'une position horizontale, se terminant en affleurement avec les branches de caisse (5) dans une position verticale, dans laquelle le clapet (13) s'appuie sur les arêtes d'extrémité avant (9) libres des premières branches d'élément de caisse (4).

36. Procédé selon la revendication 35,
**caractérisé par** l'utilisation d'un dessus de wagon, sur lequel, dans la position fermée et pliée, le clapet (13) se termine en affleurement ou légèrement au-dessous du niveau des secondes arêtes longitudinales des éléments de caisse (2, 3).

37. Procédé selon la revendication 35 ou 36,
**caractérisé par** l'utilisation d'un dessus de wagon, sur lequel le clapet de fermeture (13) présente un premier côté plat (14) et un second côté plat (15), deux arêtes de délimitation latérales étroites (16), une arête d'extrémité (17) et une arête d'articulation (18) étant présentes.

38. Procédé selon l'une quelconque ou plusieurs des revendications 35 à 37,
**caractérisé par** l'utilisation d'un dessus de wagon, sur lequel, dans la zone de l'arête d'articulation (18), le clapet (13) est relié aux éléments de caisse (2, 3) de façon basculante et articulé autour de l'axe (12) sur une longueur qui correspond à la largeur des secondes branches d'élément de caisse (5).

39. Procédé selon l'une quelconque ou plusieurs des revendications 28 à 38,
**caractérisé par** l'utilisation d'un dessus de wagon, sur lequel, de façon symétrique par rapport au plan médian longitudinal (7), à chaque fois deux éléments de caisse (2, 3), qui se font face à distance avec leurs branches horizontales d'élément de caisse (5), forment une partie principale du dessus de wagon (1).

40. Procédé selon l'une quelconque ou plusieurs des revendications 35 à 39,
**caractérisé par** l'utilisation d'un dessus de wagon, sur lequel, dans la zone du vide (10a), le clapet (13) présente un évidement en U ouvert en direction de l'arête d'articulation (18), qui présente deux arêtes de branche en U (19) et une arête de délimitation de fond (20).

41. Procédé selon la revendication 40,
**caractérisé par** l'utilisation d'un dessus de wagon, sur lequel l'évidement en U est dimensionné de telle sorte qu'il représente un prolongement du vide (10a) lorsque le clapet (13) est dans l'état rabattu horizontalement et, dans la position repliée verticalement du clapet (13), forme une butée verticale pour un longeron médian (44) d'un châssis de wagon (40).

42. Procédé selon l'une quelconque ou plusieurs des revendications 35 à 41,
**caractérisé par** l'utilisation d'un dessus de wagon, sur lequel, dans l'état replié, le clapet (13) peut être relié au moyen d'éléments de verrouillage appropriés aux éléments de caisse (2, 3).

43. Procédé selon l'une quelconque ou plusieurs des revendications 35 à 42,
**caractérisé par** l'utilisation d'un dessus de wagon, sur lequel, dans la zone de l'arête d'extrémité (17) du clapet (13), des éléments de rampe d'accès (21) sont reliés au clapet (13) de façon articulée autour d'un axe (22).

44. Procédé selon la revendication 43,
**caractérisé par** l'utilisation d'un dessus de wagon, sur lequel, lorsque le clapet (13) est dans la position repliée, les éléments de rampe d'accès (21) reposent sur un support en affleurement avec le second côté plat (15).

45. Procédé selon la revendication 43 ou 44,
**caractérisé par** l'utilisation d'un dessus de wagon, sur lequel les éléments de rampe d'accès (21) présentent une forme de clavette, de sorte que les véhicules, par exemple un camion ou une remorque de camion, peuvent s'engager dans le dessus de wagon (1).

46. Procédé selon l'une quelconque ou plusieurs des revendications 43 à 45,
**caractérisé par** l'utilisation d'un dessus de wagon, sur lequel, lorsque le clapet (13) est dans l'état replié, les éléments de rampe d'accès (21) sont repliés sur le second côté plat (15) des clapets (13) et y sont verrouillés.

47. Procédé selon l'une quelconque ou plusieurs des revendications 28 à 46,
**caractérisé par** l'utilisation d'un dessus de wagon, sur lequel sont disposés des moyens d'appui (25) basculants le long du côté extérieur longitudinal du dessus de wagon (1).

48. Procédé selon la revendication 47,
**caractérisé par** l'utilisation d'un dessus de wagon, sur lequel les moyens d'appui (25) sont disposés des deux côtés le long de l'extension longitudinale du dessus de wagon (1) de telle sorte que aussi bien 20 conteneurs sur pied (31) classiques que 40 conteneurs sur pied (32) peuvent être posés sur les moyens d'appui (25) basculés.

49. Procédé selon la revendication 47 ou 48,
**caractérisé par** l'utilisation d'un dessus de wagon, sur lequel les moyens d'appui (25) sont disposés de façon enfoncée dans une position de repos dans les premières branches (4) des éléments de caisse (2, 3) et peuvent se plier au besoin par le relèvement vers l'intérieur en direction du plan médian longitudinal (7), de sorte que des surfaces d'appui pour les conteneurs (31, 32) sont formées.

50. Procédé selon l'une quelconque ou plusieurs des revendications 47 à 49,
**caractérisé par** l'utilisation d'un dessus de wagon, sur lequel, lorsque les moyens d'appui (25) sont dans la position de repos, ceux-ci ne dépassent pas dans la largeur intérieure libre entre les éléments de caisse (2, 3).

51. Procédé selon l'une quelconque ou plusieurs des revendications 28 à 50,
**caractérisé par** l'utilisation d'un dessus de wagon, qui peut être fixé au moyen du vide (10a) et des arêtes de délimitation de sol (20) sur un longeron (44) d'un châssis de wagon (40) dans la direction verticale et dans une direction transversale au sens de marche.

52. Procédé selon la revendication 51,
**caractérisé par** l'utilisation d'un dessus de wagon, qui peut être arrêté de façon autobloquante.

53. Procédé selon l'une quelconque ou plusieurs des revendications 28 à 52,
**caractérisé par** l'utilisation d'un dessus de wagon, avec lequel un wagon est formé avec un châssis de wagon (40), des planchers de fond (50) pouvant être introduits à l'intérieur du dessus de wagon (1) en forme de caisse et les planchers de sol (50) présentant un côté supérieur (51) qui se termine en affleurement avec les arêtes longitudinales (11).

54. Procédé selon la revendication 53,
**caractérisé par** l'utilisation d'un dessus de wagon, sur lequel les planchers de sol (50) présentent une forme de construction sensiblement en forme de plaque hexagonale avec des arêtes longitudinales (52) et des arêtes latérales étroites (53), les planchers de sol (50) étant disposés de telle sorte que les arêtes latérales étroites (53) s'appuient sur les premières branches d'élément de caisse (4), de sorte que des joints entre les planchers de sol (50) sont orientés transversalement à la direction de marche.

55. Procédé selon la revendication 53 ou 54,
**caractérisé par** l'utilisation d'un dessus de wagon, qui présente des ranchers (55) dépassant verticalement vers le haut le long des arêtes longitudinales (11) des branches d'élément de caisse (4), de sorte qu'un wagon à ranchers peut être formé de façon simple à partir d'un wagon plat.

56. Procédé selon la revendication 55,
**caractérisé par** l'utilisation d'un dessus de wagon, sur lequel les planchers de sol (50) sont disposés légèrement abaissés par rapport au niveau des arêtes longitudinales (11) en formant un fond intermédiaire.

57. Procédé selon l'une quelconque ou plusieurs des revendications 28 à 56,
**caractérisé par** l'utilisation d'un dessus de wagon, qui présente des éléments de plaque qui partent verticalement vers le haut le long des arêtes longitudinales (11) des branches d'élément de caisse (4) et côté avant sur les branches d'élément de caisse (5), de sorte qu'un wagon pour le transport de matières en vrac peut être formé de façon simple à partir d'un wagon plat.

58. Procédé selon l'une quelconque des revendications 28 à 57,
**caractérisé par** l'utilisation d'un dessus de wagon, qui est conçu et/ou aménagé pour un emplacement à plat sur le longeron (244).

59. Procédé selon l'une quelconque des revendications 28 à 58,
**caractérisé par** l'utilisation d'un dessus de wagon, qui est conçu pratiquement d'une seule pièce.

60. Procédé selon l'une quelconque des revendications 28 à 59,
**caractérisé par** l'utilisation d'un dessus de wagon, dont la forme de caisse est fermée en section, le dessus de wagon présentant des dimensions intérieures appropriées pour le passage de camion et de préférence des dimensions extérieures situées dans des limites de profil valables, en particulier pour un transport sur rails dans l'Union européenne, en Espagne et/ou dans l'Europe de l'Est.

61. Procédé selon l'une quelconque des revendications 29 à 60,
**caractérisé par** l'utilisation d'un dessus de wagon, dont les éléments de branche de caisse (4, 5) du dessus de wagon (1) sont conçus porteurs pour la réception de la charge du wagon, de préférence creux.

62. Procédé selon l'une quelconque des revendications 35 à 61,
**caractérisé par** l'utilisation d'un dessus de wagon, dont un clapet de fermeture ou les deux clapets de fermeture (13) forment conjointement avec un mécanisme de préférence pliable un châssis articulé qui présente des logements pour le verrouillage de la charge utile (30), en particulier sur le côté supérieur des logements pour un moyen de positionnement de charge et/ou peut être verrouillé avec le dessus de wagon (1).

63. Procédé selon la revendication 62,
**caractérisé par** l'utilisation d'un dessus de wagon, dont les châssis articulés sont aménagés pour la stabilisation des éléments de branche de caisse (4, 5).

64. Procédé selon l'une quelconque des revendications 47 à 63,
**caractérisé par** l'utilisation d'un dessus de wagon, dont les moyens d'appui (25) sont aménagés pour le logement et/ou le blocage par adhérence des forces et/ou par complémentarité de formes de conteneurs, qui reposent sur un tracteur routier de camion ou un véhicule tracteur de camion avec remorque qui est entré dans le dessus du wagon.

65. Procédé selon l'une quelconque des revendications 28 à 64,
**caractérisé par** l'utilisation d'un dessus de wagon, qui présente au moins un dispositif de raccordement pour le raccordement de moyens d'alimentation en énergie et/ou de moyens de transmission de signal au dessus de wagon (1).

66. Procédé selon la revendication 65,
**caractérisé par** l'utilisation d'un dessus de wagon, qui, verrouillé avec le châssis de wagon (40), forme une unité qui n'est pas déverrouillable aussi longtemps que les moyens d'alimentation en énergie et/ou les moyens de transmission de signal ne sont pas raccordés aux dispositifs de raccordement du dessus de wagon (1).

67. Procédé selon la revendication 66,
**caractérisé par** l'utilisation d'un dessus de wagon, sur lequel le châssis de wagon et/ou le dessus de wagon présentent un dispositif de déverrouillage de secours qui est prévu pour le déverrouillage de l'unité verrouillée de façon passive du dessus du wagon et du châssis de wagon.

68. Procédé selon l'une quelconque des revendications 28 à 67,
**caractérisé par** l'utilisation de dessus de wagon, qui est aménagé pour glisser sur une couche fluide.

69. Procédé selon l'une quelconque ou plusieurs des revendications 1 à 68, sur lequel on utilise un wagon (1, 40) constitué essentiellement d'un dessus de wagon (1) et d'un châssis de wagon (40) avec au moins un longeron (44,244),
a) le châssis de wagon (40) en particulier le longeron (44, 244) du châssis de wagon (40), présentant une capacité de charge insuffisante, en particulier une rigidité insuffisante pour la capacité de charge prédéfinie du wagon (1, 40),
b) le châssis de wagon (40) étant verrouillé avec des éléments de verrouillage déverrouillables et appropriés avec le dessus du wagon (1),
c) par le verrouillage, on obtient la capacité de charge prédéfinie, en particulier la rigidité suffisante, du wagon (1, 40).

70. Dispositif de chargement et/ou de déchargement pour des dessus de wagon (1) d'un wagon à rails (1, 40), présentant un châssis de wagon (40) pour des dessus de wagon (1) pour la mise en oeuvre du procédé selon l'une quelconque ou plusieurs des revendications 1 à 69, comprenant
a) une surface de chargement et de déchargement (140), qui est disposée à proximité des voies ferrées (43), et
b1) des dispositifs de levage (101, 111, 201) pour le soulèvement et l'abaissement d'un dessus de wagon (1) à partir d'un châssis de wagon ou sur un châssis de wagon (40), qui sont disposés à proximité des voies (43, 243) et sont réalisés de telle sorte qu'ils peuvent agir par une extrémité sur le dessus de wagon (1) et s'appuient par l'autre extrémité directement ou indirectement par le châssis de wagon (40) indépendamment sur la zone de fond à proximité des voies (43) ou
b2) des dispositifs de levage (201) comprenant des poutres de levage (221) pour le soulèvement et l'abaissement d'un dessus de wagon (1) d'un châssis ou sur un châssis de wagon (40), les poutres de levage (221) pouvant coulisser transversalement à la direction des rails et les dispositifs de levage (201) étant disposés de préférence sur le quai de telle sorte qu'ils peuvent agir par une extrémité sur un dessus de wagon (1), et
c) des moyens pour le déplacement du dessus de wagon dans une position soulevée par rapport au châssis de wagon (40), transversalement au sens de marche du wagon à partir d'une position verticalement au-dessus du châssis du wagon (40) en direction de la surface de chargement et de déchargement (140), les dispositifs de levage (101, 111, 201) présentant un support de charge (102), qui coopère avec un côté inférieur du dessus de wagon (1) de telle sorte que le dessus de wagon (1) peut être soulevé avec son côté inférieur jusqu'au niveau de la surface de chargement et/ou de déchargement (140) et les supports de charge (102) présentant des éléments de roulement (103) de telle sorte que le dessus de wagon (1) peut coulisser après le soulèvement dans une direction transversale au sens de marche sur les supports de charge (102).

71. Dispositif de chargement et/ou de déchargement selon la revendication 70,
**caractérisé en ce que**
le dispositif de chargement et de déchargement présente un dispositif de positionnement pour le positionnement du wagon dans son sens de marche.

72. Dispositif de chargement et/ou de déchargement selon la revendication 70 ou 71,
**caractérisé en ce que** le dispositif de chargement et de déchargement présente des moyens pour la mise à niveau, en particulier pour la mise à niveau horizontale et/ou la mise à niveau verticale du wagon (1, 40) et/ou du dessus de wagon (1) et/ou du châssis de wagon (40), de sorte que le châssis de wagon (40) et/ou le dessus de wagon (1), et/ou l'ensemble du wagon (1, 40) peuvent être mis à niveau dans toutes les directions, en particulier dans la direction horizontale et/ou verticale dans le sens longitudinal et transversal au sens de marche du wagon (1, 40).

73. Dispositif de chargement et/ou de déchargement selon l'une quelconque ou plusieurs des revendications 70 à 72,
**caractérisé en ce que**
le dispositif de chargement et/ou de déchargement (100) présente une pluralité de dispositifs de levage (101), qui sont disposés le long des voies (43) à l'extérieur à côté des voies ferrées.

74. Dispositif de chargement et/ou de déchargement selon l'une quelconque ou plusieurs des revendications 70 à 73,
**caractérisé en ce que**
les dispositifs de levage (101) sont des dispositifs de levage pneumatiques ou hydrauliques ou mécaniques, en particulier basés sur le principe de clavette.

75. Dispositif de chargement et/ou de déchargement selon l'une quelconque ou plusieurs des revendications 70 à 74,
**caractérisé en ce que**
les éléments de roulement (103) sont des rouleaux ou des éléments à billes.

76. Dispositif de chargement et/ou de déchargement selon l'une quelconque ou plusieurs des revendications 70 ou 75,
**caractérisé en ce que**
la surface de chargement et/ou de déchargement est un quai (140), qui forme avec les supports de charge (102) un plan dans leur position relevée.

77. Dispositif de chargement et/ou de déchargement selon l'une quelconque ou plusieurs des revendications 70 à 76,
**caractérisé en ce que**
les dispositifs de levage (101) sont disposés solidaires du ballast de voie à côté des wagons dans leur position de chargement et de déchargement.

78. Dispositif de chargement et/ou de déchargement selon l'une quelconque ou plusieurs des revendications 70 à 77,
**caractérisé en ce que**
le dispositif de levage (101) est réalisé sous la forme d'une poutre de levage (111), qui s'étend à l'extérieur des voies (43) à proximité de la voie ferrée et repose à proximité du ballast de voie sur une voie de roulement (110) fixée au sol ou s'appuie directement ou indirectement sur cette voie de roulement (110).

79. Dispositif de chargement et/ou de déchargement selon la revendication 78,
**caractérisé en ce que**
la poutre de levage (111) est conçue avec une section pratiquement rectangulaire avec un côté supérieur (112), un côté inférieur (113) et une première extrémité (114) libre et une seconde extrémité (115) libre, des galets porteurs (116) étant disposés dans la zone du côté inférieur (113) de préférence dans la zone des extrémités libres, de sorte que la poutre de levage (111) peut coulisser facilement dans sa direction longitudinale, qui est orientée parallèlement à la direction de la voie, sur la voie de roulement (110).

80. Dispositif de chargement et/ou de déchargement selon la revendication 79,
**caractérisé en ce que**
les extrémités libres (114, 115) sont conçues en formant un angle aigu par rapport à la voie de roulement (110), de sorte que des surfaces de rampe (117) sont formées, lesquelles sont dirigées vers la voie de roulement (110).

81. Dispositif de chargement et/ou de déchargement selon la revendication 80,
**caractérisé en ce que**
des galets porteurs (116) sont disposés dans la zone des surfaces de rampe (117).

82. Dispositif de chargement et/ou de déchargement selon l'une quelconque ou plusieurs des revendications 78 à 81,
**caractérisé en ce que**
pendant l'opération de chargement et/ou de déchargement, la poutre de levage (111) est disposée à peu près au centre par rapport à l'extension longitudinale du dessus de wagon (1) au-dessous du dessus de wagon (1).

83. Dispositif de chargement et/ou de déchargement selon l'une quelconque ou plusieurs des revendications 78 à 82,
**caractérisé en ce que**
un dispositif de positionnement (120) destiné au positionnement du dessus de wagon (1) est présent en même temps que le châssis de wagon (40) en ce qui concerne la poutre de levage (111).

84. Dispositif de chargement et/ou de déchargement selon l'une quelconque ou plusieurs des revendications 78 à 83,
**caractérisé en ce que**
sur le côté supérieur (112) de la poutre de levage (111) sont disposés des éléments de roulement qui correspondent aux éléments de roulement (103) sur le quai (140).

85. Dispositif de chargement et/ou de déchargement selon l'une quelconque ou plusieurs des revendications 83 à 84,
**caractérisé en ce que**
le dispositif de positionnement (120) présente dans le sens longitudinal en alignement avec la poutre de levage (111) à distance des extrémités libres (114, 115) un coulisseau de positionnement/levage (121) qui peut coulisser de façon à pouvoir être entraîné sur des galets porteurs (116) parallèlement au sens de marche du wagon (1, 40) sur la voie de roulement (110).

86. Dispositif de chargement et/ou de déchargement selon la revendication 85,
**caractérisé en ce que**
le coulisseau de positionnement/levage (121) est couplé avec un entraînement linéaire (122), l'entraînement linéaire (122) étant relié par une extrémité au coulisseau de positionnement/levage (121) et étant fixé par l'autre extrémité sur un support de butée (123) solidaire du sol.

87. Dispositif de chargement et/ou de déchargement selon la revendication 86,
**caractérisé en ce que** l'entraînement linéaire est conçu pneumatique, hydraulique, mécanique, électrique ou à électroaimant.

88. Dispositif de chargement et/ou de déchargement selon l'une quelconque ou plusieurs revendications 85 à 87,
**caractérisé en ce que**
le coulisseau de positionnement/levage (121) présente une première extrémité (124) libre qui est associée à l'une des extrémités libres (114, 115) de la poutre de levage (111) et présente une contre-surface de rampe (125) correspondant à la surface de rampe (117).

89. Dispositif de chargement et/ou de déchargement selon l'une quelconque ou plusieurs des revendications 85 à 88,
**caractérisé en ce que**
le coulisseau de positionnement/levage (121) présentent un côté supérieur (126) qui est agencé dans la position de repos à peu près en alignement avec le côté supérieur (112) de la poutre de levage et est disposé par rapport au niveau au-dessous du dessus de wagon (1).

90. Dispositif de chargement et/ou de déchargement selon la revendication 88 ou 89,
**caractérisé en ce que**
dans la zone du côté supérieur (126) est disposé à proximité de l'extrémité (124) libre un élément de crochet d'attache (128) disposé de façon basculante autour d'un axe (127) avec une base de crochet (129) et une saillie de crochet (130), la base de crochet étant réalisée en forme de nervure et étirée en longueur et s'étendant depuis l'axe (127) à peu près sur un tiers du coulisseau de positionnement/levage (121) à partir de la première extrémité (124) libre en direction d'une seconde extrémité (131) libre du coulisseau de positionnement/levage (121), la saillie de crochet (130) s'étendant à partir de la base du crochet (129) côté extrémité légèrement verticalement vers le haut.

91. Dispositif de chargement et/ou de déchargement selon la revendication 90,
**caractérisé en ce que**,
dans la position de repos, l'élément de crochet, d'attache (128) est disposé de telle sorte que la saillie de crochet (130) est disposée sur ou légèrement au-dessous du niveau du côté supérieur (126) du coulisseau de positionnement/levage (121).

92. Dispositif de chargement et/ou de déchargement selon l'une quelconque ou plusieurs des revendications 90 ou 91,
**caractérisé en ce que**
en face de la saillie de crochet (130) est disposé sur la base du crochet (129) un galet de guidage (132) qui coopère avec un support d'arrivée (133) fixé au sol, qui présente une surface de rampe (134).

93. Dispositif de chargement et/ou de déchargement selon la revendication 92,
**caractérisé en ce que**
la surface de rampe (134) du support d'arrivée (133) du galet de guidage (132) de l'élément de crochet d'attache (128) est disposée de telle sorte que, dans une position de repos, la saillie de crochet (130) arrive à peu près au niveau du côté supérieur (126) du coulisseau de positionnement/levage (121).

94. Dispositif de chargement et/ou de déchargement selon l'une quelconque ou plusieurs des revendications 90 ou 93,
**caractérisé en ce que**,
de façon correspondante ou à l'élément de crochet (128) en particulier de son arête supérieure (135) de la base du crochet (129), le châssis de wagon (40) présente un galet porteur (136) correspondant disposé de telle sorte qu'il peut coopérer avec l'arête supérieure (135) de la base de crochet.

95. Dispositif de chargement et/ou de déchargement selon l'une quelconque ou plusieurs des revendications 90 ou 94,
**caractérisé en ce que**
l'élément de crochet d'attache (128) peut être déplacé en même temps que l'axe (127) dans la direction longitudinale du coulisseau de positionnement/levage (121) par rapport à celui-ci et peut être amorti au moyen d'un ressort et/ou d'un dispositif d'amortissement (137), qui est précontraint de façon amortie, par rapport au coulisseau de positionnement/levage (121) en direction de son extrémité (131).

96. Dispositif de chargement et/ou de déchargement selon l'une quelconque ou plusieurs des revendications 70 à 95,
**caractérisé en ce que**
les dispositifs de levage (101, 111) sont des dispositifs à levier ou des dispositifs à ciseaux.

97. Dispositif de chargement et/ou de déchargement selon l'une quelconque ou plusieurs des revendications 70 à 96,
**caractérisé en ce que**
au moins une sélection des éléments de roulement (103) des dispositifs de levage (101, 111) peut être entraînée par moteur.

98. Dispositif de chargement et/ou de déchargement selon la revendication 97,
**caractérisé en ce que**
les éléments de roulement (103) peuvent être entraînés de façon électrique, électromagnétique, hydraulique ou pneumatique.

99. Dispositif de chargement et/ou de déchargement selon l'une quelconque ou plusieurs des revendications 70 à 98,
**caractérisé en ce que**
les éléments de roulement (103) peuvent être entraînés directement ou commandés à partir du quai.

100. Dispositif de chargement et/ou de déchargement selon l'une quelconque ou plusieurs des revendications 70 à 99,
**caractérisé en ce que**
l'énergie d'entraînement est générée de façon centrale pour tous les entraînements du dispositif de chargement et/ou de déchargement (100).

101. Dispositif de chargement et/ou de déchargement selon l'une quelconque ou plusieurs des revendications 70 ou 100,
**caractérisé en ce que**
des dispositifs destinés à l'arrêt du wagon (1, 40) sont présents dans le sens longitudinal du wagon (1, 40) pendant l'opération de chargement et/ou de déchargement.

102. Dispositif de chargement et/ou de déchargement selon la revendication 70,
**caractérisé en ce que**
les dispositifs de levage (201) présentent des raccordements d'alimentation pour l'arrivée d'énergie et/ou des raccordements de signal pour la transmission du signal, s'engagent éventuellement dans le wagon (1, 40) et/ou peuvent être raccordés au moyen de branchements appropriés du wagon (1,40) au wagon (1, 40).

103. Dispositif de chargement et/ou de déchargement selon la revendication 102,
**caractérisé en ce que** les dispositifs de levage (201) sont aménagés de telle sorte que, lorsque la première et la seconde partie de train sont disposées l'une à côté de l'autre, des poutres de levage de dispositifs de levage disposés à proximité peuvent sortir éventuellement sur une voie intermédiaire et les poutres de levage (221) sorties s'engagent les unes dans les autres, afin de former un pont, le dessus du wagon (1) pouvant être transféré du châssis de wagon (40) d'un premier train à un châssis de wagon attribué d'un second train par l'intermédiaire du pont.

104. Dispositif de chargement et/ou de déchargement selon la revendication 103,
**caractérisé en ce que** les poutres de levage (221) horizontales des dispositifs de levage (201) sont aménagées pour un déplacement sensiblement horizontal, lors duquel les dispositifs de levage (201), en particulier les poutres de levage (221), coopèrent avec des surfaces de rampe (217) et/ou des contre-surfaces de wagon et/ou des contre-surfaces de dessus du wagon, afin d'entraîner une course largement faible du dessus de wagon (1), la course étant suffisante pour surmonter des différences de hauteur dépendantes du châssis de wagon et/ou dépendantes du bogie.

105. Dispositif de chargement et/ou de déchargement selon la revendication 103 ou 104,
**caractérisé en ce que** les poutres de levage (221) sont disposées sensiblement horizontalement et transversalement à la direction longitudinale du rail.

106. Dispositif de chargement et/ou de déchargement selon l'une quelconque des revendications 103 à 105,
**caractérisé en ce que**
les poutres de levage (221) peuvent être engagées dans une position de repos, dans laquelle les poutres de levage (221) sont disposées à l'extérieur d'une surface de voie (243) prédéfinie, en particulier à l'extérieur de limites de profil valables pour le trafic de marchandises sur rail et sont aménagées pour être sorties par exemple sur des galets porteurs dans des voies de roulement fixes côté quai jusqu'à ce que des surfaces de rampe (225) réalisées sur le côté avant des poutres de levage (221) s'engagent dans des contre-surfaces (217) attribuées des wagons (1, 40), en particulier des longerons de wagon, le longeron de wagon étant arrêté centré et/ou bloqué de préférence horizontalement, verticalement et/ou dans le sens longitudinal.

107. Dispositif de chargement et/ou de déchargement selon l'une quelconque des revendications 103 à 106,
**caractérisé en ce que**
les poutres de levage (221) peuvent être amenées en prise avec le châssis de wagon (40) de telle sorte qu'une arête supérieure de la poutre de levage (221) est disposée dans un plan de préférence horizontale avec une arête supérieure du longeron du châssis de wagon (40), une surface de chargement et de déchargement étant formée, laquelle est disposée essentiellement horizontalement, de préférence au maximum à la hauteur du même plan.

108. Dispositif de chargement et/ou de déchargement selon l'une quelconque des revendications 103 à 107,
**caractérisé par** un dispositif destiné à former un film support, en particulier un film support fluidique, sur une surface d'appui pour le dessus de wagon (1), la surface d'appui étant réalisée sur le dispositif de chargement et/ou de déchargement et sur le dessus de wagon (1).

109. Dispositif de chargement et/ou de déchargement selon l'une quelconque des revendications 103 à 107,
**caractérisé par** un dispositif pour le réchauffement et/ou le nettoyage d'éléments du dispositif de chargement et/ou de déchargement, dont la surface forme la surface d'appui pour le dessus de wagon (1), en particulier pour le réchauffement et/ou le nettoyage de la surface d'appui conçue sur les poutres de levage (221).
